(19) Europäisches Patentamt
European Patent Office
Office européen des brevets

(11) EP 1 289 366 B1

(12) **EUROPÄISCHE PATENTSCHRIFT**

(45) Veröffentlichungstag und Bekanntmachung des Hinweises auf die Patenterteilung:
**30.06.2004 Patentblatt 2004/27**

(21) Anmeldenummer: **01951466.0**

(22) Anmeldetag: **30.04.2001**

(51) Int Cl.⁷: **A01N 43/54**
// A01N43:54, A01N61:00

(86) Internationale Anmeldenummer:
**PCT/EP2001/004844**

(87) Internationale Veröffentlichungsnummer:
**WO 2001/084931 (15.11.2001 Gazette 2001/46)**

# (54) FUNGIZIDE WIRKSTOFFKOMBINATIONEN

FUNGICIDAL COMBINATIONS OF ACTIVE AGENTS

COMBINAISONS DE PRINCIPES ACTIFS FONGICIDES

(84) Benannte Vertragsstaaten:
**AT BE CH CY DE DK ES FI FR GB GR IE IT LI LU MC NL PT SE TR**

(30) Priorität: **11.05.2000 DE 10022951**
**29.01.2001 DE 10103832**

(43) Veröffentlichungstag der Anmeldung:
**12.03.2003 Patentblatt 2003/11**

(73) Patentinhaber: **Bayer CropScience AG**
**40789 Monheim (DE)**

(72) Erfinder:
- **MAULER-MACHNIK, Astrid**
**42799 Leichlingen (DE)**
- **WACHENDORFF-NEUMANN, Ulrike**
**56566 Neuwied (DE)**
- **GAYER, Herbert**
**40789 Monheim (DE)**

(56) Entgegenhaltungen:
**EP-A- 0 937 050** **WO-A-00/30440**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 1 289 366 B1

Printed by Jouve, 75001 PARIS (FR)

## Beschreibung

Die vorliegende Erfindung betrifft neue Wirkstoffkombinationen, die aus einem bekannten Halogenpyrimidin-Derivat einerseits und weiteren bekannten Wirkstoffen andererseits bestehen und sehr gut zur Bekämpfung von phytopathogenen Pilzen geeignet sind.

Es ist bereits bekannt, dass (2E/Z)-2-(2-{[6-(3-Chloro-2-methylphenoxy)-5-fluoro-4-pyrimidinyl]oxy}phenyl)-2-(methoxyimino)-N-methylethanamid fungizide Eigenschaften besitzt (vgl. EP-A1-937 050). Die Wirksamkeit dieses Stoffes ist gut, lässt aber bei niedrigen Aufwandmengen in manchen Fällen zu wünschen übrig.

Ferner ist schon bekannt, daß zahlreiche Azol-Derivate, aromatische CarbonsäureDerivate, Morpholin-Verbindungen und andere Heterocyclen zur Bekämpfung von Pilzen eingesetzt werden können (vgl. K.H. Büchel "Pflanzenschutz und Schädlingsbekämpfung" Seiten 87, 136, 140, 141 und 146 bis 153, Georg Thieme Verlag, Stuttgart 1977). Die Wirkung der betreffenden Stoffe ist aber bei niedrigen Aufwandmengen nicht immer befriedigend.

Es wurde nun gefunden, daß die neuen Wirkstoffkombinationen aus Verbindungen der Formel (I)

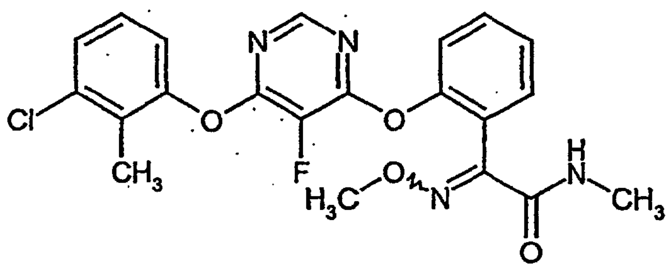

(I)

und

(1) dem 8-t-Butyl-2-(N-ethyl-N-n-propyl-amino)-methyl-1,4-dioxaspiro[5,4]-decan (Referenz: EP-A-0 281 842) der Formel

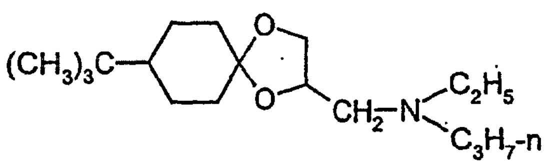

(II)

(Spiroxamine)

und/oder

(2) dem 5,7-Dichlor-4-(4-fluorphenoxy)-quinolin (Referenz: EP-A-326 330) der Formel

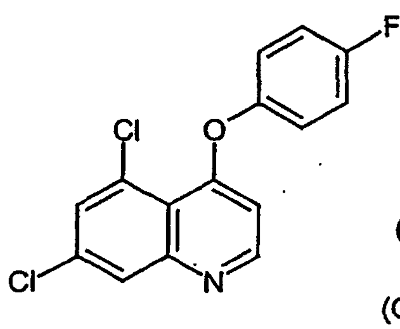

(III)

(Quinoxyfen)

und/oder

(3) dem Triazol-Derivat (Referenz: EP-A-0 040 345) der Formel

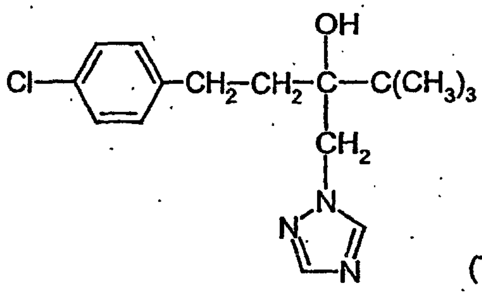

(IV)

(Tebuconazole)

und/oder

(4) dem 1-[3-[4-(1,1-Dimethylethyl)phenyl]-2-methylpropyl]piperidin (Referenz: DE-A-2 752 153) der Formel

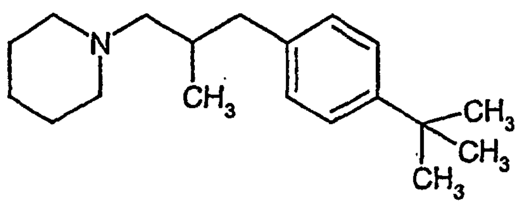

(V)

(Fenpropidin)

und/oder

(5) dem (+-)-cis-4-[3-[4-(1,1-Dimethylethyl)phenyl]-2-methylpropyl]-2,6-dimethylmorpholin (Referenz: DE-A-2 656 747) der Formel

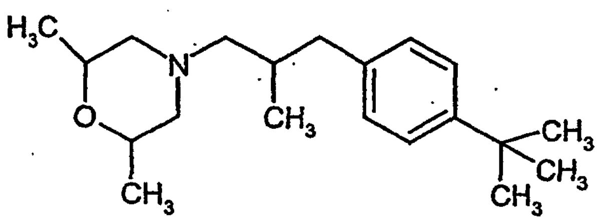

(VI)

(Fenpropimorph)

und/oder

(6) dem N-(1-Cyano-1,2-dimethylpropyl)-2-(2,4-dichlorphenoxy)-propanamid (Referenz: EP-A-262 393) der Formel

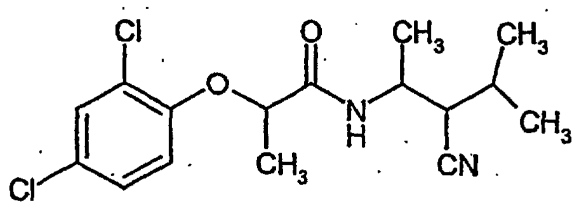

(VII)

(Fenoxanil)

und/oder

(7) dem Tetrachlor-isophthalo-dinitril (Referenz: US 3 290 353) der Formel

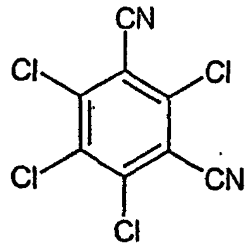

(VIII)

(Chlorothalonil)

und/oder

(8) dem 1-(4-Chlor-phenoxy)-3,3-dimethyl-1-(1,2,4-triazol-1-yl)-butan-2-on (Referenz: DE-A-2 201 063) der Formel

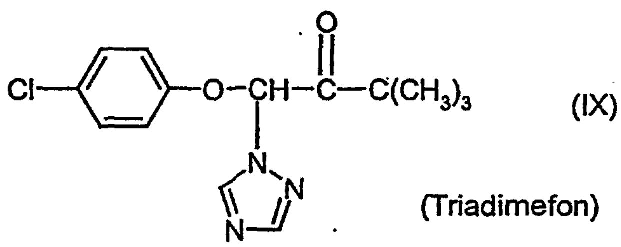

(IX)

(Triadimefon)

und/oder

(9) dem 1-(4-Chlor-phenoxy)-3,3-dimethyl-1-(1,2,4-triazol-1-yl)-butan-2-ol (Referenz: DE-A-23 24 010) der Formel

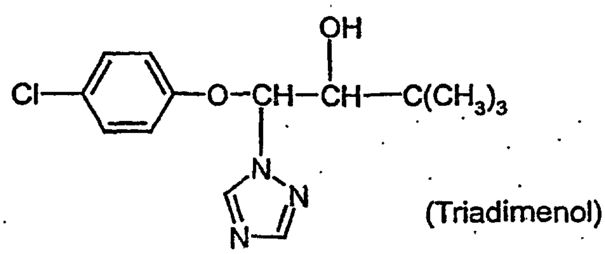

(X)

(Triadimenol)

und/oder

(10) dem Triazol (Referenz: EP-A-196 038) der Formel

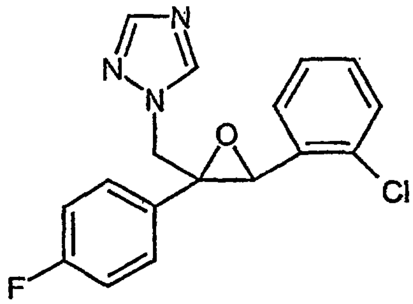

(XI)

(Epoxiconazole)

und/oder

(11) dem Triazol (Referenz: EP-A-329 397) der Formel

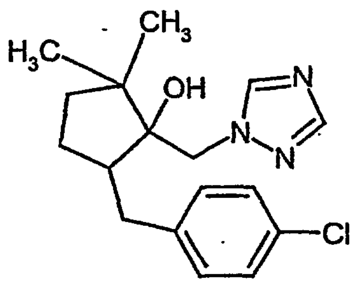

(XII)

(Metconazole)

und/oder

(12) dem Triazol (Referenz: EP-A-183 458) der Formel

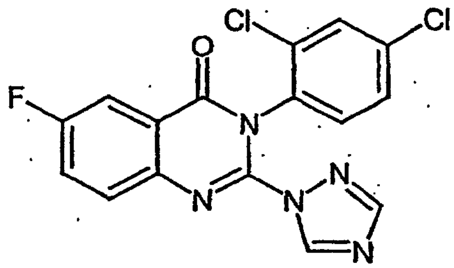

(XIII)

(Fluquinconazole)

. und/oder

(13) dem Triazol (Referenz: DE-A-3 406 993) der Formel

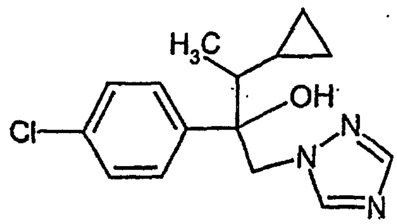

(XIV)

(Cyproconazole)

und/oder

(14) dem Triazol (Referenz: Pesticide Manual, 9th. Ed. (1991), Seite 654) der Formel

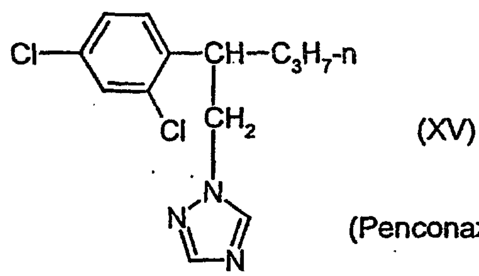

(XV)

(Penconazole)

und/oder

(15) der Verbindung (Referenz: EP-A-253 213) der Formel

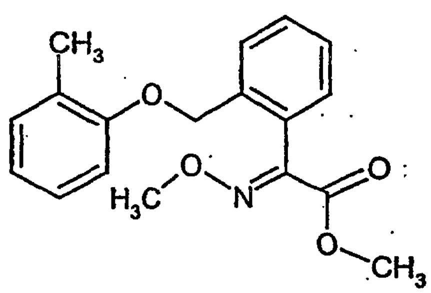

(XVI)

(Kresoxim-methyl)

und/oder

(16) der Verbindung (Referenz: EP-A-0 382 375) der Formel

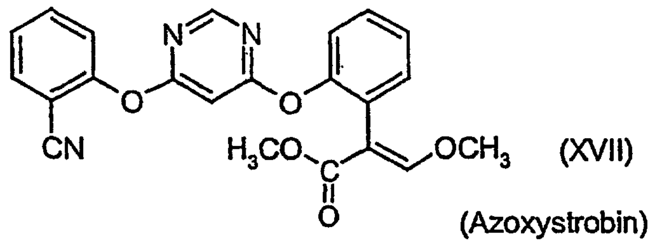

(XVII)

(Azoxystrobin)

(17) der Verbindung (Referenz: EP-A-0 310 550) der Formel

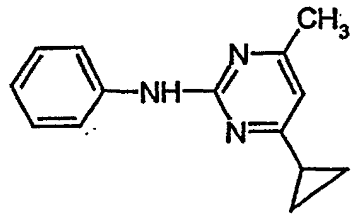

(XVIII)

(Cyprodinil)

und/oder

(18) N,N'''-(Iminodi-8,1-octanediyl)bis-guanidine triacetate (Referenz: EP-A-155 509) der Formel

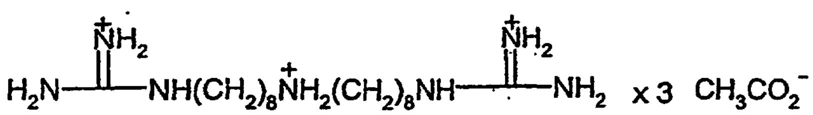

(XIX)

(Iminoctadine triacetat)

und/oder

(19) dem Triazol (Referenz: EP-A-068 813) der Formel

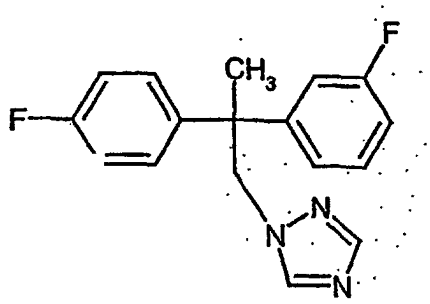

(XX)

(Flusilazole)

und/oder

(20) dem Imidazol-Derivat (Referenz: DE-A-2 429 523) der Formel

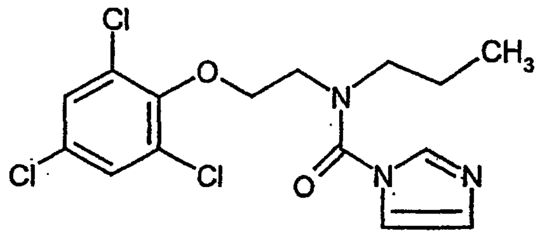

(XXI)

(Prochloraz)

und/oder

(21) dem Triazol (Referenz: DE-A-2 551 560) der Formel

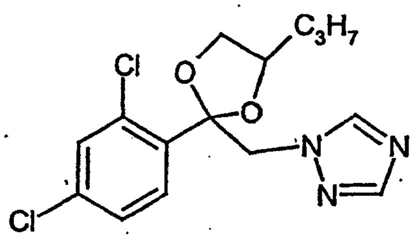

(XXII)

(Propiconazole)

und/oder

(22) dem 1-(4-Phenyl-phenoxy)-3,3-dimethyl-1-(1,2,4-triazol-1-yl)-butan-2-ol (Referenz: DE-A-2 324 010) der Formel

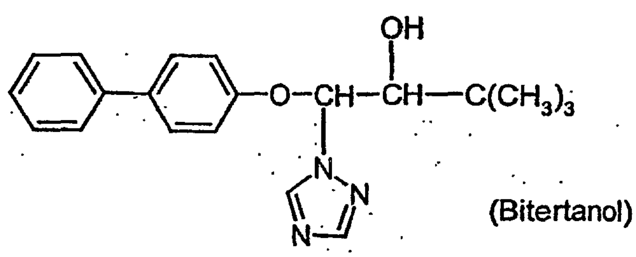

(XXIII)

(Bitertanol)

und/oder

(23) dem 1-[(6-Chlor-3-pyridinyl)-methyl]-N-nitro-2-imidazolidinimin (Referenz: Pesticide Manual, 9th. Ed. (1991), Seite 491) der Formel

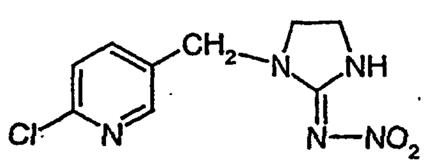

(XXIV)

(Imidacloprid)

und/oder

(24) dem Anilin-Derivat (Referenz: DE-A-119 34 98) der Formel

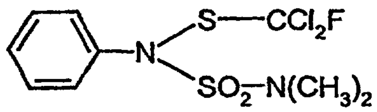

(XXV)

(Dichlofluanid)

und/oder

(25) dem Anilin-Derivat (Referenz: DE-A-119 34 98) der Formel

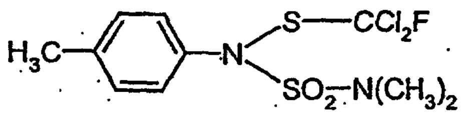

(XXVI)

(Tolylfluanid)

und/oder

(26) dem Anilin-Derivat (Referenz: Pesticide Manual, 9th. Ed. (1991), Seite 554) der Formel

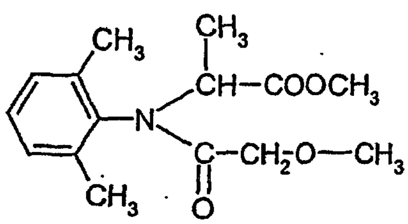

(XXVII)

(Metalaxyl)

und/oder

(27) dem 4-(2,3-Dichlorphenyl)-1H-pyrrole-3-carbonitril (Referenz: EP-A-236 272) der Formel

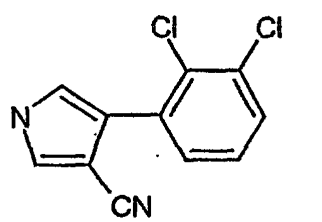

(XXVIII)

(Fenpiclonil)

und/oder

(28) dem Triazol-Derivat (Referenz: EP-A-112 284) der Formel

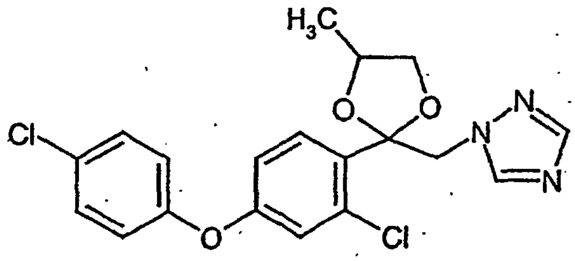

(XXIX)

(Difenconazole)

und/oder

(29) dem Pyrrol-Derivat (Referenz: EP-A-206 999) der Formel

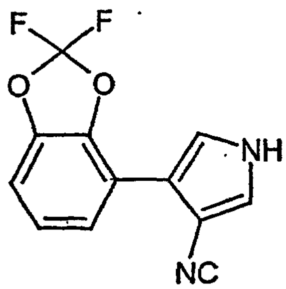

(XXX)

(Fludioxonil)

und/oder

(30) dem Benzimidazol-Derivat (Referenz: US-3 010 968) der Formel

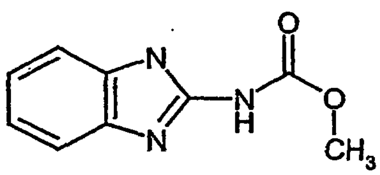

(XXXI)

(Carbendazim)

und/oder

(31) der Verbindung (Referenz: CASRN (3878-19-1)) der Formel

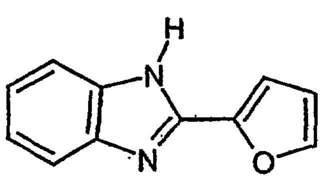

(XXXII)

(Fuberidazole)

und/oder

(32) dem Imidazol-Derivat (Referenz: DB-A-2 063 857) der Formel

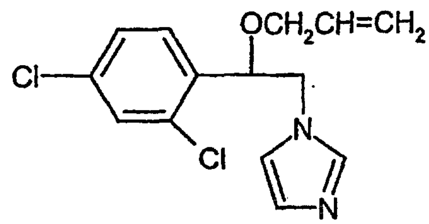

(XXXIII)

(Enilconazole)

und/oder

(33) dem Imidazol-Derivat der Formel

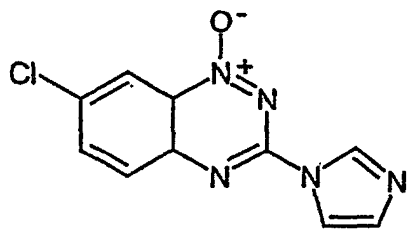

(XXXIV)

(Triazoxide)

(34) der Verbindung (Referenz: DE-A-2 709 264) der Formel

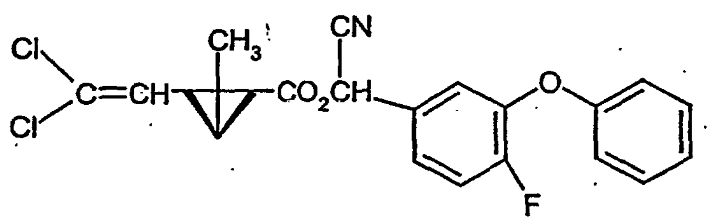

(XXXV)

(Cyfluthrin)

und/oder

(35) einem Guanidin-Derivat (Referenz: Pesticide Manual, 9th. Ed. (1991), Seite 461) der Formel

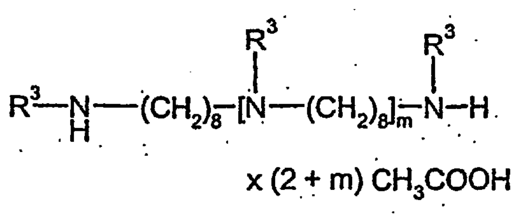

(XXXVI)

(Guazatine)

in welcher

m für ganze Zahlen von 0 bis 5 steht und

$R^3$ für Wasserstoff (17 bis 23 %) oder den Rest der Formel

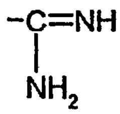

(77 bis 83 %)

steht,
und/oder

(36) dem Benzothiadiazol-Derivat (Referenz: EP-A-0 313 512) der Formel

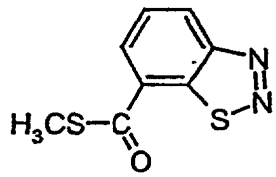

(XXXVII)

(Acibenzolar-S-methyl)

und/oder

(37) dem Harnstoff-Derivat (Referenz: DE-A-2 732 257) der Formel

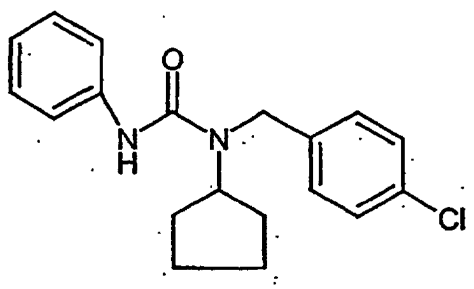

(XXXVIII)

(Pencycuron)

und/oder

(38) dem Benzamid-Derivat (Referenz: DE-A 2 731 522) der Formel

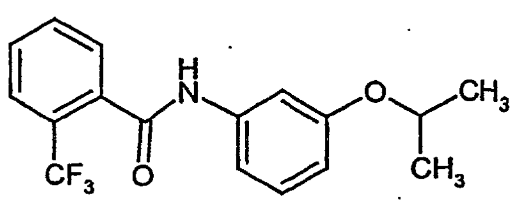

(XXXIX)

(Flutolanil)

und/oder

(39) dem Benzothiazol-Derivat (Referenz: DE-A-2 250 077) der Formel

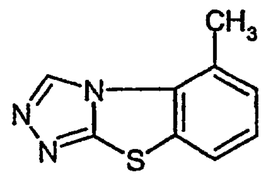

(XL)

(Tricyclazole)

und/oder

(40) dem Zink-propylen-1,2-bis-(dithiocarbamidat) (Referenz: Pesticide Manual, 9th. Ed. (1991), Seite 726) der Formel

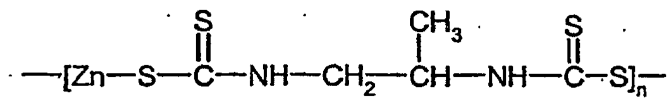

(XLI)

n > = 1

(Propineb)

und/oder

(41) der Verbindung (Referenz: DE-A-2 012 656) der Formel

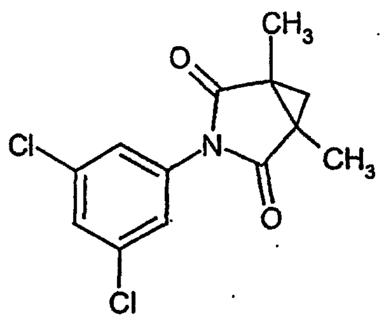

(XLII)

(Procymidone)

und/oder

(42) einem Thiocarbamat (Referenz: Pesticide Manual, 9th. Ed. (1991)) der Formel

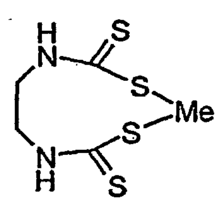

(XLIII)

(Mancozeb)

Me = Gemisch aus Zn und Mn

und/oder

(43) dem Phthalimid-Derivat (Referenz: Pesticide Manual, 9th. Ed. (1991), Seite 431) der Formel

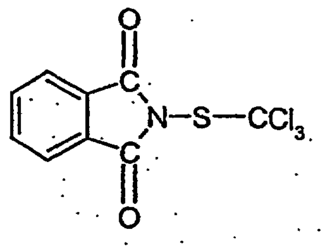

(XLIV)

(Folpet)

und/oder

(44) dem Morpholin-Derivat (Referenz: EP-A-0 219 756) der Formel

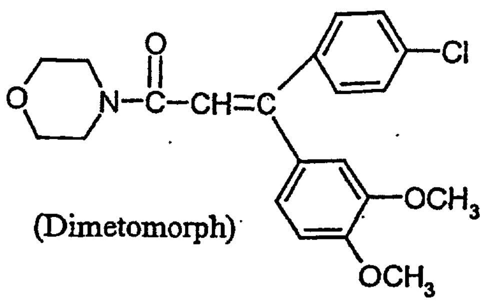

(Dimetomorph)

(XLV)

und/oder

(45) dem Cyanoxim-Derivat (Referenz: Pesticide Manual, 9th. Ed. (1991), Seite 206) der Formel

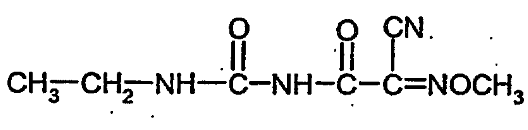

(XLVI)

(Cymoxanil)

und/oder

(46) der Phosphor-Verbindung (Referenz: Pesticide Manual, 9th. Ed. (1991), Seite 443) der Formel

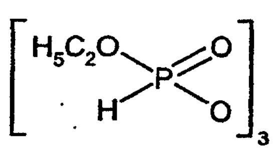

(XLVII)

(Fosetyl-Al)

und/oder

(47) dem Oxazolidindion (Referenz: EP-A-0 393 911) der Formel

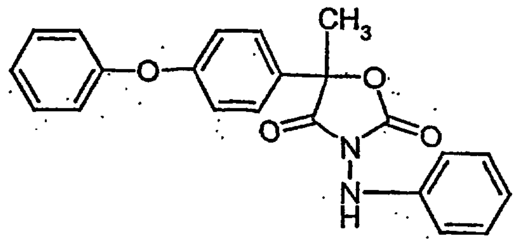

(XLVIII)

(Famoxadone)

und/oder

(48) dem Pyrimidin-Derivat (Referenz: EP-A-0 270 111) der Formel

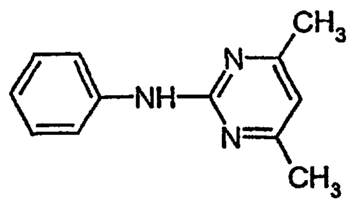

(XLIX)

(Pyrimethanil)

und/oder

(49) dem Pyrimidin-Derivat (Referenz: EP-A-0 270 111) der Formel

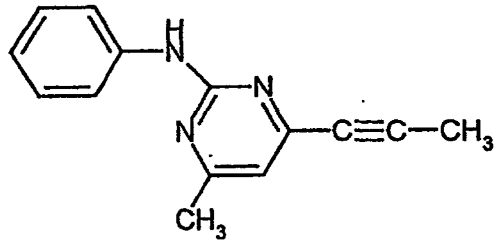

(L)

(Mepanipyrim)

und/oder

(50) der Verbindung (Referenz: EP-A-0 472 996) der Formel

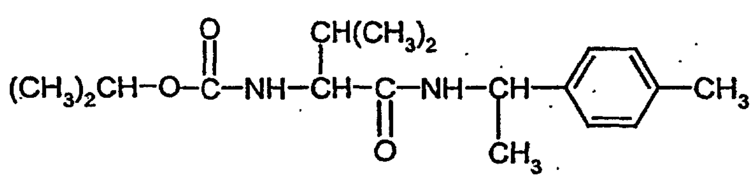

(LI)

(Iprovalicarb)

und/oder

(51) dem Anilin-Derivat (Referenz: EP-A-0 339 418 ) der Formel

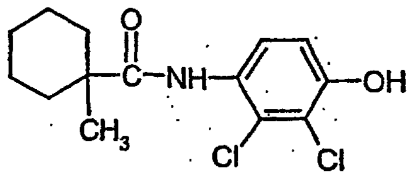

(LII)

(Fenhexamid)

und/oder

(52) N-[1-(4-Chlor-phenyl)-ethyl]-2,2-dichlor-1-ethyl-3-methyl-cyclopropan-carbonsäureamid (Referenz: EP-A-0 341475) der Formel

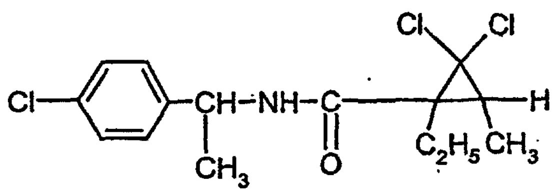

(LIII)

(Carpropamid)

und/oder

(53) dem Pyridinamin (Referenz: EP-A-0 031 257) der Formel

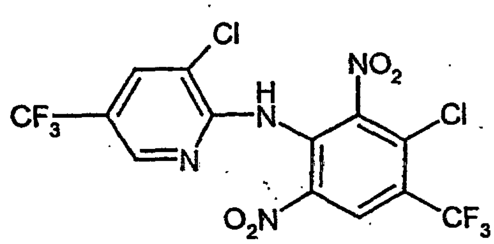

(LIV)

(Fluazinam)

und/oder

(54) dem Dicarboxim-Derivat (Referenz: US-2 553 770) der Formel

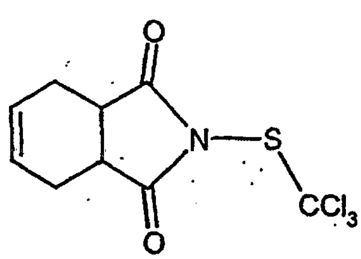

(LV)

(Captan)

und/oder

(55) der Verbindung (Referenz: DE-A-1 100 372) der Formel

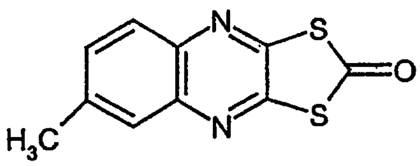

(LVI)

(Chinomethionat)

und/oder

(56) der Verbindung (Referenz: EP-A-0 629 616) der Formel

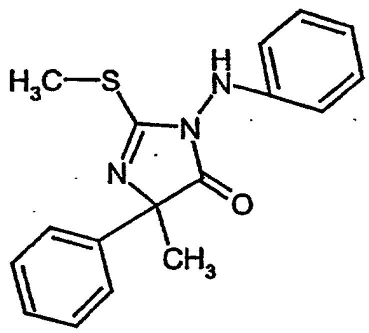

(LVII)

(Fenamidone)

und/oder

(57) der Verbindung (Referenz: EP-A-376 279) der Formel

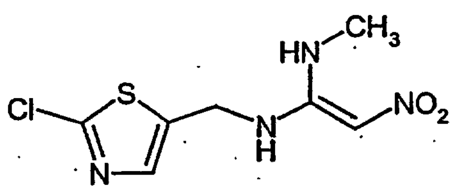

(LVIII)

(Chlothianidin)

und/oder

(58) der Verbindung (Referenz: EP-A-235 725) der Formel

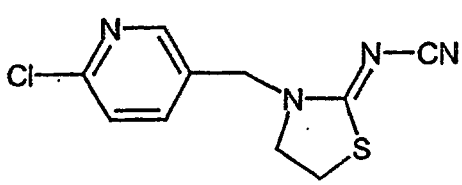

(LIX)

(Thiacloprid)

und/oder

(59) der Verbindung (Referenz: EP-A-580 553) der Formel

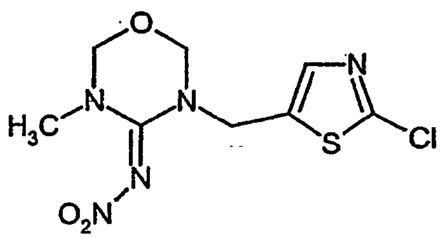

(LXI)

(Thiamethoxam)

und/oder

(60) der Verbindung (Referenz: WO-A-91-4965) der Formel

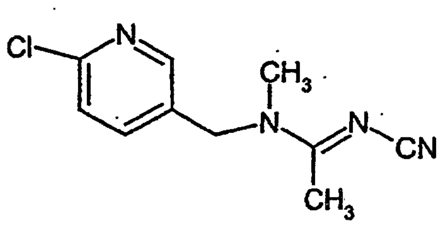

(LXI)

(Acetamiprid)

und/oder

(61) der Verbindung (Referenz: EP-A-326 330) der Formel

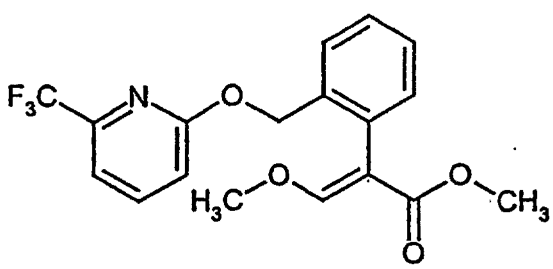

(LXII)

(Picoxystrobin)

und/oder

(62) Schwefel (LXIII)
und/oder

(63) Kupferoxychlorid (LXIV)
und/oder

(64) der Verbindung (Referenz: DE-A-2 149 923) der Formel

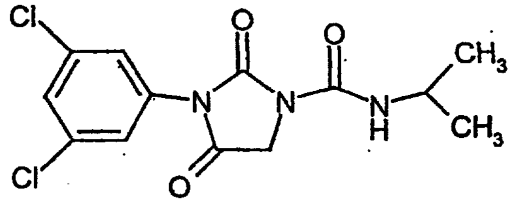

(LXV)

(Iprodione)

und/oder

(65) der Verbindung (Referenz: DE-A-2 207 576) der Formel

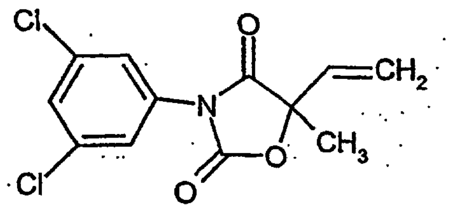

(LXVI)

(Vinclozolin)

und/oder

(66) der Verbindung (Referenz: JP-A-575 584) der Formel

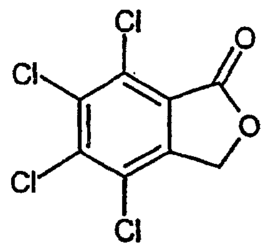

(LXVII)

(Phtalid)

und/oder

(67) der Verbindung (Referenz: DE-A-2 300 299) der Formel

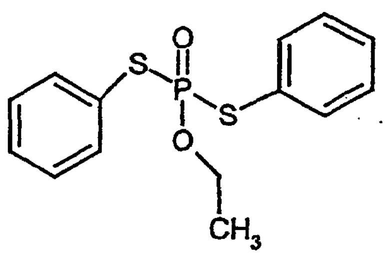

(LXVIII)

(Edifenphos)

und/oder

(68) der Verbindung (Referenz:US-3 917 838) der Formel

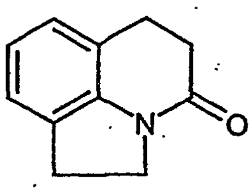

(LXIX)

(Pyroquilon)

und/oder

(69) dem Hydroxyethyl-triazol-Derivat (Referenz: WO-A-96-16048) der Formel

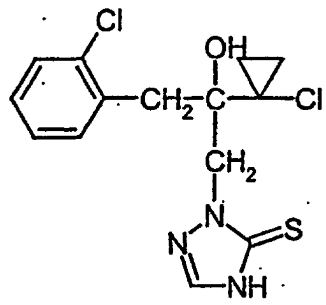

(LXX)

und/oder

(70) dem Halogen-benzimidazol (Referenz: WO-A-97-06171) der Formel

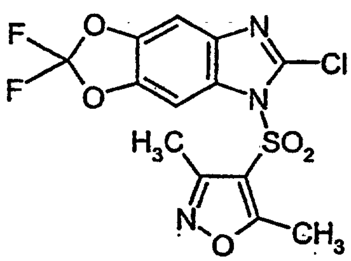

(LXXI)

und/oder

(71) der Verbindung (Referenz: DE-A-19 602 095) der Formel

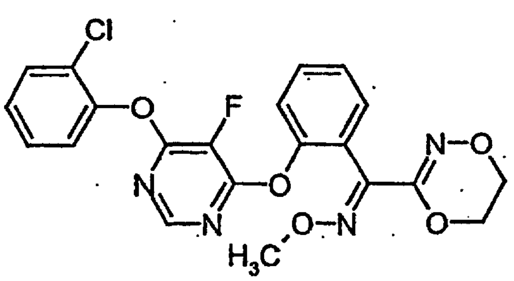

(LXXII)

und/oder

(72) dem Benzamid-Derivat (Referenz: EP-A-0 600 629) der Formel

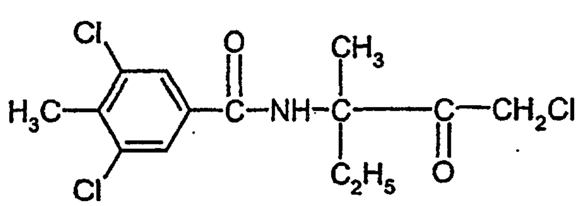

(LXXIII)

(Zoxamide)

und/oder

(73) der Verbindung (Referenz: EP-A-298 196) der Formel

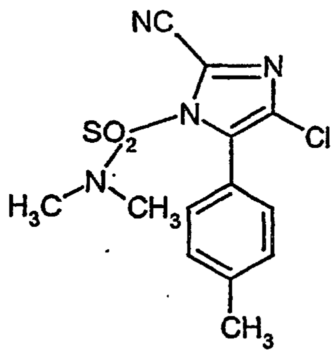

(LXXIV)

(Cyamidazosulfamid)

und/oder

(74 ) der Verbindung (Referenz: WO-A-96-18631) der Formel

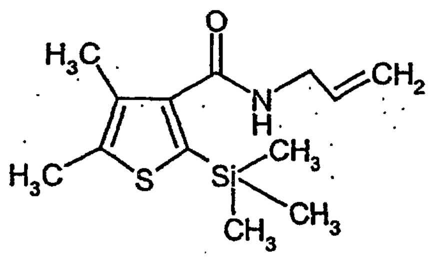

(LXXV)

(Silthiofam)

(75) der Verbindung (Referenz: EP-A-460 575) der Formel

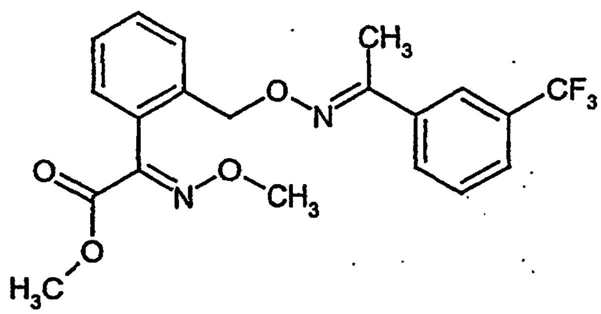

(LXXVI)

(Trifloxystrobin)

und/oder

(76) N-Methyl-2-(methoxyimino)-2-[2-([1-(3-tri-fluoro-methyl-phenyl)ethoxy]-iminomethyl)phenyl]acetamid (Referenz: EP-A-596 254) der Formel

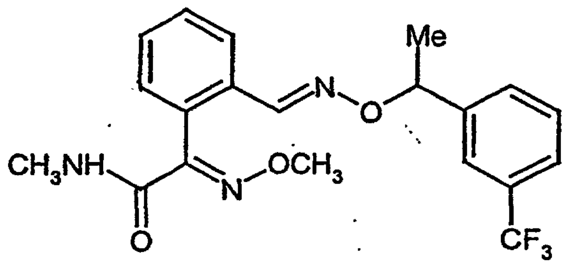

(LXXVII)

und/oder

(77) 2-[2-([2-Phenyl-2-methoxyimino-1-methylethyl]-imino-oxymethyl)phenyl]-2-methoxyimino-N-methylacetamid (Referenz: WO-A-95-21154) der Formel

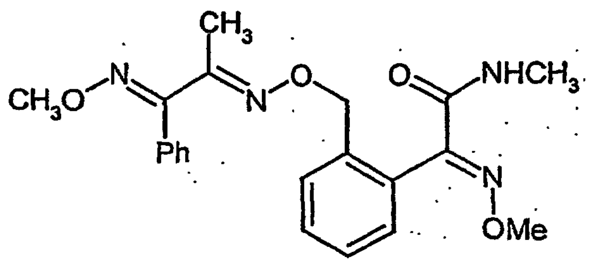

(LXXIII)

und/oder

(78) 2-[2-([2-(4-Fluorophenyl)-2-methoxyimino-1-methylethyl]iminooxymethyl)-phenyl]-2-methoxyimino-N-methyl-acetamid (Referenz: WO-A-95-21154) der Formel

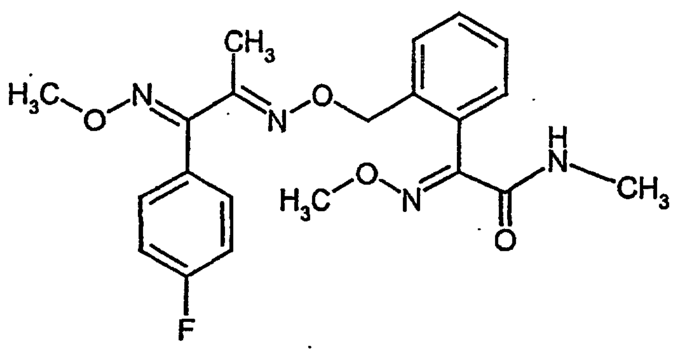

(LXXIX)

und/oder

(79) 2-[4-Methoxy-3-(1-methylethoxy)-1,4-diazabuta-1,3-dienyl-oxymethyl]-phenyl-2-methoxyimino-N-methyl-acetamid (Referenz: DE-A-19 528 651) der Formel

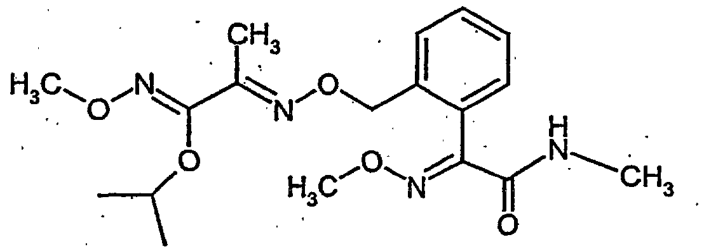

(LXXX)

und/oder

(80) Methyl N-(2-[1-(4-chlorophenyl)pyrazol-3-yloxymethyl]phenyl)-N-methoxycarbamat (Referenz: DE-A-4 423 612) der Formel

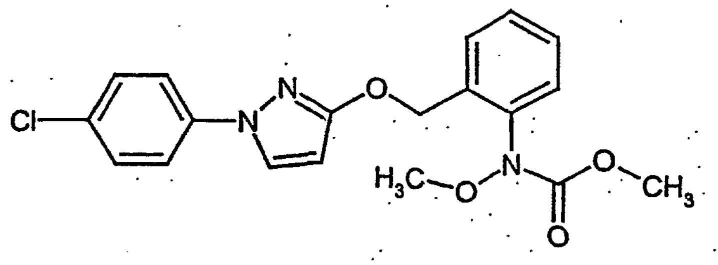

(LXXXI)

und/oder

(81) 2,4-Dihydro-5-methoxy-2-methyl-4-[2-([([1-(3-tri-fluoro-methylphenyl)ethylidene]amino)oxy]methyl)phenyl]-3H-1,2,4-triazol-3-one (Referenz: WO-A-98-23155) der Formel

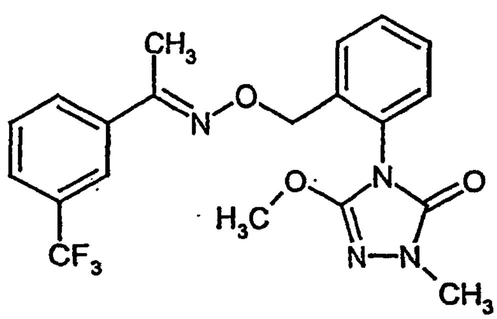

(LXXXII)

und/oder

(82) die Verbindung der Formel (Referenz: US 3 631 176)

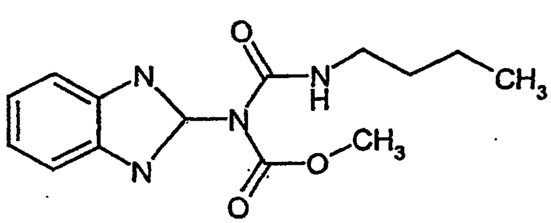

(LXXXIII)

(Benomyl)

sehr gute fungizide Eigenschaften besitzen.

Überraschenderweise ist die fungizide Wirkung der erfindungsgemäßen Wirkstoffkombinationen wesentlich höher als die Summe der Wirkungen der einzelnen Wirkstoffe. Es liegt also ein nicht vorhersehbarer, echter synergistischer Effekt vor und nicht nur eine Wirkungsergänzung.

Aus der Strukturformel für den Wirkstoff der Formel (I) ist ersichtlich, dass die Verbindung als E- oder Z-Isomer vorliegen kann. Das Produkt kann daher als Gemisch von verschiedenen Isomeren oder auch in Form eines einzigen Isomeren vorliegen. Bevorzugt sind Verbindungen der Formel (I), in denen die Verbindung der Formel (I) als E-Isomer vorliegt.

Der Wirkstoff der Formel (I) ist bekannt (vergl. z. B. DE-A 19 646 407).

Die in den erfindungsgemäßen Kombinationen außerdem vorhandenen Wirkstoffe sind ebenfalls bekannt (vgl. Referenzen).

Die erfindungsgemäßen Wirkstoffkombinationen enthalten neben einem Wirkstoff der Formel (I) mindestens einen Wirkstoff von den Verbindungen der Gruppen (1) bis (82). Sie können darüberhinaus auch weitere fungizid wirksame Zumischkomponenten enthalten.

Wenn die Wirkstoffe in den erfindungsgemäßen Wirkstoffkombinationen in bestimmten Gewichtsverhältnissen vorhanden sind, zeigt sich der synergistische Effekt besonders deutlich. Jedoch können die Gewichtsverhältnisse der Wirkstoffe in den Wirkstoffkombinationen in einem relativ großen Bereich variiert werden. Im allgemeinen enthalten die erfindungsgemäßen Kombinationen den Wirkstoff der Formel (I) und den Mischpartner in den in der nachfolgenden Tabelle angegebenen bevorzugten und besonders bevorzugten Mischungsverhältnissen:

* die Mischungsverhältnisse basieren auf Gewichtsverhältnissen. Das Verhältnis ist zu verstehen als Wirkstoff der Formel I: Mischpartner

| **Mischpartner** | **bevorzugtes Mischungs-verhältnis*** | **besonders bevorzugtes Mischungs- verhältnis*** |
|---|---|---|
| Spiroxamine | 10:1 bis 1:20 | 5:1 bis 1:10 |
| Quinoxyfen | 10:1 bis 1:20 | 5:1 bis 1:10 |
| Tebuconazole | 10:1 bis 1:10 | 5:1 bis 1:5 |
| Fenpropidin | 10:1 bis 1:20 | 5:1 bis 1:10 |
| Fenpropimorph | 10:1 bis 1:20 | 5:1 bis 1:10 |
| N-(1-Cyano-1,2-dimethylpropyl)-2-(2,4-dichlorophenoxy) propionamid (R,S)-und (R,R)- und (S, R)- und (S,S) | 10:1 bis 1:10 | 5:1 bis 1:5 |
| Chlorothalonil | 1:1 bis 1:50 | 1:5 bis 1:20 |
| Triadimefon | 10:1 bis 1:10 | 5:1 bis 1:5 |
| Triadimenol | 10:1 bis 1:10 | 5:1 bis 1:5 |
| Epoxiconazole | 10:1 bis 1:10 | 5:1 bis 1:5 |
| Metconazole | 10:1 bis 1:10 | 5:1 bis 1:5 |
| Fluquinconazole | 10:1 bis 1:10 | 5:1 bis 1:5 |
| Cyproconazole | 10:1 bis 1:10 | 5:1 bis 1:5 |
| Penconazole | 10:1 bis 1:10 | 5:1 bis 1:5 |
| Kresoximmethyl | 10:1 bis 1:10 | 5:1 bis 1:5 |
| Azoxystrobin | 10:1 bis 1:10 | 5:1 bis 1:5 |
| Cyprodinil | 5:1 bis 1:20 | 1:1 bis, 1:10 |
| Iminoctadine triacetat | 10:1 bis 1:10 | 5:1 bis 1:5 |
| Flusilazole | 10:1 bis 1:10 | 5:1 bis 1:5 |
| Prochloraz | 10:1 bis 1:10 | 5:1 bis 1:5 |

(fortgesetzt)

| Mischpartner | bevorzugtes Mischungs- verhältnis* | besonders bevorzugtes Mischungs- verhältnis* |
|---|---|---|
| Propiconazole | 10:1 bis 1:10 | 5:1 bis 1:5 |
| Bitertanol | 10:1 bis 1:10 | 5:1 bis 1:5 |
| Imidacloprid | 20:1 bis 1:20 | 10:1 bis 1:10 |
| Dichlofluanid | 1:1 bis 1:50 | 1:1 bis 1:20 |
| Tolylfluanid | 1:1 bis 1:50 | 1:1 bis 1:20 |
| Metalaxyl | 10:1 bis 1:10 | 5:1 bis 1:5 |
| Fenpiclonil | 10:1 bis 1:10 | 5:1 bis 1:5 |
| Difenoconazole | 10:1 bis 1:10 | 5:1 bis 1:5 |
| Fludioxonil | 10:1 bis 1:10 | 5:1 bis 1:5 |
| Carbendazim | 10:1 bis 1:10 | 5:1 bis 1:5 |
| Fuberidazole | 20:1 bis 1:10 | 10:1 bis 1:5 |
| Enilconazole | 20:1 bis 1:10 | 10:1 bis 1:5 |
| Triazoxide | 20:1 bis 1:10 | 10:1 bis 1:5 |
| Cyfluthrin | 20:1 bis 1:20 | 10:1 bis 1:10 |
| Guazatine | 10:1 bis 1:10 | 5:1 bis 1:5 |
| Acibenzolar-S-methyl | 50:1 bis 1:50 | 20:1 bis 1:10 |
| Pencycuron | 10:1 bis 1:10 | 5:1 bis 1:5 |
| Flutolanil | 10:1 bis 1:10 | 5:1 bis 1:5 |
| Tricyclazole | 10:1 bis 1:10 | 5:1 bis 1:5 |
| Propineb | 1:1 bis 1:50 | 1:5 bis 1:20 |
| Procymidone | 10:1 bis 1:10 | 5:1 bis 1:5 |
| Mancozeb | 1:1 bis 1:50 | 1:5 bis 1:20 |
| Folpet | 1:1 bis 1:50 | 1:5 bis 1:20 |
| Dimetomorph | 10:1 bis 1:10 | 5:1 bis 1:5 |
| Cymoxanil | 10:1 bis 1:10 | 5:1 bis 1:5 |
| Fosetyl-Al | 10:1 bis 1:50 | 1:1 bis 1:10 |
| Famoxadone | 10:1 bis 1:10 | 5:1 bis 1:5 |
| Pyrimethanil | 5:1 bis 1:20 | 1:1 bis 1:10 |
| Mepanipyrim | 5:1 bis 1:20 | 1:1 bis 1:10 |
| Iprovalicarb | 10:1 bis 1:10 | 5:1 bis 1:5 |
| Fenhexamid | 10:1 bis 1:10 | 5:1 bis 1:5 |
| Carpropamid | 10:1 bis 1:10 | 5:1 bis 1:5 |
| Fluazinam | 10:1 bis 1:10 | 5:1 bis 1:5 |
| Captan | 5:1 bis 1:50 | 1:1 bis 1:20 |
| Chinomethionat | 5:1 bis 1:50 | 1:1 bis 1:20 |
| Fenamidone | 10:1 bis 1:10 | 5:1 bis 1:5 |
| Clothianidin | 20:1 bis 1:20 | 10:1 bis 1:10 |

(fortgesetzt)

| Mischpartner | bevorzugtes Mischungs- verhältnis* | besonders bevorzugtes Mischungs- verhältnis* |
|---|---|---|
| Thiacloprid | 20:1 bis 1:20 | 10:1 bis 1:10 |
| Thiamethoxan | 20:1 bis 1:20 | 10:1 bis 1:10 |
| Acetamiprid | 20:1 bis 1:20 | 10:1 bis 1:10 |
| Picoxystrobin | 10:1 bis 1:10 | 5:1 bis 1:5 |
| Schwefel | 20:1 bis 1:20 | 10:1 bis 1:10 |
| Kupfer | 20:1 bis 1:20 | 10:1 bis 1:10 |
| Iprodione | 10:1 bis 1:10 | 5:1 bis 1:5 |
| Vinclozolin | 10:1 bis 1:10 | 5:1 bis 1:5 |
| Phtalid | 10:1 bis 1:10 | 5:1 bis 1:5 |
| Edifenphos | 10:1 bis 1:10 | 5:1 bis 1:5 |
| Pyroquilon | 10:1 bis 1:10 | 5:1 bis 1:5 |
| 2-(1-Chlor-cyclopropyl)-1-(2-chlorphenyl)-3-(5-mercapto-1,2,4-triazol-1-yl)-propan-2-ol | 20:1 bis 1:5 | 20:1 bis 1:5 |
| 1-(3,5-Dimethylisoxazol-4-sulfonyl)-2-chlor-6,6-difluor-[1,3]-dioxolo-[4,5f]benzimidazol | 50:1 bis 1:10 | 20:1 bis 1:5 |
| 3-{1-[4-<2-Chlorphenoxy>-5-fluorpyrimid-6-yloxy)-phenyl]-1-(methoximino)-methyl}-5,6-dihydro-1,4,2-dioxazin | 10:1 bis 1:10 | 5:1 bis 1:5 |
| Zoxamide | 50:1 bis 1:10 | 20:1 bis 1:5 |
| Cyamidazosulfamid | 20:1 bis 1:5 | 20:1 bis 1:5 |
| Silthiopham | 20:1 bis 1:10 | 20:1 bis 1:5 |
| Trifloxystrobin | 10:1 bis 1:10 | 5:1 bis 1:5 |
| N-Methyl-2-(methoxyimino)-2-[2-([1-(3-trifluoromethylphenyl)-ethoxy]-iminomethyl)-phenyl]-acetamid | 10:1 bis 1:10 | 5:1 bis 1:5 |
| 2-[2-([2-Phenyl-2-methoxyimino-1-methylethyl]-iminooxymethyl) phenyl]-2-methoxyimino-N-methylacetamid | 10:1 bis 1:10 | 5:1 bis 1:5 |
| 2-[2-([2-(4-Fluorophenyl)-2-methoxyimino-1-methylethyl] iminooxymethyl)phenyl]-2-methoxyimino-N-methylacetamid | 10:1 bis 1:10 | 5:1 bis 1:5 |
| 2-[4-Methoxy-3-(1-methylethoxy)-1,4-diazabuta-1,3-dienyloxymethyl] phenyl-2-methoximino-N-methylacetamid | 10:1 bis 1:10 | 5:1 bis 1:5 |

(fortgesetzt)

| Mischpartner | bevorzugtes Mischungs- verhältnis* | besonders bevorzugtes Mischungs- verhältnis* |
|---|---|---|
| Methyl N-(2-[1-(4-chlorophenyl) pyrazol-3-yloxy-methyl]phenyl)-N-methoxycarbamat | 10:1 bis 1:10 | 5:1 bis 1:5 |
| 2,4-Dihydro-5-methoxy-2-methyl-4-[2-([([1-(3-trifluoromethyl-phenyl)-ethylidene]-amino)-oxy]-methyl)phenyl]-3H-1,2,4-triazol-3-one | 10:1 bis 1:10 | 5:1 bis 1:5 |
| Benomyl | 10:1 bis 1:10 | 5:1 bis 1:5 |

Die erfindungsgemäßen Wirkstoffkombinationen besitzen sehr gute fungizide Eigenschaften und lassen sich zur Bekämpfung von phytopathogenen Pilzen, wie Plasmodiophoromycetes, Oomycetes, Chytridiomycetes, Zygomycetes, Ascomycetes, Basidiomycetes, Deuteromycetes usw. einsetzen.

Die erfindungsgemäßen Wirkstoffkombinationen eignen sich besonders gut zur Bekämpfung Phytophthora infestans und Plasmopara viticola.

Die gute Pflanzenverträglichkeit der Wirkstoffkombinationen in den zur Bekämpfung von Pflanzenkrankheiten notwendigen Konzentrationen erlaubt eine Behandlung von oberirdischen Pflanzenteilen, von Pflanz- und Saatgut, und des Bodens. Die erfindungsgemäßen Wirkstoffkombinationen können zur Blattapplikation oder auch als Beizmittel eingesetzt werden.

Die erfindungsgemäßen Wirkstoffkombinationen eignen sich auch zur Steigerung des Ernteertrages. Sie sind außerdem mindertoxisch und weisen eine gute Pflanzenverträglichkeit auf.

Erfindungsgemäß können alle Pflanzen und Pflanzenteile behandelt werden. Unter Pflanzen werden hierbei alle Pflanzen und Pflanzenpopulationen verstanden, wie erwünschte und unerwünschte Wildpflanzen oder Kulturpflanzen (einschließlich natürlich vorkommender Kulturpflanzen). Kulturpflanzen können Pflanzen sein, die durch konventionelle Züchtungs- und Optimierungsmethoden oder durch biotechnologische und gentechnologische Methoden oder Kombinationen dieser Methoden erhalten werden können, einschließlich der transgenen Pflanzen und einschließlich der durch Sortenschutzrechte schützbaren oder nicht schützbaren Pflanzensorten. Unter Pflanzenteilen sollen alle oberirdischen und unterirdischen Teile und Organe der Pflanzen, wie Spross, Blatt, Blüte und Wurzel verstanden werden, wobei beispielhaft Blätter, Nadeln, Stengel, Stämme, Blüten, Fruchtkörper, Früchte und Samen sowie Wurzeln, Knollen und Rhizome aufgeführt werden. Zu den Pflanzenteilen gehört auch Erntegut sowie vegetatives und generatives Vermehrungsmaterial, beispielsweise Stecklinge, Knollen, Rhizome, Ableger und Samen.

Die erfindungsgemäße Behandlung der Pflanzen und Pflanzenteile mit den Wirkstoffen erfolgt direkt oder durch Einwirkung auf deren Umgebung, Lebensraum oder Lagerraum nach den üblichen Behandlungsmethoden, z. B. durch Tauchen, Sprühen, Verdampfen, Vernebeln, Streuen, Aufstreichen und bei Vermehrungsmaterial, insbesondere bei Samen, weiterhin durch ein- oder mehrschichtiges Umhüllen.

Wie bereits oben erwähnt, können erfindungsgemäß alle Pflanzen und deren Teile behandelt werden. In einer bevorzugten Ausführungsform werden wild vorkommende oder durch konventionelle biologische Zuchtmethoden, wie Kreuzung oder Protoplastenfusion erhaltenen Pflanzenarten und Pflanzensorten sowie deren Teile behandelt. In einer weiteren bevorzugten Ausführungsform werden transgene Pflanzen und Pflanzensorten, die durch gentechnologische Methoden gegebenenfalls in Kombination mit konventionellen Methoden erhalten wurden (Genetic Modified Organisms) und deren Teile behandelt. Der Begriff "Teile" bzw. "Teile von Pflanzen" oder "Pflanzenteile" wurde oben erläutert.

Besonders bevorzugt werden erfindungsgemäß Pflanzen der jeweils handelsüblichen oder in Gebrauch befindlichen Pflanzensorten behandelt. Unter Pflanzensorten versteht man Pflanzen mit bestimmten Eigenschaften ("Traits"), die sowohl durch konventionelle Züchtung, durch Mutagenese oder durch rekombinante DNA-Techniken erhalten worden sind. Dies können Sorten, Bio- und Genotypen sein.

Je nach Pflanzenarten bzw. Pflanzensorten, deren Standort und Wachstumsbedingungen (Böden, Klima, Vegetationsperiode, Ernährung) können durch die erfindungsgemäße Behandlung auch überadditive ("synergistische") Effekte auftreten. So sind beispielsweise erniedrigte Aufwandmengen und/oder Erweiterungen des Wirkungsspektrums und/oder eine Verstärkung der Wirkung der erfindungsgemäß verwendbaren Stoffe und Mittel, besseres Pflanzenwachstum, erhöhte Toleranz gegenüber hohen oder niedrigen Temperaturen, erhöhte Toleranz gegen Trokkenheit oder gegen Wasser- bzw. Bodensalzgehalt, erhöhte Blühleistung, erleichterte Ernte, Beschleunigung der Reife,

höhere Ernteerträge, höhere Qualität und/oder höherer Ernährungswert der Ernteprodukte, höhere Lagerfähigkeit und/ oder Bearbeitbarkeit der Ernteprodukte möglich, die über die eigentlich zu erwartenden Effekte hinausgehen.

Zu den bevorzugten erfindungsgemäß zu behandelnden transgenen (gentechnologisch erhaltenen) Pflanzen bzw. Pflanzensorten gehören alle Pflanzen, die durch die gentechnologische Modifikation genetisches Material erhielten, welches diesen Pflanzen besondere vorteilhafte wertvolle Eigenschaften ("Traits") verleiht. Beispiele für solche Eigenschaften sind besseres Pflanzenwachstum, erhöhte Toleranz gegenüber hohen oder niedrigen Temperaturen, erhöhte Toleranz gegen Trockenheit oder gegen Wasser- bzw. Bodensalzgehalt, erhöhte Blühleistung, erleichterte Ernte, Beschleunigung der Reife, höhere Ernteerträge, höhere Qualität und/oder höherer Ernährungswert der Ernteprodukte, höhere Lagerfähigkeit und/oder Bearbeitbarkeit der Ernteprodukte. Weitere und besonders hervorgehobene Beispiele für solche Eigenschaften sind eine erhöhte Abwehr der Pflanzen gegen tierische und mikrobielle Schädlinge, wie gegenüber Insekten, Milben, pflanzenpathogenen Pilzen, Bakterien und/oder Viren sowie eine erhöhte Toleranz der Pflanzen gegen bestimmte herbizide Wirkstoffe. Als Beispiele transgener Pflanzen werden die wichtigen Kulturpflanzen, wie Getreide (Weizen, Reis), Mais, Soja, Kartoffel, Baumwolle, Raps sowie Obstpflanzen (mit den Früchten Äpfel, Birnen, Zitrusfrüchten und Weintrauben) erwähnt, wobei Mais, Soja, Kartoffel, Baumwolle und Raps besonders hervorgehoben werden. Als Eigenschaften ("Traits") werden besonders hervorgehoben die erhöhte Abwehr der Pflanzen gegen Insekten durch in den Pflanzen entstehende Toxine, insbesondere solche, die durch das genetische Material aus Bacillus Thuringiensis (z.B. durch die Gene CryIA(a), CryIA(b), CryIA(c), CryIIA, CryIIIA, CryIIIB2, Cry9c Cry2Ab, Cry3Bb und CryIF sowie deren Kombinationen) in den Pflanzen erzeugt werden (im folgenden "Bt Pflanzen"). Als Eigenschaften ("Traits") werden auch besonders hervorgehoben die erhöhte Abwehr von Pflanzen gegen Pilze, Bakterien und Viren durch Systemische Akquirierte Resistenz (SAR), Systemin, Phytoalexine, Elicitoren sowie Resistenzgene und entsprechend exprimierte Proteine und Toxine. Als Eigenschaften ("Traits") werden weiterhin besonders hervorgehoben die erhöhte Toleranz der Pflanzen gegenüber bestimmten herbiziden Wirkstoffen, beispielsweise Imidazolinonen, Sulfonylharnstoffen, Glyphosate oder Phosphinotricin (z.B. "PAT"-Gen). Die jeweils die gewünschten Eigenschaften ("Traits") verleihenden Gene können auch in Kombinationen miteinander in den transgenen Pflanzen vorkommen. Als Beispiele für "Bt Pflanzen" seien Maissorten, Baumwollsorten, Sojasorten und Kartoffelsorten genannt, die unter den Handelsbezeichnungen YIELD GARD® (z.B. Mais, Baumwolle, Soja), KnockOut® (z.B. Mais), StarLink® (z.B. Mais), Bollgard® (Baumwolle), Nucotn®. (Baumwolle) und NewLeaf® (Kartoffel) vertrieben werden. Als Beispiele für Herbizid tolerante Pflanzen seien Maissorten, Baumwollsorten und Sojasoiten genannt, die unter den Handelsbezeichnungen Roundup Ready® (Toleranz gegen Glyphosate z.B. Mais, Baumwolle, Soja), Liberty Link® (Toleranz gegen Phosphinotricin, z.B. Raps), IMI® (Toleranz gegen Imidazolinone) und STS® (Toleranz gegen Sulfonylharnstoffe z.B. Mais) vertrieben werden. Als Herbizid resistente (konventionell auf Herbizid-Toleranz gezüchtete) Pflanzen seien auch die. unter der Bezeichnung Clearfield® vertriebenen Sorten (z.B. Mais) erwähnt. Selbstverständlich gelten diese Aussagen auch für in der Zukunft entwickelte bzw. zukünftig auf den Markt kommende Pflanzensorten mit diesen oder zukünftig entwickelten genetischen Eigenschaften ("Traits").

Die aufgeführten Pflanzen können besonders vorteilhaft erfindungsgemäß mit den Verbindungen der allgemeinen Formel I bzw. den erfindungsgemäßen Wirkstoffmischungen behandelt werden. Die bei den Wirkstoffen bzw. Mischungen oben angegebenen Vorzugsbereiche gelten auch für die Behandlung dieser Pflanzen. Besonders hervorgehoben sei die Pflanzenbehandlung mit den im vorliegenden Text speziell aufgeführten Verbindungen bzw. Mischungen.

Die erfindungsgemäßen Wirkstoffkombinationen können in die üblichen Formulierungen überführt werden, wie Lösungen, Emulsionen, Suspensionen, Pulver, Schäume, Pasten, Granulate, Aerosole, Feinstverkapselungen in polymeren Stoffen und in Hüllmassen für Saatgut, sowie ULV-Formulierungen.

Diese Formulierungen werden in bekannter Weise hergestellt, z.B. durch Vermischen der Wirkstoffe bzw. der Wirkstoffkombinationen mit Streckmitteln, also flüssigen Lösungsmitteln, unter Druck stehenden verflüssigten Gasen und/oder festen Trägerstoffen, gegebenenfalls unter Verwendung von oberflächenaktiven Mitteln, also Emulgiermitteln und/oder Dispergiermitteln und/oder schaumerzeugenden Mitteln. Im Falle der Benutzung von Wasser als Streckmittel können z.B. auch organische Lösungsmittel als Hilfslösungsmittel verwendet werden. Als flüssige Lösungsmittel kommen im wesentlichen in Frage: Aromaten, wie Xylol, Toluol oder Alkylnaphthaline, chlorierte Aromaten oder chlorierte aliphatische Kohlenwasserstoffe, wie Chlorbenzole, Chlorethylene oder Methylenchlorid, aliphatische Kohlenwasserstoffe, wie. Cyclohexan oder Paraffine, z.B. Erdölfraktionen, Alkohole, wie Butanol oder Glycol sowie deren Ether und Ester, Ketone, wie Aceton, Methylethylketon, Methylisobutylketon oder Cyclohexanon, stark polare Lösungsmittel wie Dimethylformamid und Dimethylsulfoxid, sowie Wasser. Mit verflüssigten gasförmigen Streckmitteln oder Trägerstoffen sind solche Flüssigkeiten gemeint, welche bei normaler Temperatur und unter Normaldruck gasförmig sind, z.B. Aerosol-Treibgase, wie Butan, Propan, Stickstoff und Kohlendioxid. Als feste Trägerstoffe kommen in Frage: z.B. natürliche Gesteinsmehle, wie Kaoline, Tonerden, Talkum, Kreide, Quarz, Attapulgit, Montmorillonit oder Diatomeenerde und synthetische Gesteinsmehle, wie hochdisperse Kieselsäure, Aluminiumoxid und Silikate. Als feste Trägerstoffe für Granulate kommen in Frage: z.B. gebrochene und fraktionierte natürliche Gesteine wie Calcit, Marmor, Bims, Sepiolith, Dolomit sowie synthetische Granulate aus anorganischen und organischen Mehlen sowie Granulate aus organischem Material wie Sägemehl, Kokosnussschalen, Maiskolben und Tabakstengel. Als Emulgierund/oder schaumerzeugende Mittel kommen in Frage: z.B. nichtionogene und anionische Emulgatoren, wie Polyoxyethylen-Fettsäureester, Polyoxyethylen-Fettalkoholether, z.B. Alkylarylpolyglycol-ether, Alkylsulfonate, Alkylsulfate, Arylsulfonate sowie Eiweißhydrolysate. Als Dispergiermittel kommen in Frage: z.B. Lignin-Sulfitablaugen und Methylcellulose.

Es können in den Formulierungen Haftmittel wie Carboxymethylcellulose, natürliche und synthetische pulverige, körnige oder latexförmige Polymere verwendet werden, wie Gummiarabicum, Polyvinylalkohol, Polyvinylacetat, sowie natürliche Phospholipide, wie Kephaline und Lecithine, und synthetische Phospholipide. Weitere Additive können mineralische und vegetabile Öle sein.

Es können Farbstoffe wie anorganische Pigmente, z.B. Eisenoxid, Titanoxid, Ferrocyanblau und organische Farbstoffe, wie Alizarin-, Azo- und Metallphthalocyaninfarbstoffe und Spurennährstoffe, wie Salze von Eisen, Mangan, Bor, Kupfer, Kobalt, Molybdän und Zink verwendet werden.

Die Formulierungen enthalten im allgemeinen zwischen 0,1 und 95 Gew.-% Wirkstoffe, vorzugsweise zwischen 0,5 und 90 %.

Die erfindungsgemäßen Wirkstoffkombinationen können als solche oder in ihren Formulierungen auch in Mischung mit bekannten Fungiziden, Bakteriziden, Akariziden, Nematiziden oder Insektiziden verwendet werden, um so z.B. das Wirkungsspektrum zu verbreitern oder Resistenzentwicklungen vorzubeugen. In vielen Fällen erhält man dabei synergistische Effekte, d.h. die Wirksamkeit der Mischung ist größer als die Wirksamkeit der Einzelkomponenten.

Auch eine Mischung mit anderen bekannten Wirkstoffen, wie Herbiziden oder mit Düngemitteln und Wachstumsregulatoren ist möglich.

Die Wirkstoffkombinationen können als solche, in Form ihrer Formulierungen oder den daraus bereiteten Anwendungsformen, wie gebrauchsfertige Lösungen, emulgierbare Konzentrate, Emulsionen, Suspensionen, Spritzpulver, lösliche Pulver und Granulate, angewendet werden. Die Anwendung geschieht in üblicher Weise, z.B. durch Gießen, Verspritzen, Versprühen, Verstreuen, Verstreichen, Trockenbeizen, Feuchtbeizen, Nassbeizen, Schlämmbeizen oder Inkrustieren.

Beim Einsatz der erfindungsgemäßen Wirkstoffkombinationen können die Aufwandmengen je nach Applikationsart innerhalb eines größeren Bereichs variiert werden. Bei der Behandlung von Pflanzenteilen liegen die Aufwandmengen an Wirkstoffkombination im allgemeinen zwischen 0,1 und 10 000 g/ha, vorzugsweise zwischen 10 und 1 000 g/ha. Bei der Saatgutbehandlung liegen die Aufwandmengen an Wirkstoffkombination im allgemeinen zwischen 0,001 und 50 g pro Kilogramm Saatgut, vorzugsweise zwischen 0,01 und 10 g pro Kilogramm Saatgut. Bei der Behandlung des Bodens liegen die Aufwandmengen an Wirkstoffkombination im allgemeinen zwischen 0,1 und 10 000 g/ha; vorzugsweise zwischen 1 und 5 000 g/ha.

Die gute fungizide Wirkung der erfindungsgemäßen Wirkstoffkombinationen geht aus den nachfolgenden Beispielen hervor. Während die einzelnen Wirkstoffe in der fungiziden Wirkung Schwächen aufweisen, zeigen die Kombinationen eine Wirkung, die über eine einfache Wirkungssummierung hinausgeht. Die Erfindung ist jedoch nicht auf die Beispiele limitiert.

## Beispiel 1

### Erysiphe-Test (Gerste) / protektiv

| | |
|---|---|
| Lösungsmittel | 25 Gew.-Teile N,N-Dimethylacetamid |
| Emulgator | 0,6 Gew.-Teile Alkylarylpolyglykolether |

Zur Herstellung einer zweckmäßigen Wirkstoffzubereitung vermischt man 1 Gewichtsteil Wirkstoff oder Wirkstoffkombination mit den angegebenen Mengen Lösungsmittel und Emulgator und verdünnt das Konzentrat mit Wasser auf die gewünschte Konzentration.

Zur Prüfung auf protektive Wirksamkeit besprüht man junge Pflanzen mit der Wirkstoffzubereitung in der angegebenen Aufwandmenge.

Nach Antrocknen des Spritzbelages werden die Pflanzen mit Sporen von Erysiphe graminis f.sp. hordei bestäubt.

Die Pflanzen werden in einem Gewächshaus bei einer Temperatur von ca. 20°C und einer relativen Luftfeuchtigkeit von ca. 80 % aufgestellt, um die Entwicklung von Mehltaupusteln zu begünstigen.

7 Tage nach der Inokulation erfolgt die Auswertung. Dabei bedeutet 0 % ein Wirkungsgrad, der demjenigen der Kontrolle entspricht, während ein Wirkungsgrad von 100 % bedeutet, daß kein Befall beobachtet wird.

Tabelle 1

| Erysiphe-Test (Gerste) / protektiv | | |
|---|---|---|
| Wirkstoff | Aufwandmenge an Wirkstoff in g/ha | Wirkungsgrad in % |
| Bekannt: | | |
| Verbindung der Formel (I) | 12,5 | 80 |
| Verbindung der Formel (LXX) (69) | 12,5 | 90 |
| Verbindung der Formel (LXXI) (70) | 12,5 | 0 |
| Verbindung der Formel (LXXII) (71) | 12,5 | 0 |
| Cyprodinil (XVIII) (17) | 12,5 | 0 |
| Imidacloprid (XXIV) (23) | 12,5 | 0 |
| Fludioxonil (XXX) (29) | 12,5 | 0 |
| Pencycuron (XXXVIII) (37) | 12,5 | 50 |
| erfindungsgemäße Mischungen: | | |
| (I) + (LXX) (69) | 6,25 + 6,25 | 100 |
| (I) + (LXXI) (70) | 6,25 + 6,25 | 95 |
| (I) + (LXXII) (71) | 6,25 + 6,25 | 100 |
| (I) + Cyprodinil (XVIII) (17) | 6,25 + 6,25 | 100 |
| (I) + Imidacloprid (XXIV) (23) | 6,25 + 6,25 | 100 |
| (I) + Fludioxonil (XXX) (29) | 6,25 + 6,25 | 100 |
| (I) + Pencycuron (XXXVIII) (37) | 6,25 + 6,25 | 100 |

## Beispiel 2

**Erysiphe-Test (Weizen) / protektiv**

| | |
|---|---|
| Lösungsmittel | 25 Gew.-Teile N,N-Dimethylacetamid |
| Emulgator | 0,6 Gew.-Teile Alkylarylpolyglykolether |

Zur Herstellung einer zweckmäßigen Wirkstoffzubereitung vermischt man 1 Gewichtsteil Wirkstoff oder Wirkstoffkombination mit den angegebenen Mengen Lösungsmittel und Emulgator und verdünnt das Konzentrat mit Wasser auf die gewünschte Konzentration.

Zur Prüfung auf protektive Wirksamkeit besprüht man junge Pflanzen mit der Wirkstoffzubereitung in der angegebenen Aufwandmenge.

Nach Antrocknen des Spritzbelages werden die Pflanzen mit Sporen von Erysiphe graminis f.sp. tritici bestäubt.

Die Pflanzen werden in einem Gewächshaus bei einer Temperatur von ca. 20°C und einer relativen Luftfeuchtigkeit von ca. 80 % aufgestellt, um die Entwicklung von Mehltaupusteln zu begünstigen.

7 Tage nach der Inokulation erfolgt die Auswertung. Dabei bedeutet 0 % ein Wirkungsgrad, der demjenigen der Kontrolle entspricht, während ein Wirkungsgrad von 100 % bedeutet, daß kein Befall beobachtet wird.

Tabelle 2

| Erysiphe-Test (Weizen) / protektiv | | |
|---|---|---|
| Wirkstoff | Aufwandmenge an Wirkstoff in g/ha | Wirkungsgrad in % |
| Bekannt: | | |
| Verbindung der Formel (I) | 6,25 | 0 |
| Epoxiconazole (XI) (10) | 6,25 | 70 |
| Metconazole (XII) (11) | 6,25 | 50 |
| erfindungsgemäße Mischungen: | | |
| (I) + Epoxiconazole (XI) (10) | 3,125 + 3,125 | 100 |
| (I) + Metconazole (XII) (11) | 3,125 + 3,125 | 70 |

**Beispiel 3**

**Leptosphaeria nodorum-Test (Weizen) / protektiv**

| | |
|---|---|
| Lösungsmittel | 25 Gewichtsteile N,N-Dimethylacetamid |
| Emulgator | 0,6 Gewichtsteile Alkylarylpolyglykolether |

Zur Herstellung einer zweckmäßigen Wirkstoffzubereitung vermischt man 1 Gewichtsteil Wirkstoff oder Wirkstaffkombination mit den angegebenen Mengen Lösungsmittel und Emulgator und verdünnt das Konzentrat mit Wasser auf die gewünschte Konzentration.

Zur Prüfung auf protektive Wirksamkeit werden junge Pflanzen mit der Wirkstoffzubereitung in der angegebenen Aufwandmenge besprüht. Nach Antrocknen des Spritzbelages werden die Pflanzen mit einer Sporensuspension von Leptosphaeria nodorum besprüht. Die Pflanzen verbleiben 48 Stunden bei 20°C und 100 % relativer Luftfeuchtigkeit in einer Inkubationskabine.

Die Pflanzen werden in einem Gewächshaus bei einer Temperatur von ca. 15°C und einer relativen Luftfeuchtigkeit von 80 % aufgestellt.

10 Tage nach der Inokulation erfolgt die Auswertung. Dabei bedeutet 0 % ein Wirkungsgrad, der demjenigen der Kontrolle entspricht, während ein Wirkungsgrad von 100% bedeutet, daß kein Befall beobachtet wird.

Tabelle 3

| Leptosphaeria nodorum-Test (Weizen) / protektiv | | |
|---|---|---|
| Wirkstoff | Aufwandmenge an Wirkstoff in g/ha | Wirkungsgrad in % |
| Bekannt: | | |
| Verbindung der Formel (I) | 25 | 60 |
| Verbindung der Formel (LXXI) (70) | 25 | 0 |
| Verbindung der Formel (LXXII) (71) | 25 | 40 |
| Tebuconazole (IV) (3) | 25 | 50 |
| erfindungsgemäße Mischungen: | | |
| (I) + (LXXI) (70) | 12,5 + 12,5 | 80 |
| (I) + Tebuconazole (IV) (3) | 12,5 + 12,5 | 80 |
| (I) + (LXXII) (71) | 12,5 + 12,5 | 80 |

**Beispiel 4**

**Pyrenophora teres-Test (Gerste) / protektiv**

| | |
|---|---|
| Lösungsmittel | 25 Gewichtsteile N,N-Dimethylacetamid |
| Emulgator | 0,6 Gewichtsteile Alkylarylpolyglykolether |

Zur Herstellung einer zweckmäßigen Wirkstoffzubereitung vermischt man 1 Gewichtsteil Wirkstoff oder Wirkstoffkombination mit den angegebenen Mengen Lösungsmittel und Emulgator und verdünnt das Konzentrat mit Wasser auf die gewünschte Konzentration.

Zur Prüfung auf protektive Wirksamkeit werden junge Pflanzen mit der Wirkstoffzubereitung in der angegeben Aufwandmenge besprüht. Nach Antrocknen des Spritzbelages werden die Pflanzen mit einer Konidiensuspension von Pyrenophora teres besprüht. Die Pflanzen verbleiben 48 Stunden bei 20°C und 100 % relativer Luftfeuchtigkeit in einer Inkubationskabine.

Die Pflanzen werden dann in einem Gewächshaus bei einer Temperatur von ca. 20°C und relativen Luftfeuchtigkeit von ca. 80 % aufgestellt.

7 Tage nach der Inokulation erfolgt die Auswertung. Dabei bedeutet 0 % ein Wirkungsgrad, der demjenigen der Kontrolle entspricht, während ein Wirkungsgrad von 100 % bedeutet, daß kein Befall beobachtet wird.

Tabelle 4

| **Pyrenophora teres-Test (Gerste) / protektiv** | | |
|---|---|---|
| Wirkstoff | Aufwandmenge an Wirkstoff in g/ha | Wirkungsgrad in % |
| Bekannt: | | |
| Verbindung der Formel (I) | 25 | 60 |
| Verbindung der Formel (LXX) (69) | 25 | 70 |
| Epoxiconazole (XI) (10) | 25 | 60 |
| Tebuconazole (IV) (3) | 25 | 0 |
| Triadimenol (X) (9) | 25 | 30 |
| Cyprodinil (XVIII) (17) | 25 | 0 |
| erfindungsgemäße | | |
| Mischungen: (I) + (LXX) (69) | 12,5 + 12,5 | 90 |
| (I) + Epoxiconazole (XI) (10) | 12,5 + 12,5 | 90 |
| (I) + Tebuconazole (IV) (3) | 12,5 + 12,5 | 80 |
| (I) + Triadimenol (X) (9) | 12,5 + 12,5 | 80 |
| (I) + Cyprodinil (XVIII) (17) | 12,5 + 12,5 | 90 |

**Beispiel 5**

**Phytophthora-Test (Tomate) / protektiv**

| | |
|---|---|
| Lösungsmittel | 24,5 Gewichtsteile Aceton |
| | 24,5 Gewichtsteile Dimethylacetamid |
| Emulgator | 1 Gewichtsteil Alkyl-Aryl-Polyglykolether |

Zur Herstellung einer zweckmäßigen Wirkstoffzubereitung vermischt man 1 Gewichtsteil Wirkstoff oder Wirkstoffkombination mit den angegebenen Mengen Lösungsmittel und Emulgator und verdünnt das Konzentrat mit Wasser

auf die gewünschte Konzentration oder man verdünnt eine handelsübliche Formulierung von Wirkstoff oder Wirkstoffkombination mit Wasser auf die gewünschte Konzentration.

Zur Prüfung auf protektive Wirksamkeit werden junge Pflanzen mit der Wirkstoffzubereitung in der angegebenen Aufwandmenge besprüht. Nach Antrocknen des Spritzbelages werden die Pflanzen mit einer wäßrigen Sporensuspension von ***Phytophthora infestans*** inokuliert. Die Pflanzen werden dann in einer Inkubationskabine bei ca. 20°C und 100 % relativer Luftfeuchtigkeit aufgestellt.

3 Tage nach der Inokulation erfolgt die Auswertung. Dabei bedeutet 0% ein Wirkungsgrad, der demjenigen der Kontrolle entspricht, während ein Wirkungsgrad von 100 % bedeutet, daß kein Befall beobachtet wird.

Die gute fungizide Wirkung der erfindungsgemäßen Wirkstoffkombinationen geht. aus dem nachfolgenden Beispiel hervor. Während die einzelnen Wirkstoffe in der fungiziden Wirkung Schwächen aufweisen, zeigen die Kombinationen eine Wirkung, die über eine einfache Wirkungssummierung hinausgeht.

Ein synergistischer Effekt liegt bei Fungiziden immer dann vor, wenn die fungizide Wirkung der Wirkstoffkombinationen größer ist als die Summe der Wirkungen der einzelnen applizierten Wirkstoffe.

Die zu erwartende Wirkung für eine gegebene Kombination zweier Wirkstoffe kann nach S.R. Colby ("Calculating Synergistic and Antagonistic Responses of Herbicide Combinations", Weeds 15 (1967), 20-22) wie folgt berechnet werden:

Wenn

X den Wirkungsgrad beim Einsatz des Wirkstoffes A in einer Aufwandmenge von m g/ha bedeutet,

Y den Wirkungsgrad beim Einsatz des Wirkstoffes B in einer Aufwandmenge von n g/ha bedeutet und

E den Wirkungsgrad beim Einsatz der Wirkstoffe A und B in Aufwandmengen von m und n g/ha bedeutet,

dann ist

$$E = X + Y - \frac{X \times Y}{100}$$

Dabei wird der Wirkungsgrad in % ermittelt. Es bedeutet 0 % ein Wirkungsgrad, der demjenigen der Kontrolle entspricht, während ein Wirkungsgrad von 100 % bedeutet, daß kein Befall beobachtet wird.

Ist die tatsächliche fungizide Wirkung größer als berechnet, so ist die Kombination in ihrer Wirkung überadditiv, d.h. es liegt ein synergistischer Effekt vor. In diesem Fall muß der tatsächlich beobachtete Wirkungsgrad größer sein als der aus der oben angeführten Formel errechnete Wert für den erwarteten Wirkungsgrad (E).

Aus der nachfolgenden Tabelle geht eindeutig hervor, daß die gefundene Wirkung der erfindungsgemäßen Wirkstoffkombination größer ist als die berechnete, d.h., daß ein synergistischer Effekt vorliegt.

Tabelle 5.1

**Phytophthora-Test (Tomate) / protektiv**

| Wirkstoff<br>Bekannt: | Aufwandmenge an Wirkstoff in g/ha | % Wirkungsgrad |
|---|---|---|
| Verbindung der Formel (I)<br>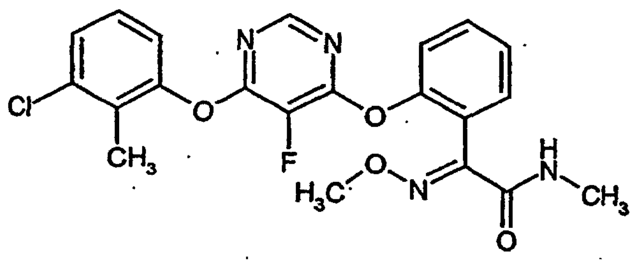 | 0,5 | 32 |
| Cyamidazosulfamid (LXX IV)(73)<br>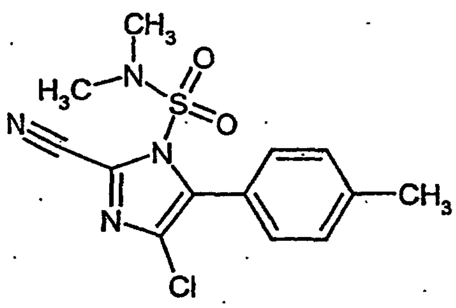 | 0,5 | 45 |

Erfindungsgemäße Mischung:

| | Mischungsverhältnis | Aufwandmenge an Wirkstoff in g/ha | tatsächlicher Wirkungsgrad | Erwartungswert, berechnet mit Colby-Formel |
|---|---|---|---|---|
| (I)<br>+<br>Cyamidazosulfamid (LXXIV) (73) | 1:1 | 0,5<br>+<br>0,5 | 88 | 63 |

<u>Tabelle 5.2</u>

**Phytophthora-Test (Tomate) / protektiv**

| Wirkstoff<br><u>Bekannt:</u> | Aufwandmenge an Wirkstoff in g/ha | % Wirkungsgrad |
|---|---|---|
| Verbindung der Formel (I)<br>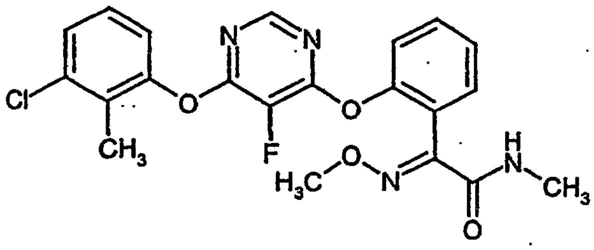 | 1 | 60 |
| Triadimenol (X) (9)<br>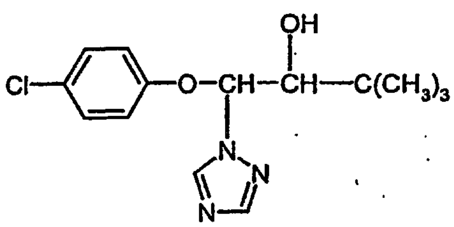 | 5 | 0 |

<u>Erfindungsgemäße Mischung:</u>

| | Mischungsverhältnis | Aufwandmenge an Wirkstoff in g/ha | tatsächlicher Wirkungsgrad | Erwartungswert, berechnet mit Colby-Formel |
|---|---|---|---|---|
| (I)<br>+<br>Triadimenol (X) (9) | 1:5 | 1<br>+<br>5 | 72 | 60 |

**Tabelle 5.3**

**Phytophthora-Test (Tomate) / protektiv**

| Wirkstoff<br>Bekannt: | Aufwandmenge an Wirkstoff in g/ha | % Wirkungsgrad |
|---|---|---|
| Verbindung der Formel (I)<br>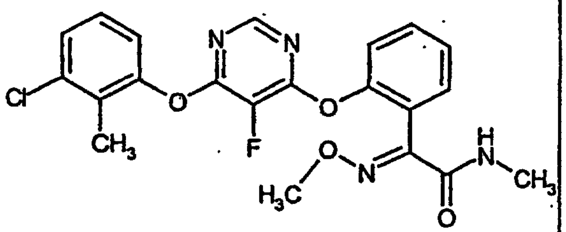 | 2 | 72 |
| Captan (LV) (54)<br>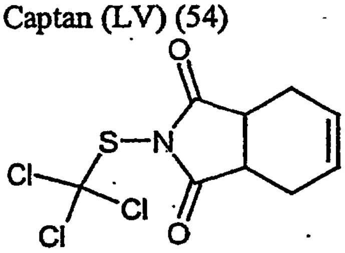 | 40 | 0 |

| Erfindungsgemäße Mischung: | Mischungs-verhältnis | Aufwand-menge an Wirkstoff in g/ha | tatsächlicher Wirkungsgrad | Erwartungs-wert, be-rechnet mit Colby-Formel |
|---|---|---|---|---|
| (I)<br>+<br>Captan (LV) (54) | 1:20 | 2<br>+<br>40 | 85 | 72 |

Tabelle 5.4

**Phytophthora-Test (Tomate) / protektiv**

| Wirkstoff<br>Bekannt: | Aufwandmenge an Wirkstoff in g/ha | % Wirkungsgrad |
|---|---|---|
| Verbindung der Formel (I)<br>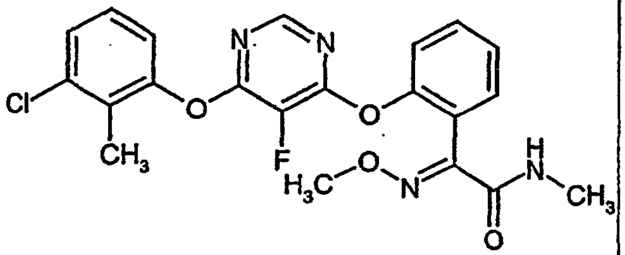 | 1 | 60 |
| Dimetomorph (XLV) (44)<br>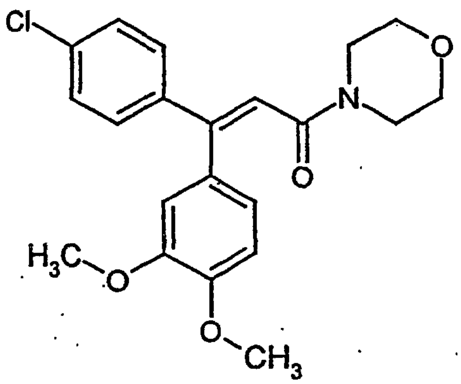 | 1 | 23 |

| Erfindungsgemäße Mischung: | Mischungsverhältnis | Aufwandmenge an Wirkstoff in g/ha | tatsächlicher Wirkungsgrad | Erwartungswert, berechnet mit Colby-Formel |
|---|---|---|---|---|
| (I) + Dimetomorph (XLV) (44) | 1:1 | 1 + 1 | 86 | 69 |

Tabelle 5.5

**Phytophthora-Test (Tomate) / protektiv**

| Wirkstoff<br>Bekannt: | Aufwandmenge an Wirkstoff in g/ha | % Wirkungsgrad |
|---|---|---|
| Verbindung der Formel (I)<br>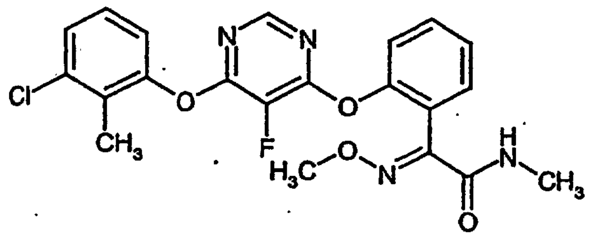 | 0,5 | 32 |
| Cymoxanil (XLVI) (45)<br>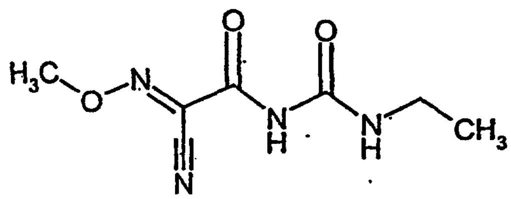 | 2,5 | 0 |

Erfindungsgemäße Mischung:

| | Mischungsverhältnis | Aufwandmenge an Wirkstoff in g/ha | tatsächlicher Wirkungsgrad | Erwartungswert, berechnet mit Colby-Formel |
|---|---|---|---|---|
| (I)<br>+<br>Cymoxanil (XLVI) (45) | 1:5 | 0,5<br>+<br>2,5 | 87 | 32 |

**Tabelle 5.6**

**Phytophthora-Test (Tomate) / protektiv**

| Wirkstoff<br>Bekannt: | Aufwandmenge an Wirkstoff in g/ha | % Wirkungsgrad |
|---|---|---|
| Verbindung der Formel (I)<br>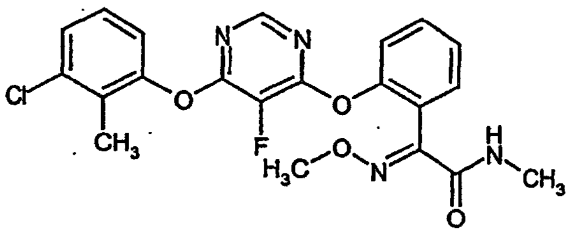 | 1 | 60 |
| Fosetyl-Al (XLVII) (46)<br>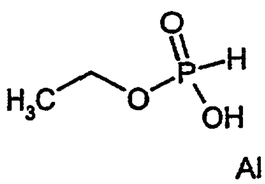 | 10 | 0 |

Erfindungsgemäße Mischung:

| | Mischungsverhältnis | Aufwandmenge an Wirkstoff in g/ha | tatsächlicher Wirkungsgrad | Erwartungswert, berechnet mit Colby-Formel |
|---|---|---|---|---|
| (I)<br>+<br>Fosetyl-Al (XLVII) (46) | **1:10** | 1<br>+<br>10 | **7** | **60** |

Tabelle 5.7

**Phytophthora-Test (Tomate) / protektiv**

| Wirkstoff<br>Bekannt: | Aufwandmenge an Wirkstoff in g/ha | % Wirkungsgrad |
|---|---|---|
| Verbindung der Formel (I)<br>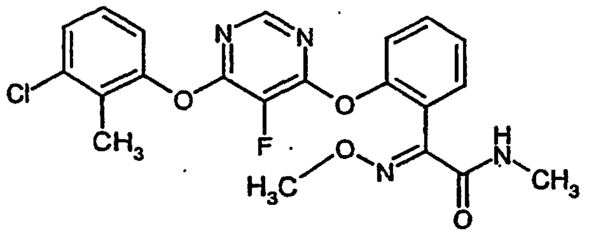 | 1 | 60 |
| Kresoxim-methyl (XVI) (15)<br>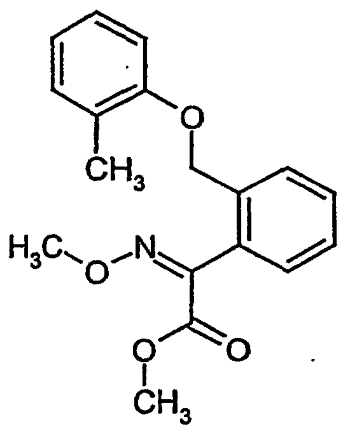 | 1 | 35 |

Erfindungsgemäße Mischung:

| | Mischungsverhältnis | Aufwandmenge an Wirkstoff in g/ha | tatsächlicher Wirkungsgrad | Erwartungswert, berechnet mit Colby-Formel |
|---|---|---|---|---|
| (I)<br>+<br>Kresoxim-methyl (XVI) (15) | 1:1 | 1<br>+<br>1 | 87 | 74 |

Tabelle 5.8

**Phytophthora-Test (Tomate) / protektiv**

| Wirkstoff<br>Bekannt: | Aufwandmenge an Wirkstoff in g/ha | % Wirkungsgrad |
|---|---|---|
| Verbindung der Formel (I)<br>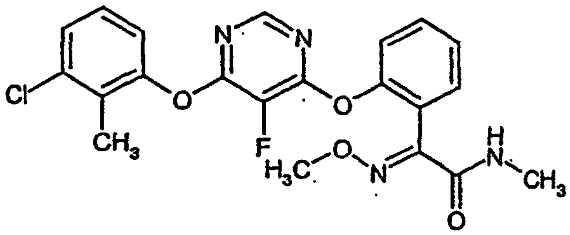 | 1 | 60 |
| (LXX) (69)<br>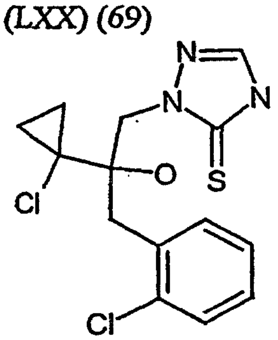 | 5 | 0 |

Erfindungsgemäße Mischung:

| | Mischungsverhältnis | Aufwandmenge an Wirkstoff in g/ha | tatsächlicher Wirkungsgrad | Erwartungswert, berechnet mit Colby-Formel |
|---|---|---|---|---|
| (I)<br>+<br>(LXX) (69) | 1:5 | 1<br>+<br>5 | 73 | 60 |

Tabelle 5.9

**Phytophthora-Test (Tomate) / protektiv**

| Wirkstoff<br>Bekannt: | Aufwandmenge an Wirkstoff in g/ha | % Wirkungsgrad |
|---|---|---|
| Verbindung der Formel (I)<br>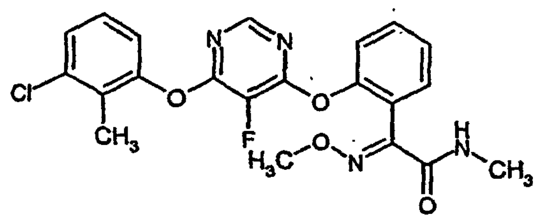 | 2 | 72 |
| Spiroxamine (II) (1)<br>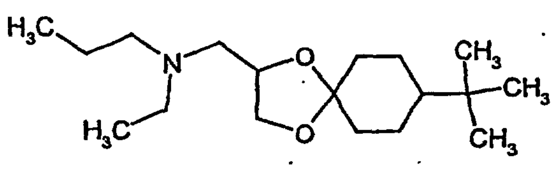 | 10 | 0 |

Erfindungsgemäße Mischung:

| | Mischungs-verhältnis | Aufwand-menge an Wirkstoff in g/ha | tatsächlicher Wirkungs-grad | Erwartungswert, berechnet mit Colby-Formel |
|---|---|---|---|---|
| (I)<br>+<br>Spiroxamine (II) (1) | 1:5 | 2<br>+<br>10 | 90 | 72 |

**Tabelle 5.10**

**Phytophthora-Test (Tomate) / protektiv**

| Wirkstoff<br>Bekannt: | Aufwandmenge an Wirkstoff in g/ha | % Wirkungs-grad |
|---|---|---|
| Verbindung der Formel (I)<br>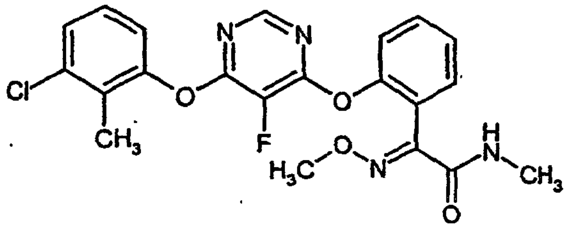 | 2 | 72 |
| Mancozeb (XLIII) (42)<br>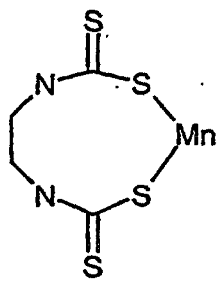 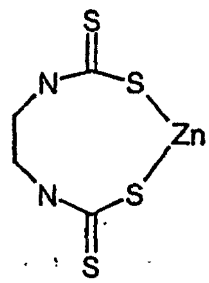 | 40 | 23 |

Erfindungsgemäße Mischung:

| | Mischungs-verhältnis | Aufwand-menge an Wirkstoff in g/ha | tatsächlicher Wirkungs-grad | Erwartungswert, berechnet mit Colby-Formel |
|---|---|---|---|---|
| (I)<br>+<br>Mancozeb (XLIII) (42) | 1:20 | 2<br>+<br>40 | 91 | 78 |

Tabelle 5.11

**Phytophthora-Test (Tomate) / protektiv**

| Wirkstoff<br>Bekannt: | Aufwandmenge an Wirkstoff in g/ha | % Wirkungsgrad |
|---|---|---|
| Verbindung der Formel (I)<br>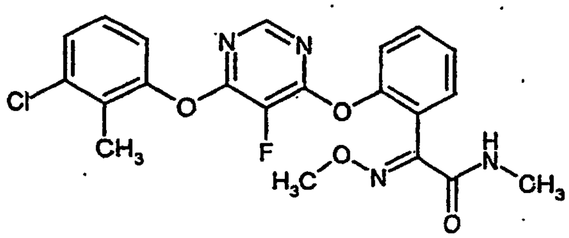 | 0,5 | 32 |
| Mepanipyrim (L) (49)<br>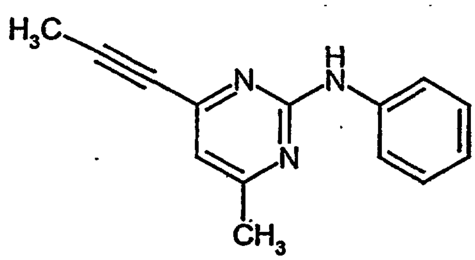 | 5 | 0 |

Erfindungsgemäße Mischung:

| | Mischungsverhältnis | Aufwandmenge an Wirkstoff in g/ha | tatsächlicher Wirkungsgrad | Erwartungswert, berechnet mit Colby-Formel |
|---|---|---|---|---|
| (I)<br>+<br>Mepanipyrim (L) (49) | 1:10 | 0,5<br>+<br>5 | 71 | 32 |

Tabelle 5.12

**Phytophthora-Test (Tomate) / protektiv**

| Wirkstoff<br>Bekannt: | Aufwandmenge an Wirkstoff in g/ha | % Wirkungsgrad |
|---|---|---|
| Verbindung der Formel (I)<br>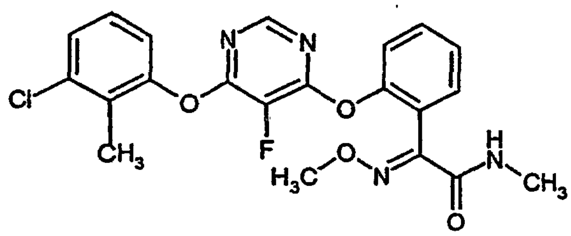 | 2 | 72 |
| Pencycuron (XXXVIII) (37)<br>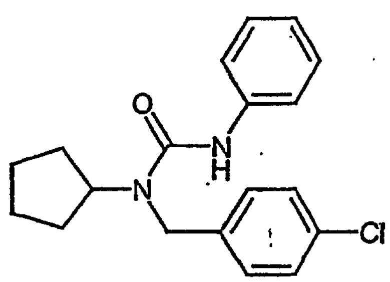 | 10 | 14 |

Erfindungsgemäße Mischung:

| | Mischungsverhältnis | Aufwandmenge an Wirkstoff in g/ha | tatsächlicher Wirkungsgrad | Erwartungswert, berechnet mit Colby-Formel |
|---|---|---|---|---|
| (I) + Pencycuron (XXXVIII) (37) | 1:5 | 2 + 10 | 97 | 76 |

Tabelle 5.13

**Phytophthora-Test (Tomate) / protektiv**

| Wirkstoff<br>Bekannt: | Aufwandmenge an Wirkstoff in g/ha. | % Wirkungsgrad |
|---|---|---|
| Verbindung der Formel (I)<br>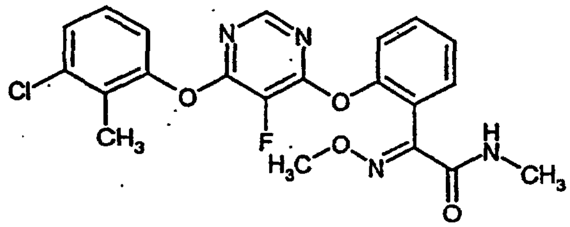 | 1 | 60 |
| Chinomethionat (LVI) (55)<br>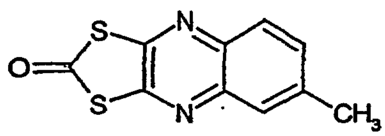 | 20 | 0 |

Erfindungsgemäße Mischung:

| | Mischungsverhältnis | Aufwandmenge an Wirkstoff in g/ha | tatsächlicher Wirkungsgrad | Erwartungswert, berechnet mit Colby-Formel |
|---|---|---|---|---|
| (I) + Chinomethionat (LVI) (55) | 1:20 | 1 + 20 | 77 | 60 |

## Tabelle 5.14

**Phytophthora-Test (Tomate) / protektiv**

| Wirkstoff<br>Bekannt: | Aufwandmenge an Wirkstoff in g/ha | % Wirkungs-grad |
|---|---|---|
| Verbindung der Formel (I)<br>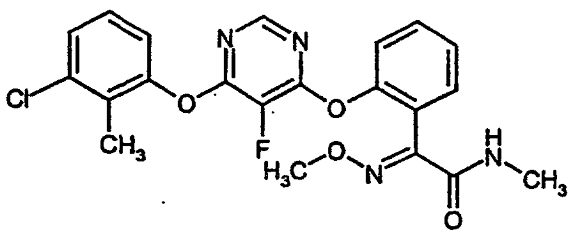 | 1 | 40 |
| Propineb (XLI) (40)<br>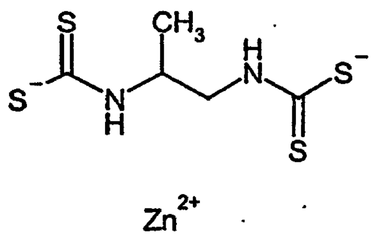 | 20 | 8 |

| Erfindungsgemäße Mischung: | Mischungs-verhältnis | Aufwand-menge an Wirkstoff in g/ha | tatsächlicher Wirkungs-grad | Erwartungswert, berechnet mit Colby-Formel |
|---|---|---|---|---|
| (I)<br>+<br>Propineb (XLI) (40) | 1:20 | 1<br>+<br>20 | 70 | 45 |

Tabelle 5.15

**Phytophthora-Test (Tomate) / protektiv**

| Wirkstoff<br>Bekannt: | Aufwandmenge an Wirkstoff in g/ha | % Wirkungsgrad |
|---|---|---|
| Verbindung der Formel (I)<br>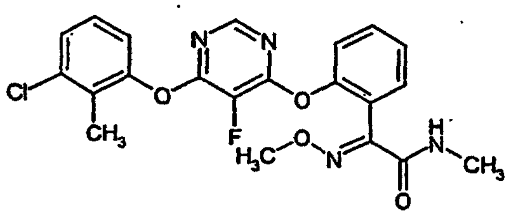 | 1 | 60 |
| Pyrimethanil (XLIX) (48)<br>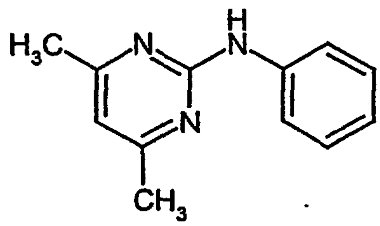 | 10 | 11 |

| Erfindungsgemäße Mischung: | | | | |
|---|---|---|---|---|
| | Mischungs-verhältnis | Aufwand-menge an Wirkstoff in g/ha | tatsächlicher Wirkungs-grad | Erwartungswert, berechnet mit Colby-Formel |
| (I) + Pyrimethanil (XLIX) (48) | 1:10 | 1 + 10 | 81 | 64 |

**Tabelle 5.16**

**Phytophthora-Test (Tomate) / protektiv**

| Wirkstoff<br>Bekannt: | Aufwandmenge an Wirkstoff in g/ha | % Wirkungsgrad |
|---|---|---|
| Verbindung der Formel (I)<br>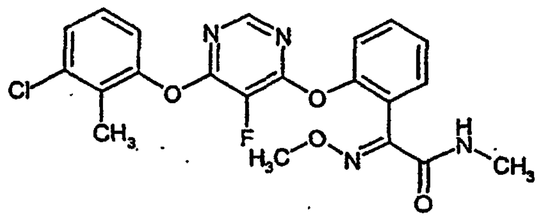 | 1 | 60 |
| Zoxamide (LXXIII) (72)<br>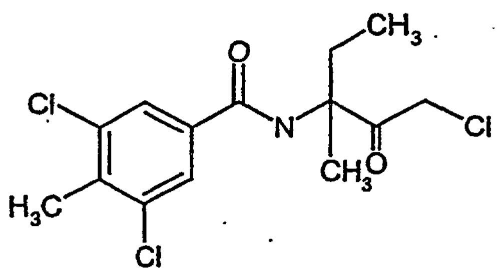 | 1 | 19 |

Erfindungsgemäße Mischung:

| | Mischungsverhältnis | Aufwandmenge an Wirkstoff in g/ha | tatsächlicher Wirkungsgrad | Erwartungswert, berechnet mit Colby-Formel |
|---|---|---|---|---|
| (I)<br>+<br>Zoxamide (LXXIII) (72) | 1:1 | 1<br>+<br>1 | 87 | 68 |

Tabelle 5.17

**Phytophthora-Test (Tomate) / protektiv**

| Wirkstoff<br>Bekannt: | Aufwandmenge an Wirkstoff in g/ha | % Wirkungsgrad |
|---|---|---|
| Verbindung der Formel (I)<br>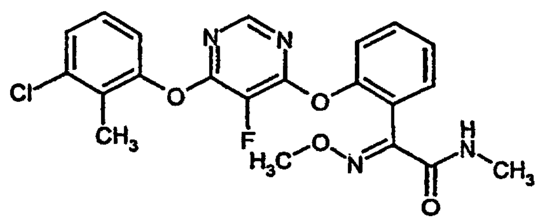 | 0,5 | 32 |
| Fenamidone (LVII) (56)<br>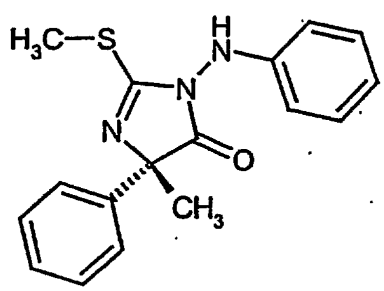 | 0,5 | 48 |

Erfindungsgemäße Mischung:

| | Mischungsverhältnis | Aufwandmenge an Wirkstoff in g/ha | tatsächlicher Wirkungsgrad | Erwartungswert, berechnet mit Colby-Formel |
|---|---|---|---|---|
| (I)<br>+<br>Fenamidone (LVII) (56) | 1:1 | 0,5<br>+<br>0,5 | 86 | 65 |

**Tabelle 5.18**

**Phytophthora-Test (Tomate) / protektiv**

| Wirkstoff<br>Bekannt: | Aufwandmenge an Wirkstoff in g/ha | % Wirkungsgrad |
|---|---|---|
| Verbindung der Formel (I)<br>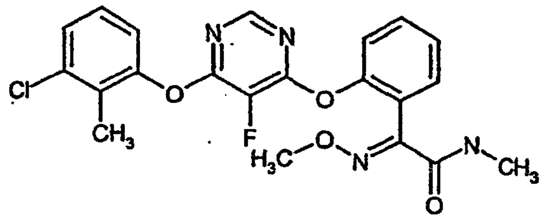 | 0,5 | 32 |
| Schwefel (LXIII) (62) | 25 | 0 |

Erfindungsgemäße Mischung:

| | Mischungsverhältnis | Aufwandmenge an Wirkstoff in g/ha | tatsächlicher Wirkungsgrad | Erwartungswert, berechnet mit Colby-Formel |
|---|---|---|---|---|
| (I)<br>+<br>Schwefel (LXIII) (62) | **1:50** | 0,5<br>+<br>25 | **52** | **32** |

**Tabelle 5.19**

**Phytophthora-Test (Tomate) / protektiv**

| Wirkstoff<br>Bekannt: | Aufwandmenge an Wirkstoff in g/ha | % Wirkungs-grad |
|---|---|---|
| Verbindung der Formel (I)<br>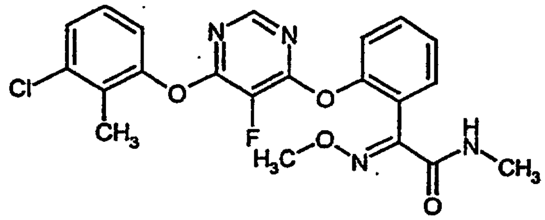 | 1 | 60 |
| Difenconazole (XXIX) (28)<br>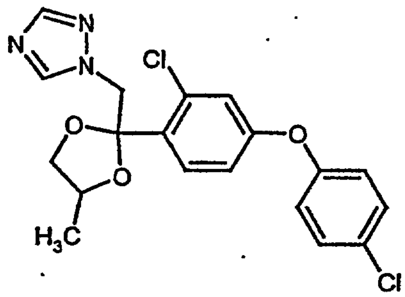 | 5 | 5 |

| Erfindungsgemäße Mischung: | Mischungs-verhältnis | Aufwand-menge an Wirkstoff in g/ha | tatsächlicher Wirkungs-grad | Erwartungs-wert, berechnet mit Colby-Formel |
|---|---|---|---|---|
| (I)<br>+<br>Difenconazole (XXIX) (28) | 1:5 | 1<br>+<br>5 | 79 | 62 |

**Tabelle 5.20**

**Phytophthora-Test (Tomate) / protektiv**

| Wirkstoff<br>Bekannt: | Aufwandmenge an Wirkstoff in g/ha | % Wirkungs-grad |
|---|---|---|
| Verbindung der Formel (I)<br>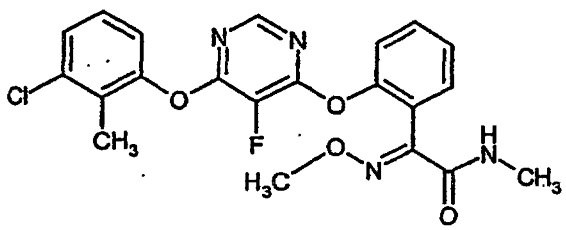 | 0,5 | 32 |
| Fluazinam (LIV) (53)<br>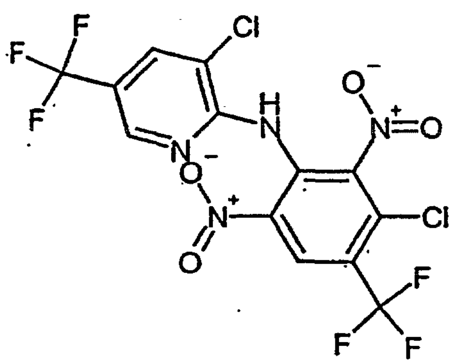 | 2,5 | 32 |

Erfindungsgemäße Mischung:

| | Mischungs-verhältnis | Aufwand-menge an Wirkstoff in g/ha | tatsächlicher Wirkungs-grad | Erwartungs-wert, berechnet mit Colby-Formel |
|---|---|---|---|---|
| (I)<br>+<br>Fluazinam (LIV) (53) | **1:5** | 0,5<br>+<br>2,5 | **76** | **54** |

**Tabellle 5.21**

**Phytophthora-Test (Tomate) / protektiv**

| Wirkstoff<br>Bekannt: | Aufwandmenge an Wirkstoff in g/ha | % Wirkungsgrad |
|---|---|---|
| Verbindung der Formel (I)<br>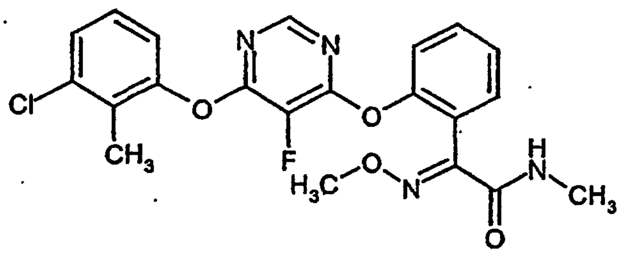 | 2 | 72 |
| Prochloraz (XXI) (20)<br>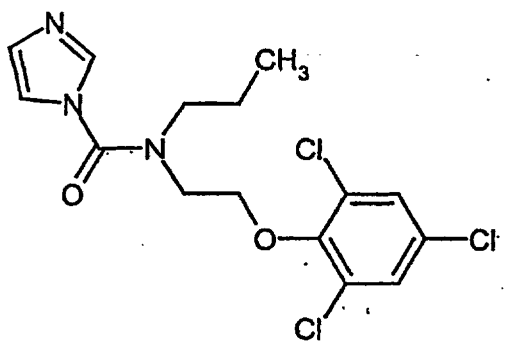 | 10 | 0 |

Erfindungsgemäße Mischung:

| | Mischungsverhältnis | Aufwandmenge an Wirkstoff in g/ha | tatsächlicher Wirkungsgrad | Erwartungswert, berechnet mit Colby-Formel |
|---|---|---|---|---|
| (I) + Prochloraz (XXI) (20) | 1:5 | 2 + 10 | 87 | 72 |

## Tabelle 5.22

**Phytophthora-Test (Tomate) / protektiv**

| Wirkstoff<br>Bekannt: | Aufwandmenge an Wirkstoff in g/ha | % Wirkungsgrad |
|---|---|---|
| Verbindung der Formel (I)<br>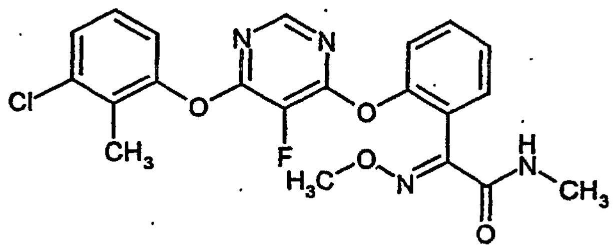 | 0,5 | 32 |
| Iprovalicarb (LI) (50)<br>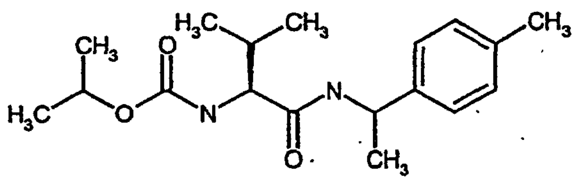 | 0,5 | 2 |

| Erfindungsgemäße Mischung: | Mischungsverhältnis | Aufwandmenge an Wirkstoff in g/ha | tatsächlicher Wirkungsgrad | Erwartungswert, berechnet mit Colby-Formel |
|---|---|---|---|---|
| (I)<br>+<br>Iprovalicarb (LI) (50) | 1:1 | 0,5<br>+<br>0,5 | 62 | 33 |

**Beispiel G**

**Sphaerotheca-Test (Gurke) / protektiv**

| | |
|---|---|
| Lösungsmittel | 24,5 Gewichtsteile Aceton<br>24,5 Gewichtsteile Dimethylacetamid |

(fortgesetzt)

| | |
|---|---|
| Emulgator | 1 Gewichtsteil Alkyl-Aryl-Polyglykolether |

Zur Herstellung einer zweckmäßigen Wirkstoffzubereitung vermischt man 1 Gewichtsteil Wirkstoff oder Wirkstoffkombination mit den angegebenen Mengen Lösungsmittel und Emulgator und verdünnt das Konzentrat mit Wasser auf die gewünschte Konzentration oder man verdünnt eine handelsübliche Formulierung von Wirkstoff oder Wirkstoffkombination mit Wasser auf die gewünschte Konzentration.

Zur Prüfung auf protektive Wirksamkeit werden junge Pflanzen mit der Wirkstoffzubereitung in der angegebenen Aufwandmenge besprüht. Nach Antrocknen des Spritzbelages werden die Pflanzen mit einer wässrigen Sporensuspension von ***Sphaerotheca fuliginea*** inokuliert. Die Pflanzen werden dann bei ca. 23°C und einer relativen Luftfeuchtigkeit von ca. 70 % im Gewächshaus aufgestellt.

10 Tage nach der Inokulation erfolgt die Auswertung. Dabei bedeutet 0 % ein Wirkungsgrad, der demjenigen der Kontrolle entspricht, während ein Wirkungsgrad von 100 % bedeutet, dass kein Befall beobachtet wird.

Die gute fungizide Wirkung der erfindungsgemäßen Wirkstoffkombinationen geht aus dem nachfolgenden Beispiel hervor. Während die einzelnen Wirkstoffe in der fungiziden Wirkung Schwächen aufweisen, zeigen die Kombinationen eine Wirkung, die über eine einfache Wirkungssummierung hinausgeht.

Ein synergistischer Effekt liegt bei Fungiziden immer dann vor, wenn die fungizide Wirkung der Wirkstoffkombinationen größer ist als die Summe der Wirkungen der einzelnen applizierten Wirkstoffe.

Die zu erwartende Wirkung für eine gegebene Kombination zweier Wirkstoffe kann nach S.R. Colby ("Calculating Synergistic and Antagonistic Responses of Herbicide Combinations", Weeds 15 (1967), 20-22) wie folgt berechnet werden:

Wenn

X den Wirkungsgrad beim Einsatz des Wirkstoffes A in einer Aufwandmenge von m g/ha bedeutet,

Y den Wirkungsgrad beim Einsatz des Wirkstoffes B in einer Aufwandmenge von n g/ha bedeutet und

E den Wirkungsgrad beim Einsatz der Wirkstoffe A und B in Aufwandmengen von m und n g/ha bedeutet,

dann ist

$$E = X + Y - \frac{X \times Y}{100}$$

Dabei wird der Wirkungsgrad in % ermittelt. Es bedeutet 0 % ein Wirkungsgrad, der demjenigen der Kontrolle entspricht, während ein Wirkungsgrad von 100 % bedeutet, dass kein Befall beobachtet wird.

Ist die tatsächliche fungizide Wirkung größer als berechnet, so ist die Kombination in ihrer Wirkung überadditiv, d.h. es liegt ein synergistischer Effekt vor. In diesem Fall muss der tatsächlich beobachtete Wirkungsgrad größer sein als der aus der oben angeführten Formel errechnete Wert für den erwarteten Wirkungsgrad (E).

Aus der nachfolgenden Tabelle geht eindeutig hervor, dass die gefundene Wirkung der erfindungsgemäßen Wirkstoffkombination größer ist als die berechnete, d.h., dass ein synergistischer Effekt vorliegt.

**Tabelle 6.1**

**Sphaerotheca-Test (Gurke) / protektiv**

| Wirkstoff<br>Bekannt: | Aufwandmenge an Wirkstoff in g/ha | % Wirkungsgrad |
|---|---|---|
| Verbindung der Formel (I)<br>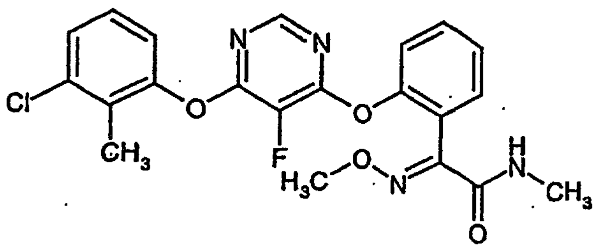 | 1 | 69 |
| Cyamidazosulfamid (LXXIV) (73)<br>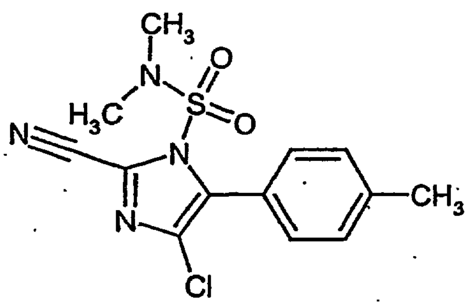 | 1 | 0 |

Erfindungsgemäße Mischung:

| | Mischungsverhältnis | Aufwandmenge an Wirkstoff in g/ha | tatsächlicher Wirkungsgrad | Erwartungswert, berechnet mit Colby-Formel |
|---|---|---|---|---|
| (I) + Cyamidazosulfamid (LXXIV) (73) | 1:1 | 1 + 1 | 80 | 69 |

**Tabelle 6.2**

**Sphaerotheca-Test (Gurke) / protektiv**

| Wirkstoff<br>Bekannt: | Aufwandmenge an Wirkstoff in g/ha | % Wirkungs-grad |
|---|---|---|
| Verbindung der Formel (I)<br>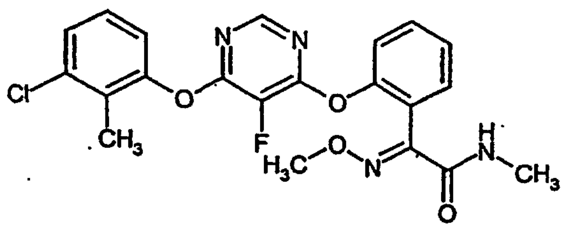 | 1 | 69 |
| (LXXXI) (70)<br>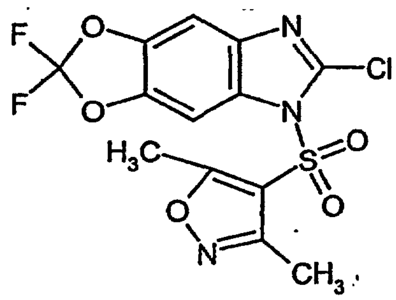 | 1 | 0 |

Erfindungsgemäße Mischung:

| | Mischungs-verhältnis | Aufwand-menge an Wirkstoff in g/ha | tatsächlicher Wirkungs-grad | Erwartungswert, berechnet mit Colby-Formel |
|---|---|---|---|---|
| (I)<br>+<br>(LXXI)(70) | 1:1 | 1<br>+<br>1 | 93 | 69 |

Tabelle 6.3

**Sphaerotheca-Test (Gurke) / protektiv**

| Wirkstoff<br>Bekannt: | Aufwandmenge an Wirkstoff in g/ha | % Wirkungsgrad |
|---|---|---|
| Verbindung der Formel (I)<br>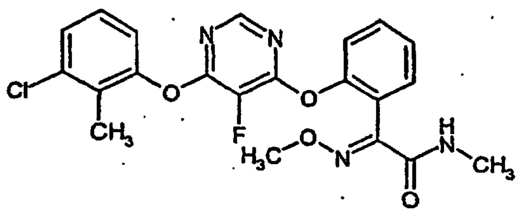 | 2 | 82 |
| Triadimefon (IX) (8)<br>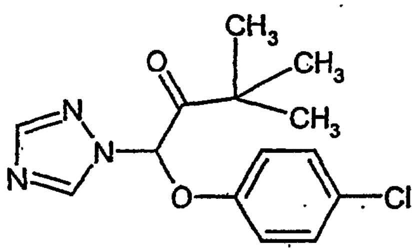 | 10 | 0 |

Erfindungsgemäße Mischung:

| | Mischungs-verhältnis | Aufwand-menge an Wirkstoff in g/ha | tatsächlicher Wirkungs-grad | Erwartungswert, berechnet mit Colby-Formel |
|---|---|---|---|---|
| (I)<br>+<br>Triadimefon (IX) (8) | 1:5 | 2<br>+<br>10 | 93 | 82 |

## Tabelle 6.4

**Sphaerotheca-Test (Gurke) / protektiv**

| Wirkstoff<br>Bekannt: | Aufwandmenge an Wirkstoff in g/ha | % Wirkungsgrad |
|---|---|---|
| Verbindung der Formel (I)<br>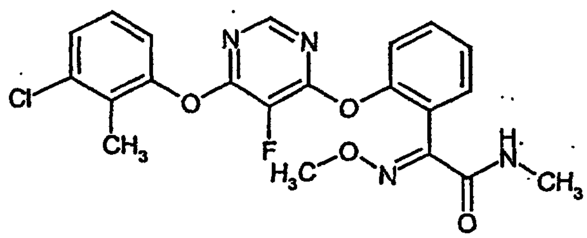 | 0,5 | 30 |
| Triadimenol (X) (9)<br>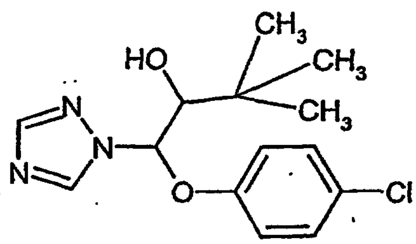 | 2,5 | 0 |

Erfindungsgemäße Mischung:

| | Mischungsverhältnis | Aufwandmenge an Wirkstoff in g/ha | tatsächlicher Wirkungsgrad | Erwartungswert, berechnet mit Colby-Formel |
|---|---|---|---|---|
| (I) + Triadimenol (X) (9) | 1:5 | 0,5 + 2,5 | 57 | 30 |

Tabelle 6.5

**Sphaerotheca-Test (Gurke) / protektiv**

| Wirkstoff<br>Bekannt: | Aufwandmenge an Wirkstoff in g/ha | % Wirkungs-grad |
|---|---|---|
| Verbindung der Formel (I)<br>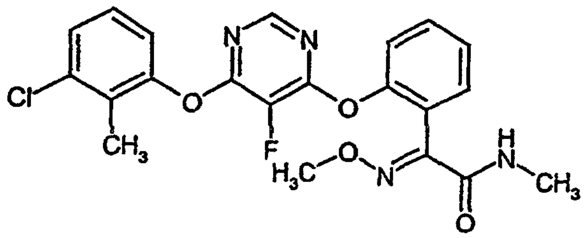 | 0,5 | 30 |
| Carbendazim (XXXI) (30)<br>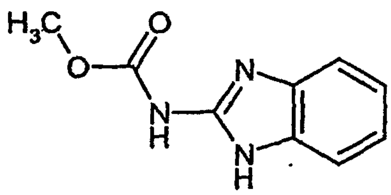 | 2,5 | 63 |

Erfindungsgemäße Mischung:

| | Mischungs-verhältnis | Aufwand-menge an Wirkstoff in g/ha | tatsächlicher Wirkungs-grad | Erwartungswert, berechnet mit Colby-Formel |
|---|---|---|---|---|
| (I) | | 0,5 | | |
| + | 1:5 | + | 95 | 74 |
| Carbendazim (XXXI) (30) | | 2,5 | | |

**Tabelle 6.6**

**Sphaerotheca-Test (Gurke) / protektiv**

| Wirkstoff<br>Bekannt: | Aufwandmenge an Wirkstoff in g/ha | % Wirkungs-grad |
|---|---|---|
| Verbindung der Formel (I)<br>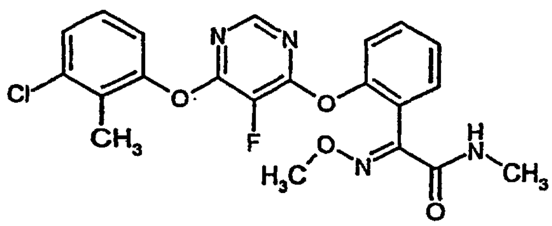 | 1 | 69 |
| Benomyl (LXXXIII) (30)<br>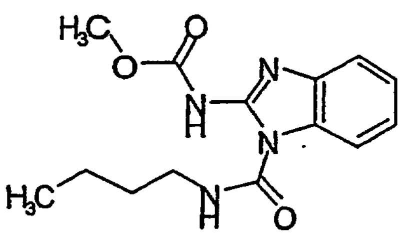 | 5 | 50 |

Erfindungsgemäße Mischung:

| | Mischungs-verhältnis | Aufwand-menge an Wirkstoff in g/ha | tatsächlicher Wirkungs-grad | Erwartungswert, berechnet mit Colby-Formel |
|---|---|---|---|---|
| (I)<br>+<br>Benomyl (LXXXIII) (82) | 1:5 | 1<br>+<br>5 | 95 | 85 |

## Tabelle 6.7

**Sphaerotheca-Test (Gurke) / protektiv**

| Wirkstoff<br>Bekannt: | Aufwandmenge an Wirkstoff in g/ha | % Wirkungs-grad |
|---|---|---|
| Verbindung der Formel (I)<br>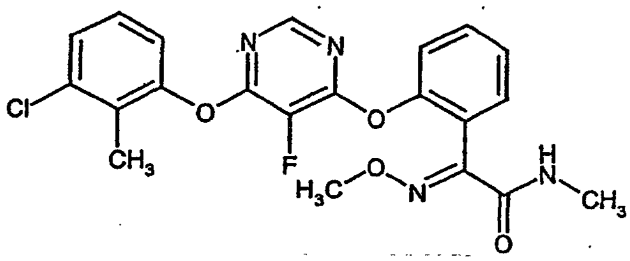 | 0,5 | 30 |
| (XIX) (18)<br>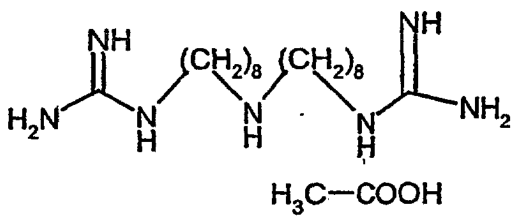 | 2,5 | 43 |

Erfindungsgemäße Mischung:

| | Mischungs-verhältnis | Aufwand-menge an Wirkstoff in g/ha | tatsächlicher Wirkungs-grad | Erwartungswert, berechnet mit Colby-Formel |
|---|---|---|---|---|
| (I)<br>+<br>(XIX) (18) | 1:5 | 0,5<br>+<br>2,5 | 97 | 60 |

Tabelle 6.8

**Sphaerotheca-Test (Gurke) / protektiv**

| Wirkstoff<br>Bekannt: | Aufwandmenge an Wirkstoff in g/ha | % Wirkungsgrad |
|---|---|---|
| Verbindung der Formel (I)<br>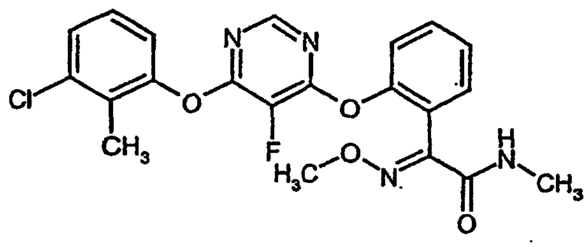 | 1 | 69 |
| Dimetomorph (XLV) (44)<br>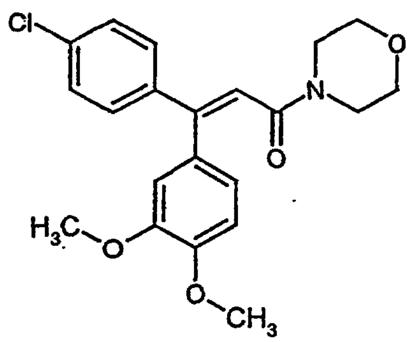 | 1 | 0 |

| Erfindungsgemäße Mischung: | Mischungsverhältnis | Aufwandmenge an Wirkstoff in g/ha | tatsächlicher Wirkungsgrad | Erwartungswert, berechnet mit Colby-Formel |
|---|---|---|---|---|
| (I) + Dimetomorph (XLV) (44) | 1:1 | 1 + 1 | 80 | 69 |

**Tabelle 6.9**

**Sphaerotheca-Test (Gurke) / protektiv**

| Wirkstoff<br>Bekannt: | Aufwandmenge an Wirkstoff in g/ha | % Wirkungsgrad |
|---|---|---|
| Verbindung der Formel (I)<br>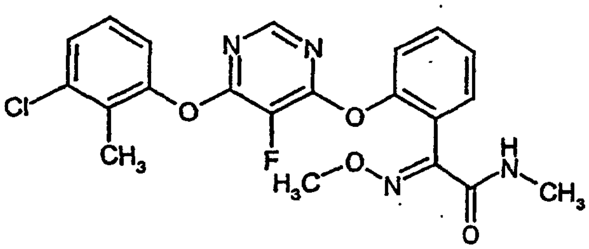 | 1 | 69 |
| Cymoxanil (XLVI) (45)<br>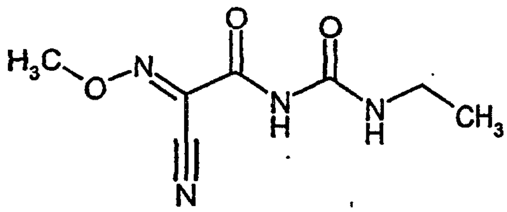 | 5 | 15 |

Erfindungsgemäße Mischung:

| | Mischungsverhältnis | Aufwandmenge an Wirkstoff in g/ha | tatsächlicher Wirkungsgrad | Erwartungswert, berechnet mit Colby-Formel |
|---|---|---|---|---|
| (I)<br>+<br>Cymoxanil (XLVI) (45) | 1:5 | 1<br>+<br>5 | 93 | 74 |

Tabelle 6.10

**Sphaerotheca-Test (Gurke) / protektiv**

| Wirkstoff<br>Bekannt: | Aufwandmenge an Wirkstoff in g/ha | % Wirkungsgrad |
|---|---|---|
| Verbindung der Formel (I)<br>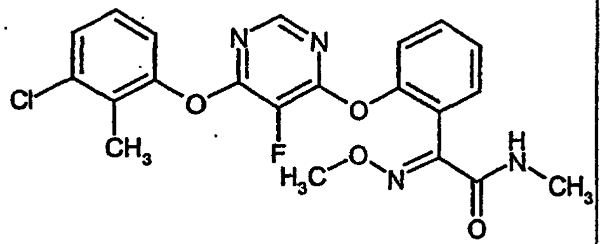 | 1 | 69 |
| Cyprodinil (XVIII) (17)<br>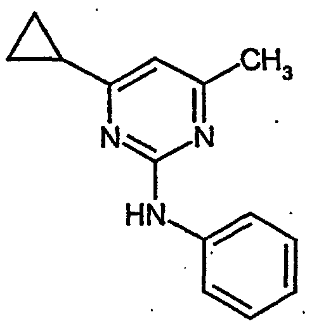 | 10 | 22 |

Erfindungsgemäße Mischung:

| | Mischungsverhältnis | Aufwandmenge an Wirkstoff in g/ha | tatsächlicher Wirkungsgrad | Erwartungswert, berechnet mit Colby-Formel |
|---|---|---|---|---|
| (I) + Cyprodinil (XVIII) (17) | 1:10 | 1 + 10 | 93 | 76 |

Tabelle 6.11

**Sphaerotheca-Test (Gurke) / protektiv**

| Wirkstoff Bekannt: | Aufwandmenge an Wirkstoff in g/ha | % Wirkungsgrad |
|---|---|---|
| Verbindung der Formel (I) 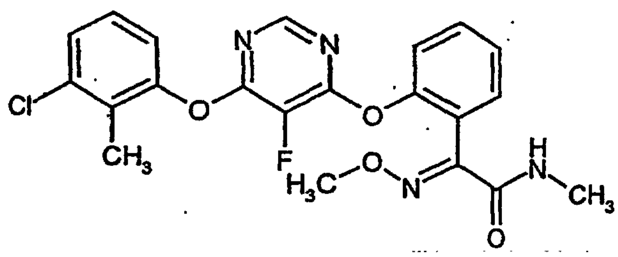 | 0,5 | 30 |
| Fenpiclonil (XXVIII) (27) 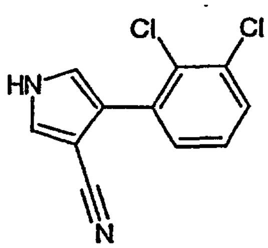 | 2,5 | 0 |

Erfindungsgemäße Mischung:

| | Mischungsverhältnis | Aufwandmenge an Wirkstoff in g/ha | tatsächlicher Wirkungsgrad | Erwartungswert, berechnet mit Colby-Formel |
|---|---|---|---|---|
| (I) + Fenpiclonil (XXVIII) (27) | 1:5 | 0,5 + 2,5 | 80 | 30 |

Tabelle 6.12

**Sphaerotheca-Test (Gurke) / protektiv**

| Wirkstoff<br>Bekannt: | Aufwandmenge an Wirkstoff in g/ha | % Wirkungsgrad |
|---|---|---|
| Verbindung der Formel (I)<br>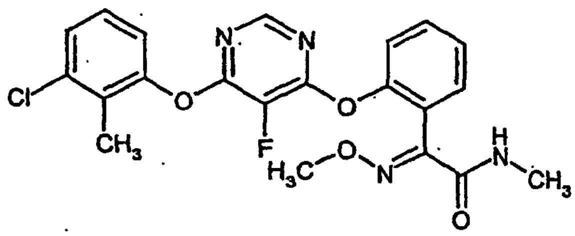 | 0,5 | 30 |
| Fludioxonil (XXX) (29)<br>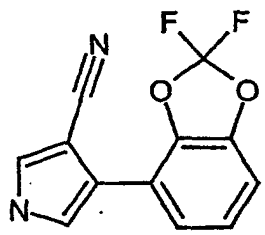 | 2,5 | 0 |

Erfindungsgemäße Mischung:

| | Mischungsverhältnis | Aufwandmenge an Wirkstoff in g/ha | tatsächlicher Wirkungsgrad | Erwartungswert, berechnet mit Colby-Formel |
|---|---|---|---|---|
| (I)<br>+<br>Fludioxonil (XXX) (29) | 1:5 | 0,5<br>+<br>2,5 | 77 | 30 |

## Tabelle 6.13

**Sphaerotheca-Test (Gurke) / protektiv**

| Wirkstoff<br>Bekannt: | Aufwandmenge an Wirkstoff in g/ha | % Wirkungsgrad |
|---|---|---|
| Verbindung der Formel (I)<br>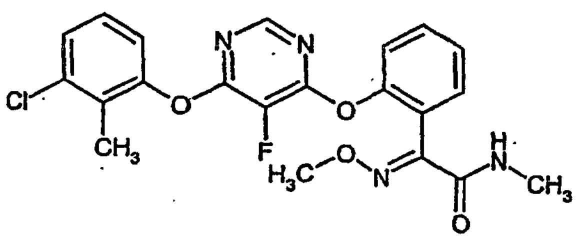 | 1 | 69 |
| Fosetyl-Al (XLVII) (46)<br>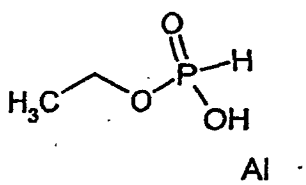 | 10 | 0 |

Erfindungsgemäße Mischung:

| | Mischungsverhältnis | Aufwandmenge an Wirkstoff in g/ha | tatsächlicher Wirkungsgrad | Erwartungswert, berechnet mit Colby-Formel |
|---|---|---|---|---|
| (I)<br>+<br>Fosetyl-Al (XLVII) (46) | 1:10 | 1<br>+<br>10 | 87 | 69 |

Tabelle 6.14

**Sphaerotheca-Test (Gurke) / protektiv**

| Wirkstoff<br>Bekannt: | Aufwandmenge an Wirkstoff in g/ha | % Wirkungsgrad |
|---|---|---|
| Verbindung der Formel (I)<br>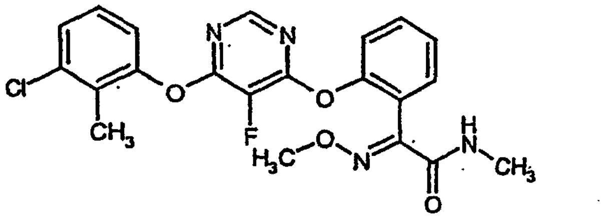 | 2 | 82 |
| Kresoxim-methyl (XVI)(15)<br>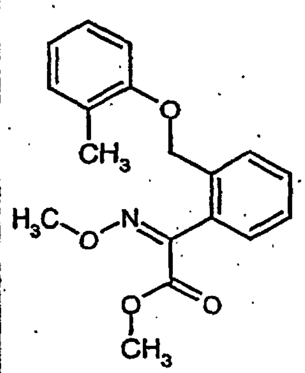 | 2 | 0 |

Erfindungsgemäße Mischung:

| | Mischungsverhältnis | Aufwandmenge an Wirkstoff in g/ha | tatsächlicher Wirkungsgrad | Erwartungswert, berechnet mit Colby-Formel |
|---|---|---|---|---|
| (I)<br>+<br>Kresoxim-methyl (XVI) (15) | 1:1 | 2<br>+<br>2 | 93 | 82 |

Tabelle 6.15

**Sphaerotheca-Test (Gurke) / protektiv**

| Wirkstoff<br>Bekannt: | Aufwandmenge an Wirkstoff in g/ha | % Wirkungsgrad |
|---|---|---|
| Verbindung der Formel (I)<br>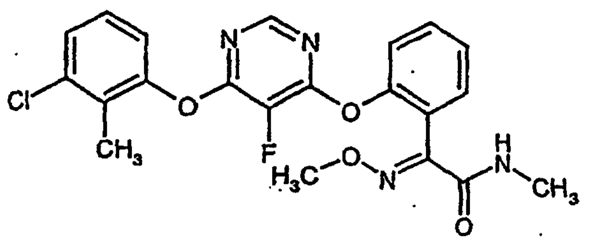 | 1 | 69 |
| Azoxystrobin (XVII) (16)<br>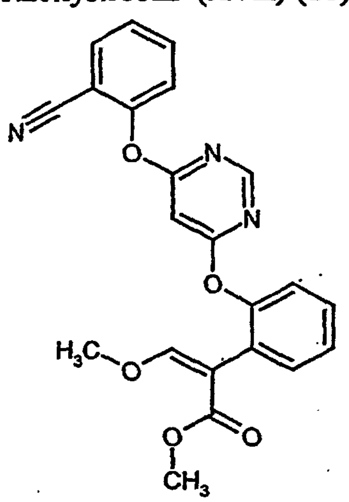 | 1 | 37 |

Erfindungsgemäße Mischung:

| | Mischungsverhältnis | Aufwandmenge an Wirkstoff in g/ha | tatsächlicher Wirkungsgrad | Erwartungswert, berechnet mit Colby-Formel |
|---|---|---|---|---|
| (I) + Azoxystrobin (XVII) (16) | 1:1 | 1 + 1 | 92 | 80 |

## Tabelle 6.16

**Sphaerotheca-Test (Gurke) / protektiv**

| Wirkstoff<br>Bekannt: | Aufwandmenge an Wirkstoff in g/ha | % Wirkungs-grad |
|---|---|---|
| Verbindung der Formel (I)<br>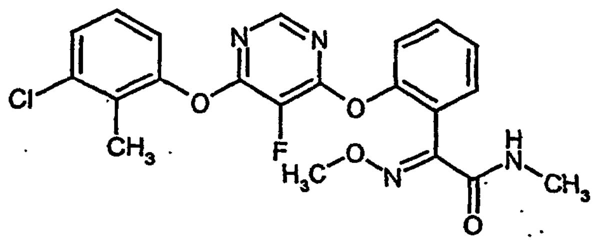 | 2 | 63 |
| Trifloxystrobin (LXXVI) (75)<br>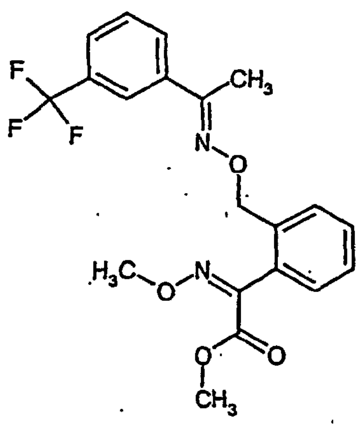 | 2 | 43 |

Erfindungsgemäße Mischung:

| | Mischungs-verhältnis | Aufwand-menge an Wirkstoff in g/ha | tatsächlicher Wirkungs-grad | Erwartungswert, berechnet mit Colby-Formel |
|---|---|---|---|---|
| (I) + Trifloxystrobin (LXXVI) (75) | 1:1 | 2 + 2 | 97 | 79 |

**Tabelle 6.17**

**Sphaerotheca-Test (Gurke) / protektiv**

| Wirkstoff<br>Bekannt: | Aufwandmenge an Wirkstoff in g/ha | % Wirkungs-grad |
|---|---|---|
| Verbindung der Formel (I)<br>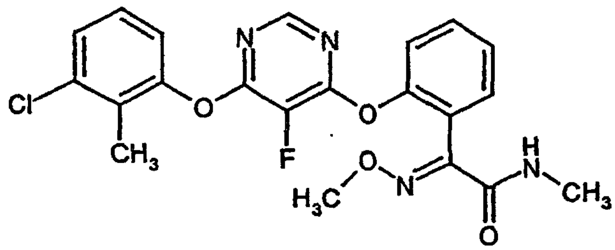 | 2 | 63 |
| (LXXII) (71)<br>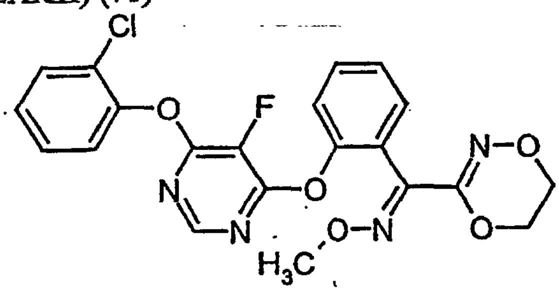 | 2 | 43 |

Erfindungsgemäße Mischung:

| | Mischungs-verhältnis | Aufwand-menge an Wirkstoff in g/ha | tatsächlicher Wirkungs-grad | Erwartungswert, berechnet mit Colby-Formel |
|---|---|---|---|---|
| (I)<br>+<br>(LXXII) (71) | 1:1 | 2<br>+<br>2 | 92 | 79 |

Tabelle 6.18

**Sphaerotheca-Test (Gurke) / protektiv**

| Wirkstoff<br>Bekannt: | Aufwandmenge an Wirkstoff in g/ha | % Wirkungsgrad |
|---|---|---|
| Verbindung der Formel (I)<br>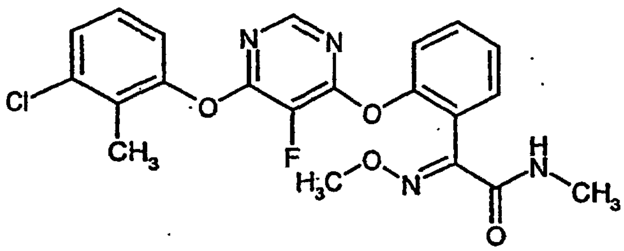 | 2 | 63 |
| Picoxystrobin (LXXXIII) (82)<br>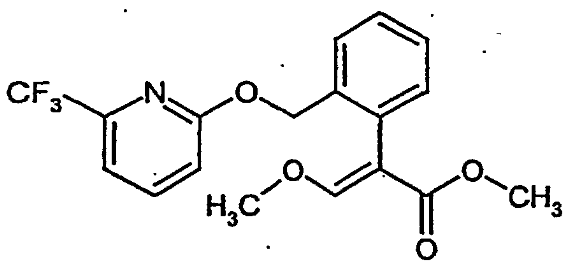 | 2 | 0 |

Erfindungsgemäße Mischung:

| | Mischungsverhältnis | Aufwandmenge an Wirkstoff in g/ha | tatsächlicher Wirkungsgrad | Erwartungswert, berechnet mit Colby-Formel |
|---|---|---|---|---|
| (I)<br>+<br>Picoxystrobin (LXXXIII) (82) | 1:1 | 2<br>+<br>2 | 90 | 63 |

## Tabelle 6.19

**Sphaerotheca-Test (Gurke) / protektiv**

| Wirkstoff<br>Bekannt: | Aufwandmenge an Wirkstoff in g/ha | % Wirkungsgrad |
|---|---|---|
| Verbindung der Formel (I)<br>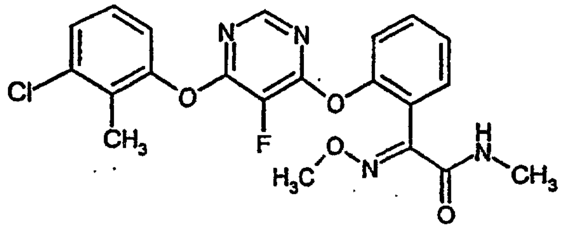 | 1 | 69 |
| Fenhexamid (LII) (51)<br>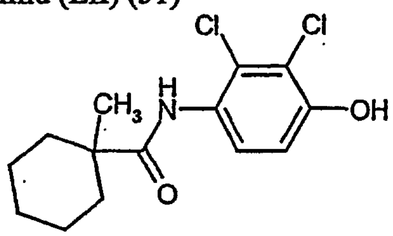 | 5 | 10 |

| Erfindungsgemäße Mischung: | Mischungsverhältnis | Aufwandmenge an Wirkstoff in g/ha | tatsächlicher Wirkungsgrad | Erwartungswert, berechnet mit Colby-Formel |
|---|---|---|---|---|
| (I)<br>+<br>Fenhexamid (LII) (51) | 1:5 | 1<br>+<br>5 | 97 | 72 |

Tabelle 6.20

**Sphaerotheca-Test (Gurke) / protektiv**

| Wirkstoff<br>Bekannt: | Aufwandmenge an Wirkstoff in g/ha | % Wirkungsgrad |
|---|---|---|
| Verbindung der Formel (I)<br>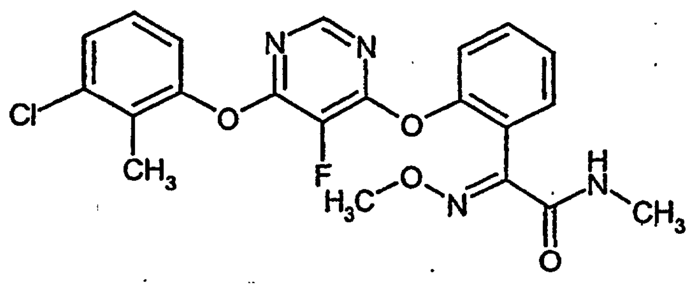 | 1 | 69 |
| Carpropamid (LIII) (52)<br>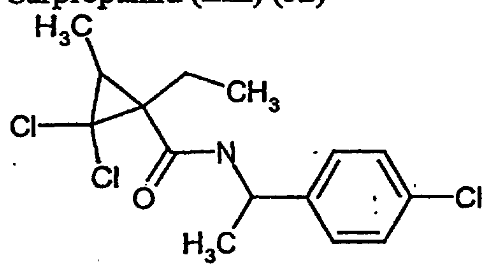 | 5 | 10 |

| Erfindungsgemäße Mischung: | Mischungsverhältnis | Aufwandmenge an Wirkstoff in g/ha | tatsächlicher Wirkungsgrad | Erwartungswert, berechnet mit Colby-Formel |
|---|---|---|---|---|
| (I)<br>+<br>Carpropamid (LIII) (52) | 1:5 | 1<br>+<br>5 | 93 | 72 |

## Tabelle 6.21

**Sphaerotheca-Test (Gurke) / protektiv**

| Wirkstoff<br>Bekannt: | Aufwandmenge an Wirkstoff in g/ha | % Wirkungsgrad |
|---|---|---|
| Verbindung der Formel (I)<br>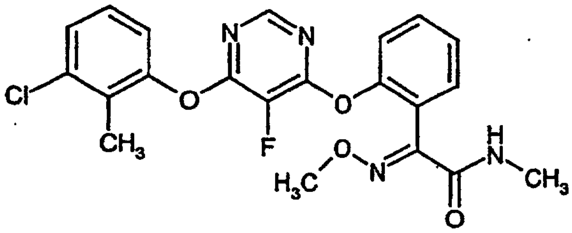 | 1 | 69 |
| Kupferoxychlorid (LXIV) (63) | 50 | 11 |

| Erfindungsgemäße Mischung: | Mischungsverhältnis | Aufwandmenge an Wirkstoff in g/ha | tatsächlicher Wirkungsgrad | Erwartungswert, berechnet mit Colby-Formel |
|---|---|---|---|---|
| (I)<br>+<br>Kupferoxychlorid (LXIV) (63) | 1:50 | 1<br>+<br>50 | 93 | 72 |

## Tabelle 6.22

**Sphaerotheca-Test (Gurke) / protektiv**

| Wirkstoff<br>Bekannt: | Aufwandmenge an Wirkstoff in g/ha | % Wirkungsgrad |
|---|---|---|
| Verbindung der Formel (I)<br>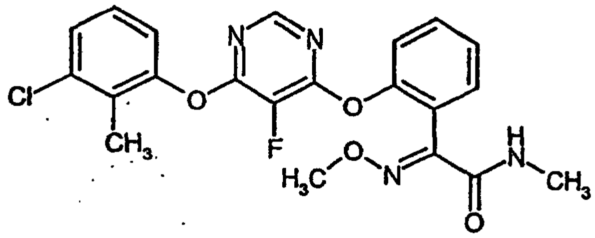 | 1 | 69 |
| Spiroxamin (II) (1)<br>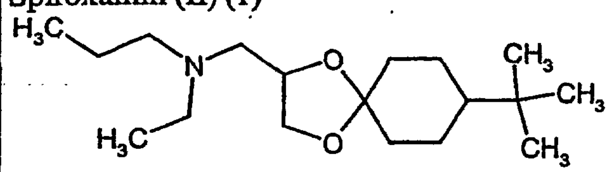 | 5 | 0 |

Erfindungsgemäße Mischung:

| | Mischungsverhältnis | Aufwandmenge an Wirkstoff in g/ha | tatsächlicher Wirkungsgrad | Erwartungswert, berechnet mit Colby-Formel |
|---|---|---|---|---|
| (I) + Spiroxamin (II) (1) | 1:5 | 1 + 5 | 97 | 69 |

**Tabelle 6.23**

**Sphaerotheca-Test (Gurke) / protektiv**

| Wirkstoff<br>Bekannt: | Aufwandmenge an Wirkstoff in g/ha | % Wirkungsgrad |
|---|---|---|
| Verbindung der Formel (I)<br>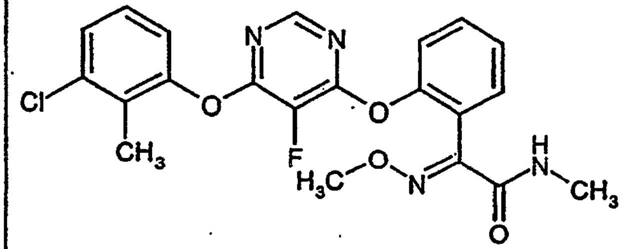 | 1 | 69 |
| Mepanipyrim (L) (49)<br>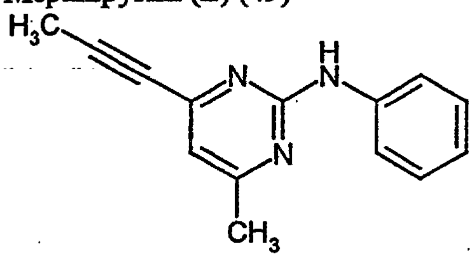 | 10 | 11 |

Erfindungsgemäße Mischung:

| | Mischungsverhältnis | Aufwandmenge an Wirkstoff in g/ha | tatsächlicher Wirkungsgrad | Erwartungswert, berechnet mit Colby-Formel |
|---|---|---|---|---|
| (I) + Mepanipyrim (L) (49) | 1:10 | 1 + 10 | 94 | 72 |

**Tabelle 6.24**

**Sphaerotheca-Test (Gurke) / protektiv**

| Wirkstoff Bekannt: | Aufwandmenge an Wirkstoff in g/ha | % Wirkungsgrad |
|---|---|---|
| Verbindung der Formel (I) 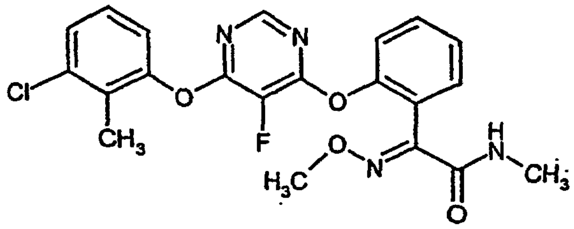 | 1 | 69 |
| Pencycuron (XXXVIII) (37) 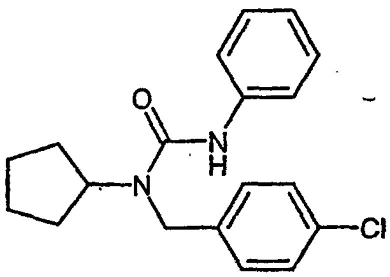 | 5 | 30 |

Erfindungsgemäße Mischung:

| | Mischungsverhältnis | Aufwandmenge an Wirkstoff in g/ha | tatsächlicher Wirkungsgrad | Erwartungswert, berechnet mit Colby-Formel |
|---|---|---|---|---|
| (I) + Pencycuron (XXXVIII)(37) | 1:5 | 1 + 5 | 93 | 78 |

Tabelle 6.25

**Sphaerotheca-Test (Gurke) / protektiv**

| Wirkstoff<br>Bekannt: | Aufwandmenge an Wirkstoff in g/ha | % Wirkungsgrad |
|---|---|---|
| Verbindung der Formel (I)<br>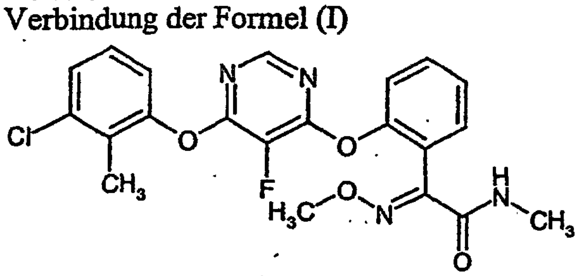 | 1 | 69 |
| Procymidone (XLII) (41)<br>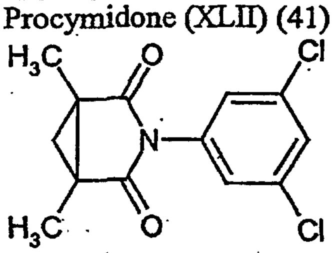 | 5 | 0 |

| Erfindungsgemäße Mischung: | Mischungsverhältnis | Aufwandmenge an Wirkstoff in g/ha | tatsächlicher Wirkungsgrad | Erwartungswert, berechnet mit Colby-Formel |
|---|---|---|---|---|
| (I)<br>+<br>Procymidone (XLII) (41) | 1:5 | 1<br>+<br>5 | 92 | 69 |

**Tabelle 6.26**

**Sphaerotheca-Test (Gurke) / protektiv**

| Wirkstoff<br>Bekannt: | Aufwandmenge an Wirkstoff in g/ha | % Wirkungsgrad |
|---|---|---|
| Verbindung der Formel (I)<br>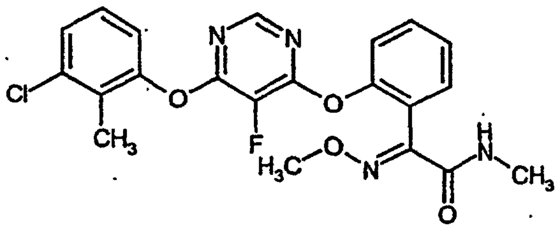 | 0,5 | 30 |
| Pyrimethanil (XLIX)(48)<br>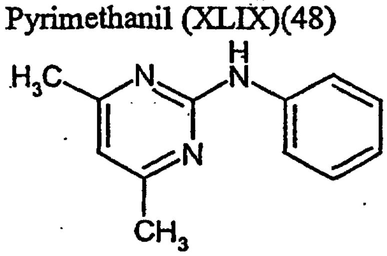 | 5 | 11 |

| Erfindungsgemäße Mischung: | Mischungsverhältnis | Aufwandmenge an Wirkstoff in g/ha | tatsächlicher Wirkungsgrad | Erwartungswert, berechnet mit Colby-Formel |
|---|---|---|---|---|
| (I)<br>+<br>Pyrimethanil (XLIX)(48) | 1:10 | 0,5<br>+<br>5 | 85 | 38 |

**Tabelle 6.27**

**Sphaerotheca-Test (Gurke) / protektiv**

| Wirkstoff<br>Bekannt: | Aufwandmenge an Wirkstoff in g/ha | % Wirkungs-grad |
|---|---|---|
| Verbindung der Formel (I)<br>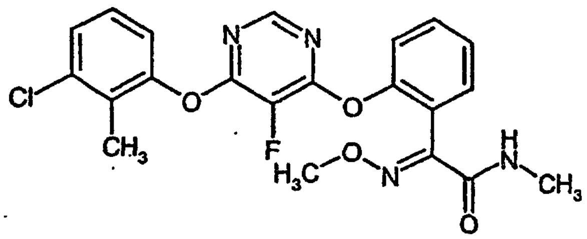 | 1 | 69 |
| Zoxamide (LXXIII)(72)<br>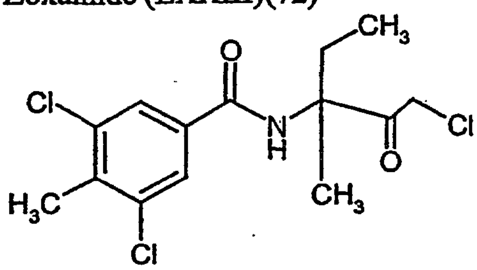 | 1 | 0 |

| Erfindungsgemäße Mischung: | Mischungs-verhältnis | Aufwand-menge an Wirkstoff in g/ha | tatsächlicher Wirkungs-grad | Erwartungswert, berechnet mit Colby-Formel |
|---|---|---|---|---|
| (I)<br>+<br>Zoxamide (LXXIII) (72) | 1:1 | 1<br>+<br>1 | 88 | 69 |

Tabelle 6.28

**Sphaerotheca-Test (Gurke) / protektiv**

| Wirkstoff<br>Bekannt: | Aufwandmenge an Wirkstoff in g/ha | % Wirkungsgrad |
|---|---|---|
| Verbindung der Formel (I)<br>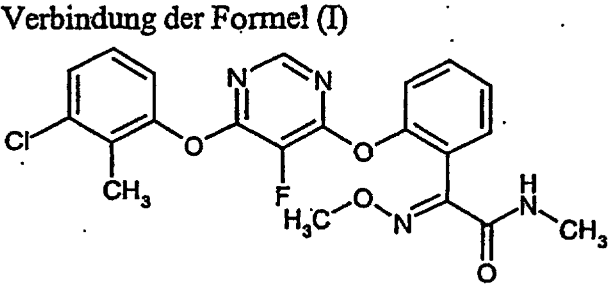 | 1 | 69 |
| Metalaxyl (XXVII)(26)<br>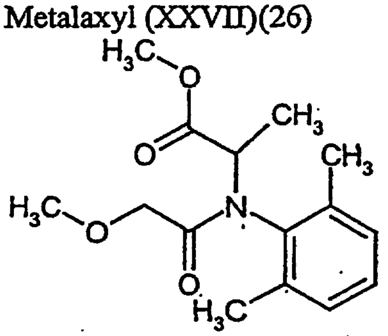 | 1 | 11 |

Erfindungsgemäße Mischung:

| | Mischungsverhältnis | Aufwandmenge an Wirkstoff in g/ha | tatsächlicher Wirkungsgrad | Erwartungswert, berechnet mit Colby-Formel |
|---|---|---|---|---|
| (I)<br>+<br>Metalaxyl (XXVII)(26) | 1:1 | 1<br>+<br>1 | 94 | 72 |

Tabelle 6.29

**Sphaerotheca-Test (Gurke) / protektiv**

| Wirkstoff<br>Bekannt: | Aufwandmenge an Wirkstoff in g/ha | % Wirkungsgrad |
|---|---|---|
| Verbindung der Formel (I)<br>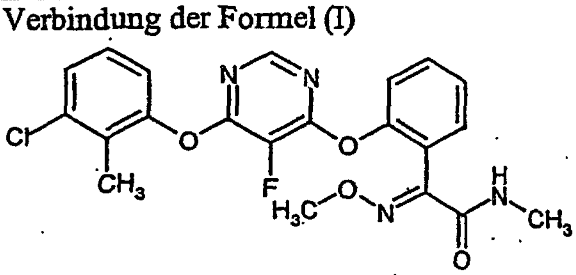 | 1 | 69 |
| Iprodione (LXV) (64)<br>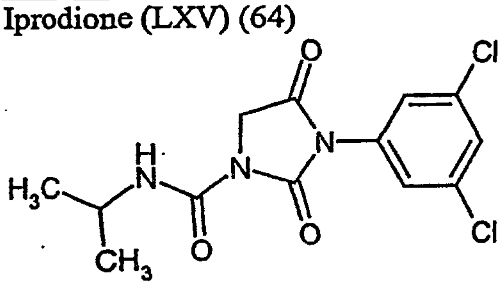 | 5 | 0 |

Erfindungsgemäße Mischung:

| | Mischungsverhältnis | Aufwandmenge an Wirkstoff in g/ha | tatsächlicher Wirkungsgrad | Erwartungswert, berechnet mit Colby-Formel |
|---|---|---|---|---|
| (I)<br>+<br>Iprodione (LXV) (64) | 1:5 | 1<br>+<br>5 | 87 | 69 |

Tabelle 6.30

**Sphaerotheca-Test (Gurke) / protektiv**

| Wirkstoff<br>Bekannt: | Aufwandmenge an Wirkstoff in g/ha | % Wirkungsgrad |
|---|---|---|
| Verbindung der Formel (I)<br>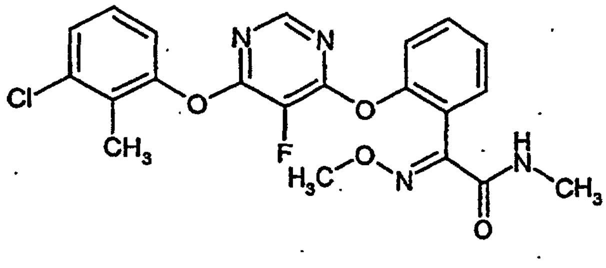 | 1 | 69 |
| Vinclozolin (LXVI) (65)<br>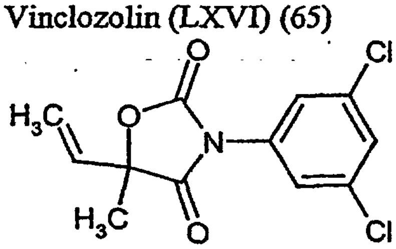 | 5 | 10 |

Erfindungsgemäße Mischung:

| | Mischungsverhältnis | Aufwandmenge an Wirkstoff in g/ha | tatsächlicher Wirkungsgrad | Erwartungswert, berechnet mit Colby-Formel |
|---|---|---|---|---|
| (I)<br>+<br>Vinclozolin (LXVI) (65) | 1:5 | 1<br>+<br>5 | 95 | 72 |

## Tabelle 6.31

**Sphaerotheca-Test (Gurke) / protektiv**

| Wirkstoff<br>Bekannt: | Aufwandmenge an Wirkstoff in g/ha | % Wirkungsgrad |
|---|---|---|
| Verbindung der Formel (I)<br>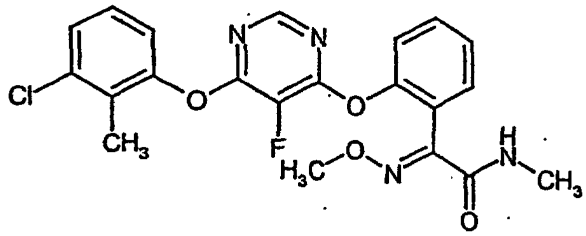 | 0,5 | 30 |
| Fenamidone (LVII)(56)<br>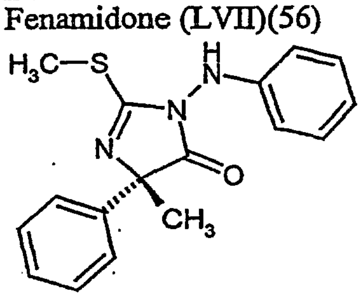 | 0,5 | 0 |

| Erfindungsgemäße Mischung: | Mischungsverhältnis | Aufwandmenge an Wirkstoff in g/ha | tatsächlicher Wirkungsgrad | Erwartungswert, berechnet mit Colby-Formel |
|---|---|---|---|---|
| (I) + Fenamidone(LVII) (56) | 1:1 | 0,5 + 0,5 | 60 | 30 |

Tabelle 6.32

**Sphaerotheca-Test (Gurke) / protektiv**

| Wirkstoff<br>Bekannt: | Aufwandmenge an Wirkstoff in g/ha | % Wirkungsgrad |
|---|---|---|
| Verbindung der Formel (I)<br>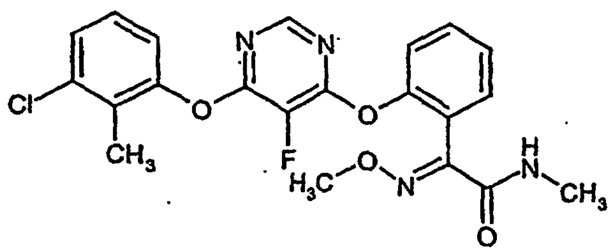 | 0,5 | 30 |
| Schwefel (LXIII)(62) | 25 | 0 |

| Erfindungsgemäße Mischung: | Mischungsverhältnis | Aufwandmenge an Wirkstoff in g/ha | tatsächlicher Wirkungsgrad | Erwartungswert, berechnet mit Colby-Formel |
|---|---|---|---|---|
| (I)<br>+<br>Schwefel (LXIII)(62) | 1:50 | 0,5<br>+<br>25 | 67 | 30 |

**Tabelle 6.33**

**Sphaerotheca-Test (Gurke) / protektiv**

| Wirkstoff<br>Bekannt: | Aufwandmenge an Wirkstoff in g/ha | % Wirkungsgrad |
|---|---|---|
| Verbindung der Formel (I)<br>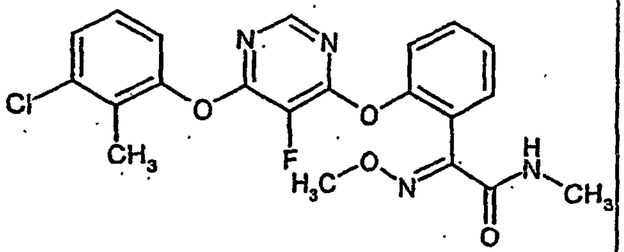 | 1 | 69 |
| Difenoconazole (XXXIX) (28)<br>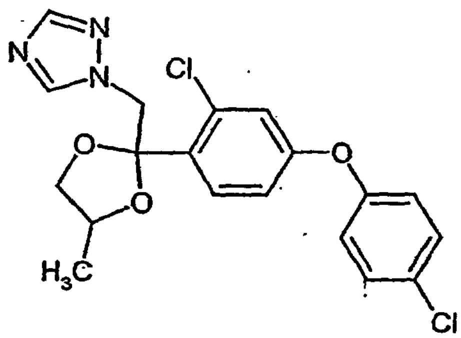 | 5 | 14 |

| Erfindungsgemäße Mischung: | Mischungsverhältnis | Aufwandmenge an Wirkstoff in g/ha | tatsächlicher Wirkungsgrad | Erwartungswert, berechnet mit Colby-Formel |
|---|---|---|---|---|
| (I)<br>+<br>Difenoconazole (XXXIX) (28) | 1:5 | 1<br>+<br>5 | 86 | 73 |

## Tabelle 6.34

### Sphaerotheca-Test (Gurke) / protektiv

| Wirkstoff<br>Bekannt: | Aufwandmenge an Wirkstoff in g/ha | % Wirkungsgrad |
|---|---|---|
| Verbindungen der Formel (I)<br>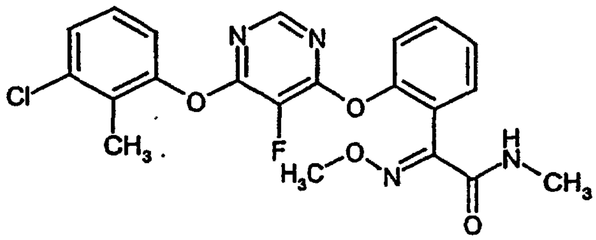 | 0,5 | 30 |
| Fluazinam (LIV) (53)<br>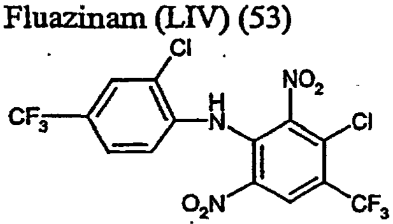 | 2,5 | 0 |

Erfindungsgemäße Mischung:

| | Mischungsverhältnis | Aufwandmenge an Wirkstoff in g/ha | tatsächlicher Wirkungsgrad | Erwartungswert, berechnet mit Colby-Formel |
|---|---|---|---|---|
| (I) + Fluazinam (LIV) (53) | 1:5 | 0,5 + 2,5 | 60 | 30 |

**Tabelle 6.35**

**Sphaerotheca-Test (Gurke) / protektiv**

| Wirkstoff<br>Bekannt: | Aufwandmenge an Wirkstoff in g/ha | % Wirkungsgrad |
|---|---|---|
| Verbindungen der Formel (I)<br>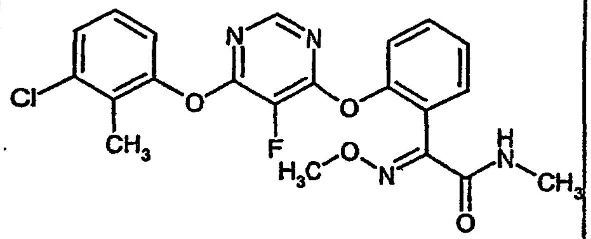 | 2 | 82 |
| Iprovalicarb (LI) (50)<br>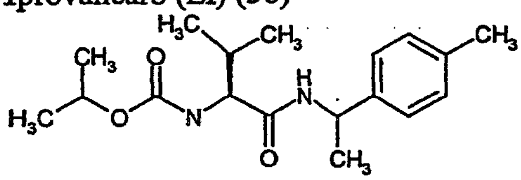 | 2 | 0 |

**Erfindungsgemäße Mischung:**

| | Mischungsverhältnis | Aufwandmenge an Wirkstoff in g/ha | tatsächlicher Wirkungsgrad | Erwartungswert, berechnet mit Colby-Formel |
|---|---|---|---|---|
| (I) + Iprovalicarb (LI) (50) | 1:1 | 2 + 2 | 98 | 82 |

Tabelle 6.36

**Sphaerotheca-Test (Gurke) / protektiv**

| Wirkstoff<br>Bekannt: | Aufwandmenge an Wirkstoff in g/ha | % Wirkungs-grad |
|---|---|---|
| Verbindungen der Formel (I)<br>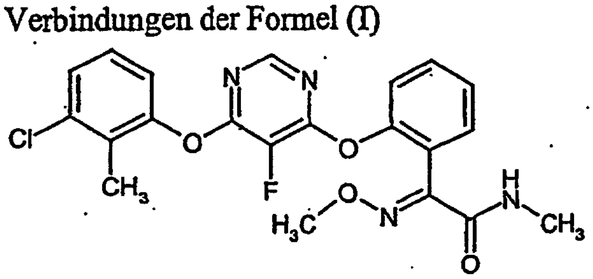 | 2 | 50 |
| Chlorothalonil (VIII) (7)<br>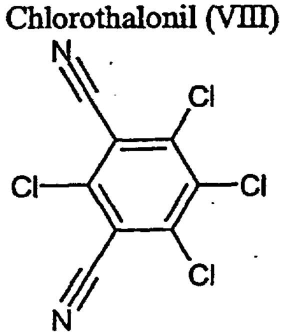 | 40 | 0 |

| Erfindungsgemäße Mischung: | Mischungs-verhältnis | Aufwand-menge an Wirkstoff in g/ha | tatsächlicher Wirkungs-grad | Erwartungswert, berechnet mit Colby-Formel |
|---|---|---|---|---|
| (I) + Chlorothalonil (VIII) (7) | 1:20 | 2 + 40 | 63 | 50 |

## Tabelle 6.37

**Sphaerotheca-Test (Gurke) / protektiv**

| Wirkstoff<br>Bekannt: | Aufwandmenge an Wirkstoff in g/ha | % Wirkungs-grad |
|---|---|---|
| Verbindung der Formel (I)<br>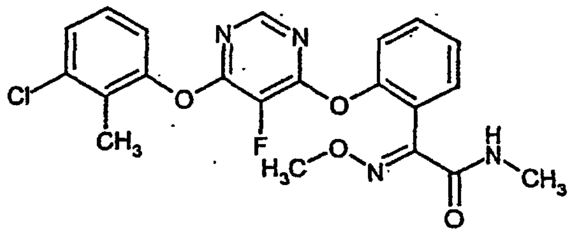 | 2 | 50 |
| Diclofluanid (XXV) (24)<br>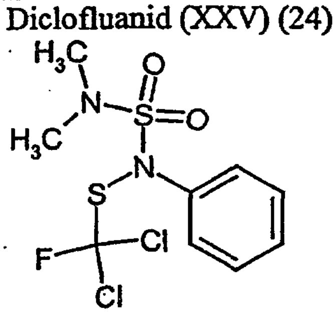 | 40 | 0 |

Erfindungsgemäße Mischung:

| | Mischungs-verhältnis | Aufwand-menge an Wirkstoff in g/ha | tatsächlicher Wirkungs-grad | Erwartungswert, berechnet mit Colby-Formel |
|---|---|---|---|---|
| (I)<br>+<br>Diclofluanid (XXV) (24) | 1:20 | 2<br>+<br>40 | 63 | 50 |

## Tabelle 6.38

**Sphaerotheca-Test (Gurke) / protektiv**

| Wirkstoff<br>Bekannt: | Aufwandmenge an Wirkstoff in g/ha | % Wirkungsgrad |
|---|---|---|
| Verbindung der Formel (I)<br>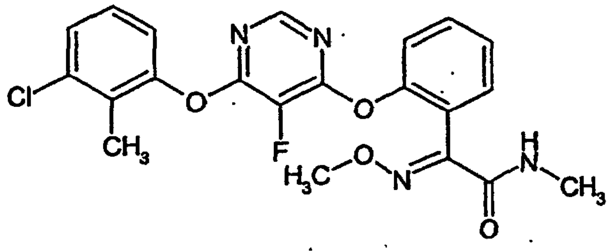 | 2 | 50 |
| Tolylfluanid (XXVI) (25)<br>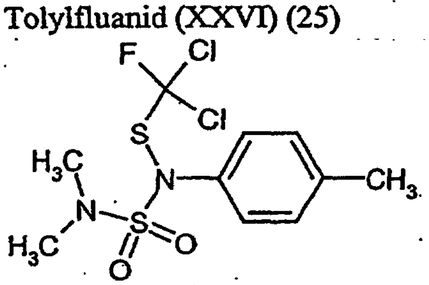 | 40 | 0 |

Erfindungsgemäße Mischung:

| | Mischungsverhältnis | Aufwandmenge an Wirkstoff in g/ha | tatsächlicher Wirkungsgrad | Erwartungswert, berechnet mit Colby-Formel |
|---|---|---|---|---|
| (I)<br>+<br>Tolylfluanid (XXVI) (25) | 1:20 | 2<br>+<br>40 | 70 | 50 |

## Tabelle 6.39

**Sphaerotheca-Test (Gurke) / protektiv**

| Wirkstoff<br>Bekannt: | Aufwandmenge an Wirkstoff in g/ha | % Wirkungsgrad |
|---|---|---|
| Verbindung der Formel (I)<br>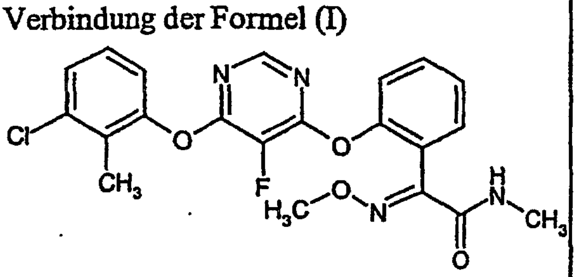 | 2 | 50 |
| Propineb (XLI) (40)<br>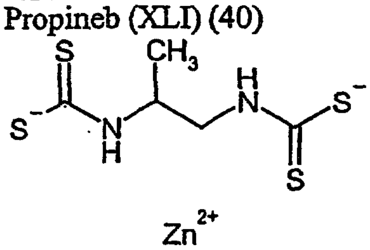 | 40 | 0 |

Erfindungsgemäße Mischung:

| | Mischungsverhältnis | Aufwandmenge an Wirkstoff in g/ha | tatsächlicher Wirkungsgrad | Erwartungswert, berechnet mit Colby-Formel |
|---|---|---|---|---|
| (I) + Propineb (XLI) (40) | **1:20** | 2 + 40 | 73 | **50** |

**Tabelle 6.40**

**Sphaerotheca-Test (Gurke) / protektiv**

| Wirkstoff<br>Bekannt: | Aufwandmenge an Wirkstoff in g/ha | % Wirkungsgrad |
|---|---|---|
| Verbindung der Formel (I)<br>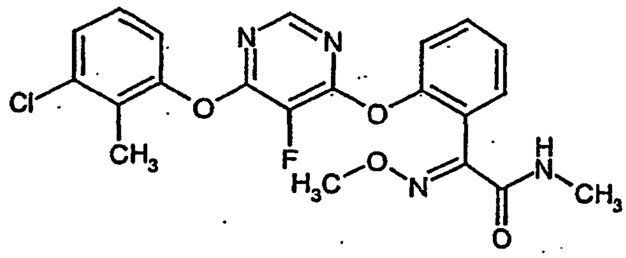 | 2 | 50 |
| Folpet (XLIV) (43)<br>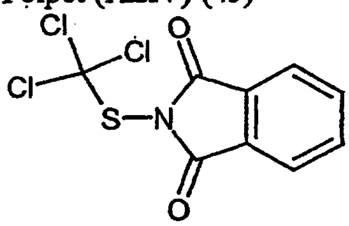 | 40 | 0 |

| Erfindungsgemäße Mischung: | Mischungsverhältnis | Aufwandmenge an Wirkstoff in g/ha | tatsächlicher Wirkungsgrad | Erwartungswert, berechnet mit Colby-Formel |
|---|---|---|---|---|
| (I)<br>+<br>Folpet (XLIV) (43) | 1:20 | 2<br>+<br>40 | 80 | 50 |

**Tabelle 6.41**

**Sphaerotheca-Test (Gurke) / protektiv**

| Wirkstoff<br>Bekannt: | Aufwandmenge an Wirkstoff in g/ha | % Wirkungsgrad |
|---|---|---|
| Verbindung der Formel (I)<br>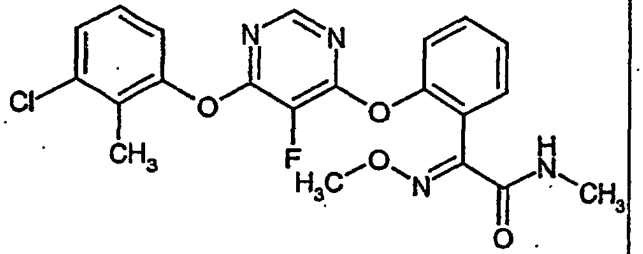 | 0,5 | 30 |
| Tebuconazol (IV) (3)<br>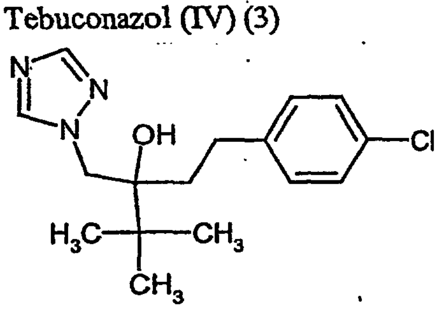 | 2,5 | 0 |

**Erfindungsgemäße Mischung:**

| | Mischungsverhältnis | Aufwandmenge an Wirkstoff in g/ha | tatsächlicher Wirkungsgrad | Erwartungswert, berechnet mit Colby-Formel |
|---|---|---|---|---|
| (I)<br>+<br>Tebuconazol (IV) (3) | 1:5 | 0,5<br>+<br>2,5 | 70 | 30 |

**Patentansprüche**

1. Wirkstoffkombinationen, enthaltend mindestens eine Verbindung der Formel

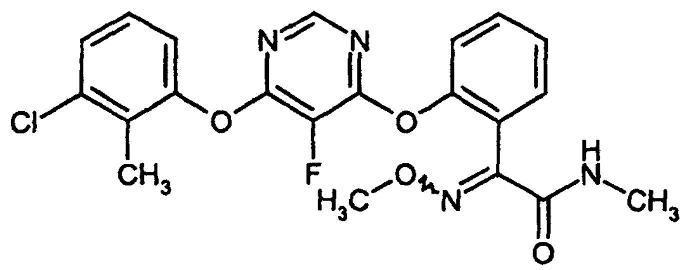

(I)

und

(1) das 8-t-Butyl-2-(N-ethyl-N-n-propyl-amino)-methyl-1,4-dioxaspiro-[5,4]-decan (Referenz: EP-A-0 281 842) der Formel

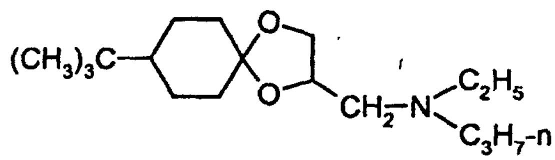

(II)

(Spiroxamine)

und/oder

(2) das 5,7-Dichlor-4-(4-fluorphenoxy)-quinolin (Referenz: EP-A-326 330) der Formel

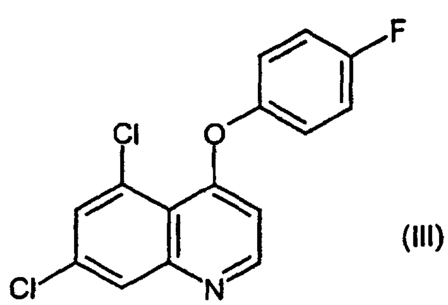

(III)

(Quinoxyfen)

und/oder

(3) das Triazol-Derivat (Referenz: EP-A-0 040 345) der Formel

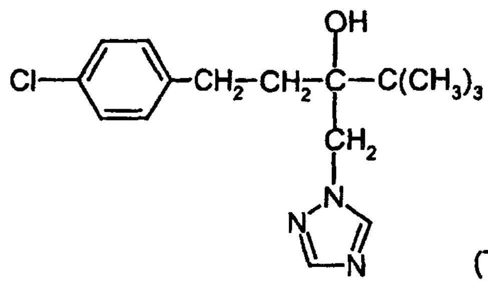

(IV)

(Tebuconazole)

und/oder

(4) das 1-[3-[4-(1,1-Dimethylethyl)phenyl]-2-methylpropyl]piperidin (Referenz: DE-A-2 752 153) der Formel

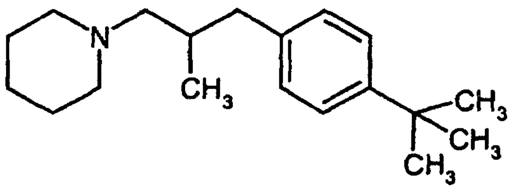

(V)

(Fenpropidin)

und/oder

(5) das (+-)-cis-4-[3-[4-(1,1-Dimethylethyl)phenyl]-2-methylpropyl]-2,6-dime-thylmorpholin (Referenz: DE-A-2 656 747) der Formel

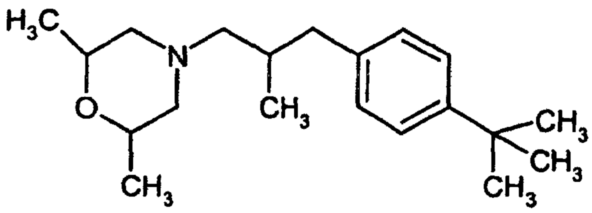

(VI)

(Fenpropimorph)

und/oder

(6) das N-(1-Cyano-1,2-dimethylpropyl)-2-(2,4-dichlorphenoxy)-propanamid (Referenz: EP-A 262 393) der Formel

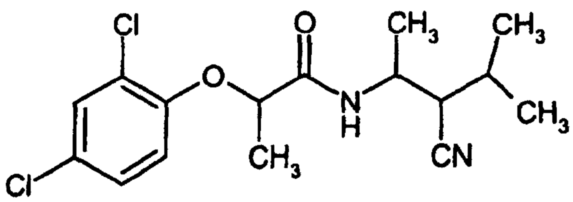

(VII)

(Fenoxanil)

und/oder

(7) das Tetrachlor-isophthalo-dinitril (Referenz: US 3 290 353) der Formel

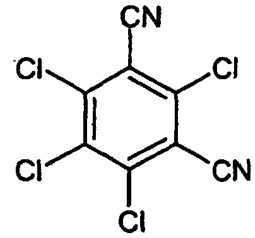

(VIII)

(Chlorothalonil)

und/oder

(8) das 1-(4-Chlor-phenoxy)-3,3-dimethyl-1-(1,2,4-triazol-1-yl)-butan-2-on (Referenz: DE-A-22 01 063) der Formel

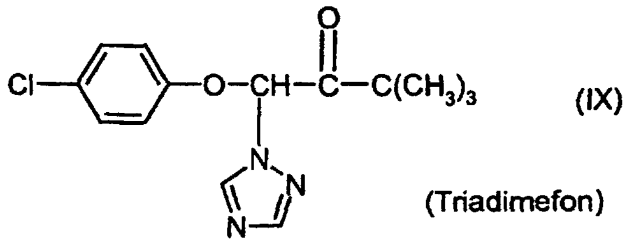

(IX)

(Triadimefon)

und/oder

(9) das 1-(4-Chlor-phenoxy)-3,3-dimethyl-1-(1,2,4-triazol-1-yl)-butan-2-ol (Referenz: DE-A-2 324 010) der Formel

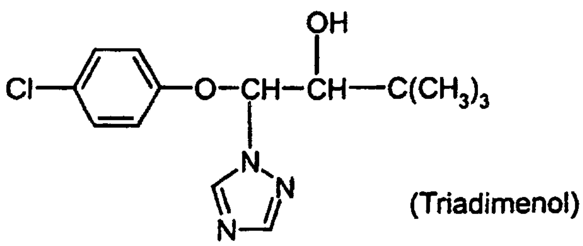

(X)

(Triadimenol)

und/oder

(10) das Triazol (Referenz: EP-A-196 038) der Formel

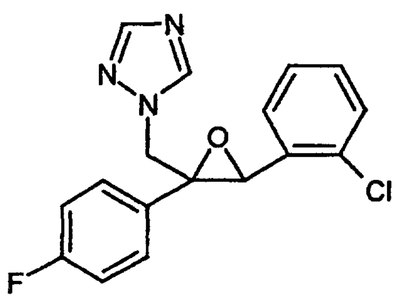

(XI)

(Epoxiconazole)

und/oder

(11) das Triazol (Referenz: EP-A-329 397) der Formel

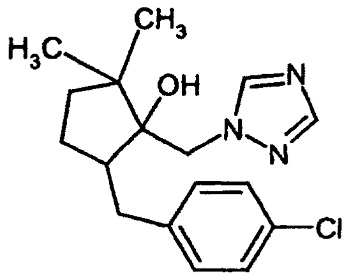

(XII)

(Metconazole)

und/oder

(12) das Triazol (Referenz: EP-A-183 458) der Formel

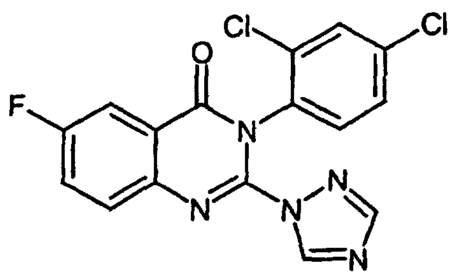

(XIII)

(Fluquinconazole)

und/oder

(13) das Triazol (Referenz: DE-A-3 406 993) der Formel

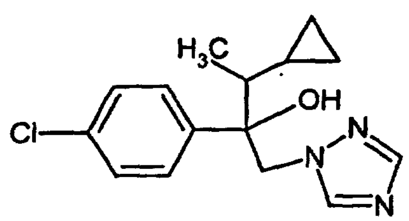

(XIV)

(Cyproconazole)

und/oder

(14) das Triazol (Referenz: Pesticide Manual, 9th. Ed. (1991), Seite 654) der Formel

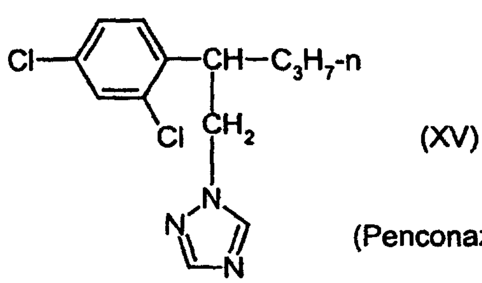

(XV)

(Penconazole)

und/oder

(15) die Verbindung (Referenz: EP-A-253 213) der Formel

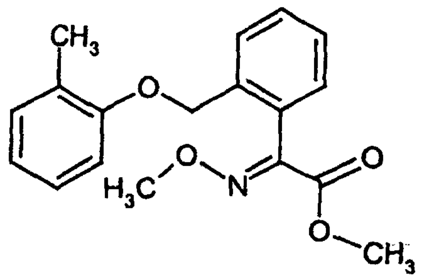

(XVI)

(Kresoxim-methyl)

und/oder

(16) die Verbindung (Referenz: EP-A-0 382 375) der Formel

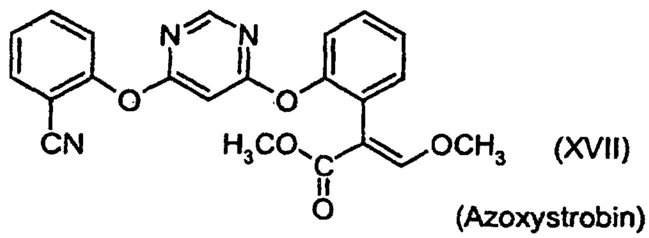

(XVII)

(Azoxystrobin)

(17) die Verbindung (Referenz: EP-A-0 310 550) der Formel

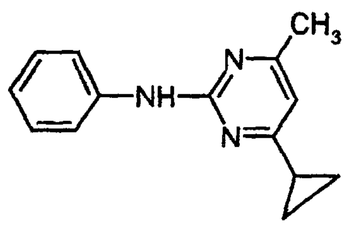

(XVIII)

(Cyprodinil)

und/oder

(18) N,N'''-(Iminodi-8,1-octanediyl)bis-guanidine triacetate (Referenz: EP-A-155 509) der Formel

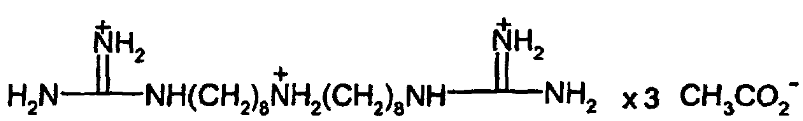

(XIX)

(Iminoctadine triacetat)

und/oder

(19) das Triazol (Referenz: EP-A-068 813) der Formel

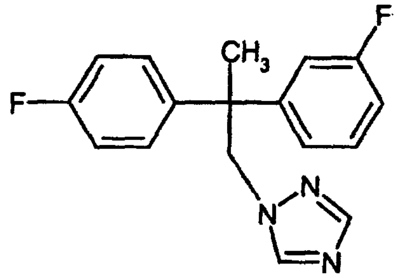

(XX)

(Flusilazole)

und/oder

(20) das Imidazol-Derivat (Referenz: DE-A-2 429 523) der Formel

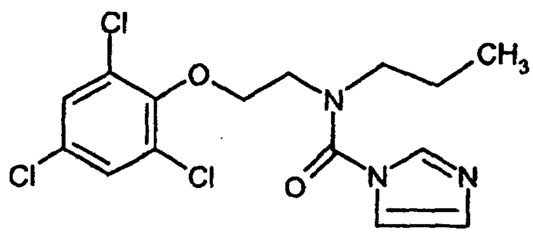

(XXI)

(Prochloraz)

und/oder

(21) das Triazol (Referenz: DE-A-2 551 560) der Formel

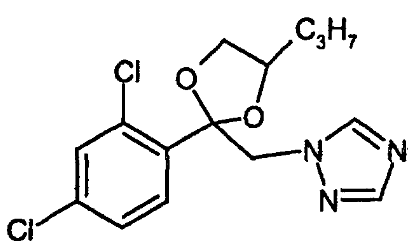

(XXII)

(Propiconazole)

und/oder

(22) das 1-(4-Phenyl-phenoxy)-3,3-dimethyl-1-(1,2,4-triazol-1-yl)-butan-2-ol (Referenz: DE-A-2 324 010) der Formel

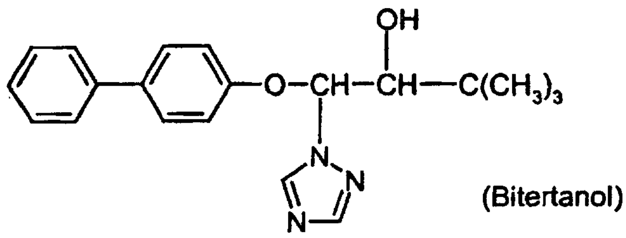

(XXIII)

(Bitertanol)

und/oder

(23) das 1-[(6-Chlor-3-pyridinyl)-methyl]-N-nitro-2-imidazolidinimin (Referenz: Pesticide Manual, 9th. Ed. (1991), Seite 491) der Formel

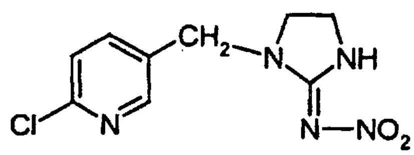

(XXIV)

(Imidacloprid)

und/oder

(24) das Anilin-Derivat (Referenz: DE-A-1 193 498) der Formel

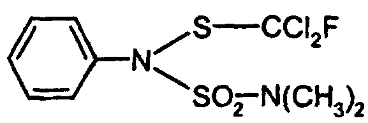

(XXV)

(Dichlofluanid)

und/oder

(25) das Anilin-Derivat (Referenz: DE-A-119 34 98) der Formel

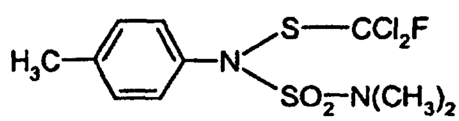

(XXVI)

(Tolylfluanid)

und/oder

(26) das Anilin-Derivat (Referenz: Pesticide Manual, 9th. Ed. (1991), Seite 554) der Formel

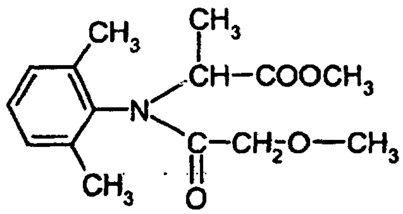

(XXVII)

(Metalaxyl)

und/oder

(27) das 4-(2,3-Dichlorphenyl)-1H-pyrrole-3-carbonitril (Referenz: EP-A-236 272) der Formel

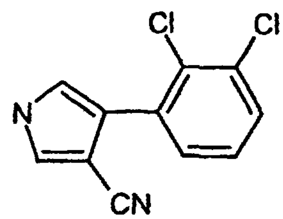

(XXVIII)

(Fenpiclonil)

und/oder

(28) das Triazol-Derivat (Referenz: EP-A-112 284) der Formel

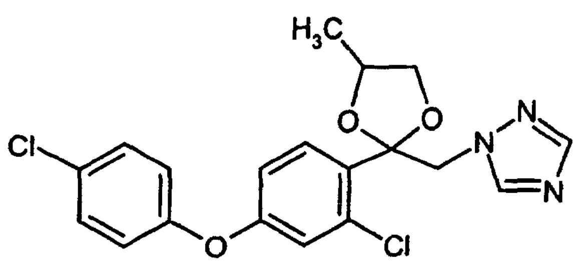

(XXIX)

(Difenconazole)

und/oder

(29) das Pyrrol-Derivat (Referenz: EP-A-206 999) der Formel

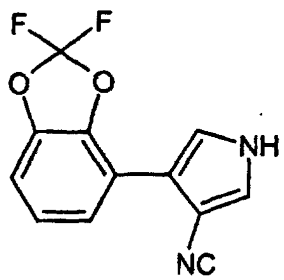

(XXX)

(Fludioxonil)

und/oder

(30) das Benzimidazol-Derivat (Referenz: US-3 010 968) der Formel

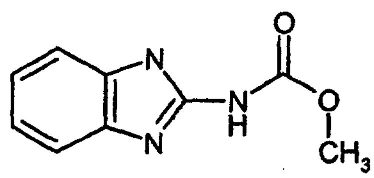

(XXXI)

(Carbendazim)

und/oder

(31) die Verbindung (Referenz: CASRN (3878-19-1)) der Formel

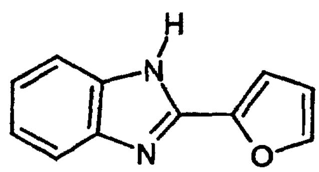

(XXXII)

(Fuberidazole)

und/oder

(32) das Imidazol-Derivat (Referenz: DE-A-2 063 857) der Formel

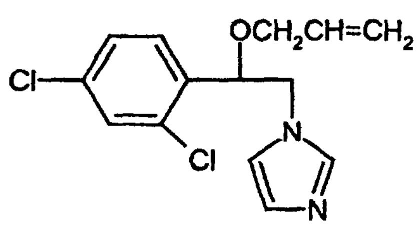

(XXXIII)

(Enilconazole)

und/oder

(33) das Imidazol-Derivat der Formel

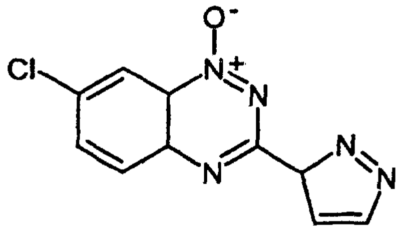

(XXXIV)

(Triazoxide)

(34) die Verbindung (Referenz: DE-A-2 709 264) der Formel

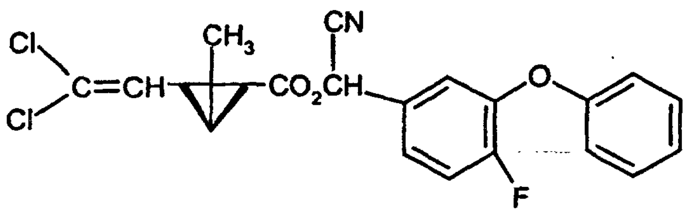

(XXXV)

(Cyfluthrin)

und/oder

(35) ein Guanidin-Derivat (Referenz: Pesticide Manual, 9th. Ed. (1991), Seite 461) der Formel

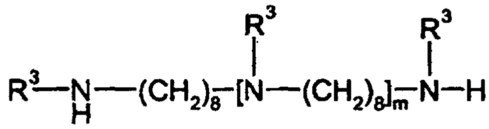

(XXXVI)

x (2 + m) $CH_3COOH$ .

(Guazatine)

in welcher

m für ganze Zahlen von 0 bis 5 steht und

$R^3$ für Wasserstoff (17 bis 23 %) oder den Rest der Formel

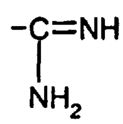

(77 bis 83 %)

steht,
und/oder

(36) das Benzothiadiazol-Derivat (Referenz: EP-A-0 313 512) der Formel

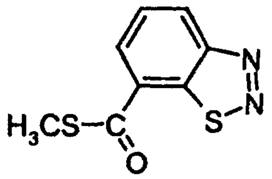

(XXXVII)

(Acibenzolar-S-methyl)

und/oder

(37) das Harnstoff-Derivat (Referenz: DE-A-2 732 257) der Formel

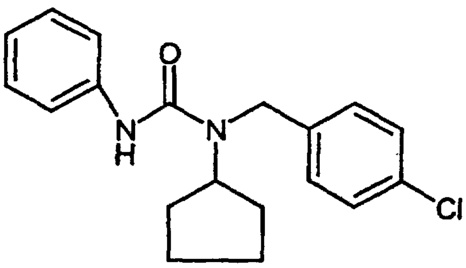

(XXXVIII)

(Pencycuron)

und/oder

(38) das Benzamid-Derivat (Referenz: DE-A-2 731 522) der Formel

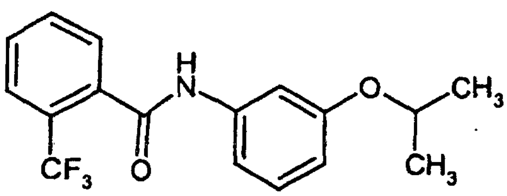

(XXXIX)

(Flutolanil)

und/oder

(39) das Benzothiazol-Derivat (Referenz: DE-A-2 250 077) der Formel

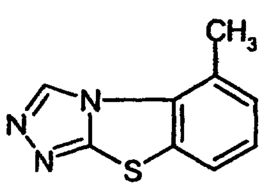

(XL)

(Tricyclazole)

und/oder

(40) das Zink-propylen-1,2-bis-(dithiocarbamidat) (Referenz: Pesticide Manual, 9th. Ed. (1991), Seite 726) der Formel

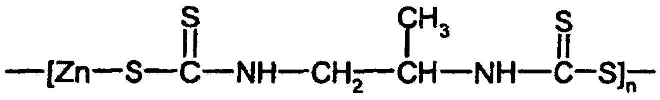

(XLI)

n > = 1

(Propineb)

und/oder

(41) die Verbindung (Referenz: DE-A-2 012 656) der Formel

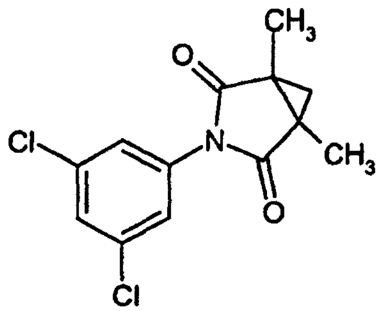

(XLII)

(Procymidone)

und/oder

(42) ein Thiocarbamat (Referenz: Pesticide Manual, 9th. Ed. (1991)) der Formel

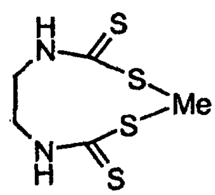

(XLIII)

(Mancozeb)

Me = Gemisch aus Zn und Mn

und/oder

(43) das Phthalimid-Derivat (Referenz: Pesticide Manual, 9th. Ed. (1991), Seite 431) der Formel

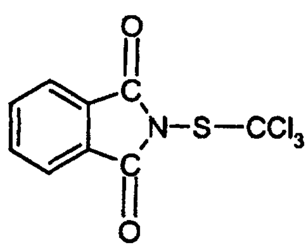

(XLIV)

(Folpet)

und/oder

(44) das Morpholin-Derivat (Referenz: EP-A-0 219 756) der Formel

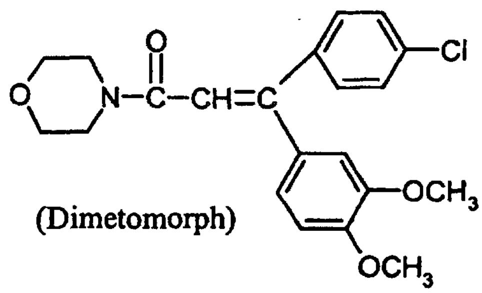

(Dimetomorph)

(XLV)

und/oder

(45) das Cyanoxim-Derivat (Referenz: Pesticide Manual, 9th. Ed. (1991), Seite 206) der Formel

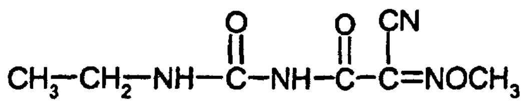

(XLVI)

(Cymoxanil)

und/oder

(46) die Phosphor-Verbindung (Referenz: Pesticide Manual, 9th. Ed. (1991), Seite 443) der Formel

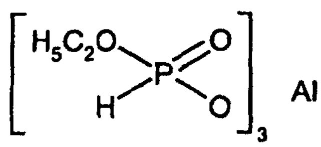

(XLVII)

(Fosetyl-Al)

und/oder

(47) das Oxazolidindion (Referenz: EP-A-0 393 911) der Formel

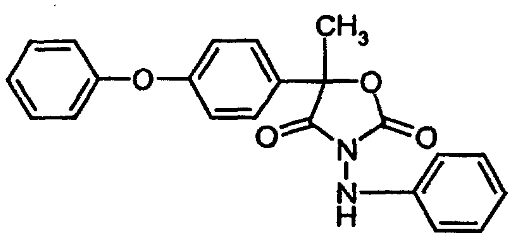

(XLVIII)

(Famoxadone)

und/oder

(48) das Pyrimidin-Derivat (Referenz: EP-A-0 270 111) der Formel

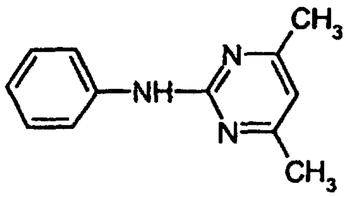

(XLIX)

(Pyrimethanil)

und/oder

(49) das Pyrimidin-Derivat (Referenz: EP-A-0 270 111) der Formel

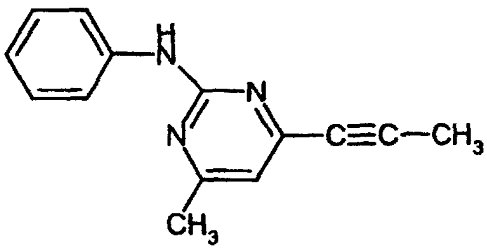

(L)

(Mepanipyrim)

und/oder

(50) die Verbindung (Referenz: EP-A-0 472 996) der Formel

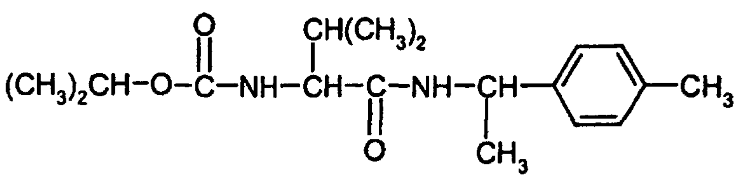

(LI)

(Iprovalicarb)

und/oder

(51) das Anilin-Derivat (Referenz: EP-A-0 339 418) der Formel

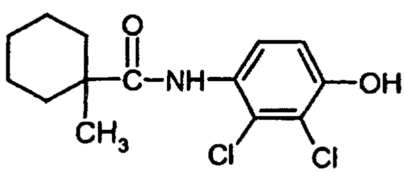

(LII)

(Fenhexamid)

und/oder

(52) N-[1-(4-Chlor-phenyl)-ethyl]-2,2-dichlor-1-ethyl-3-methyl-cyclopropan-carbonsäureamid (Referenz: EP-A-0 341 475) der Formel

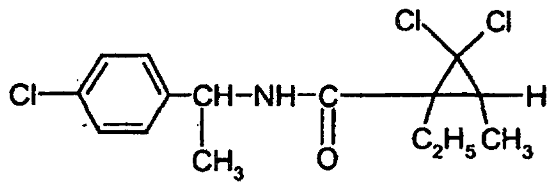

(LIII)

(Carpropamid)

und/oder

(53) das Pyridinamin (Referenz: EP-A-0 031 257) der Formel

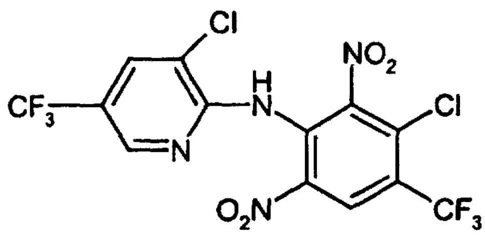

(LIV)

(Fluazinam)

und/oder

(54) das Dicarboxim-Derivat (Referenz: US-2 553 770) der Formel

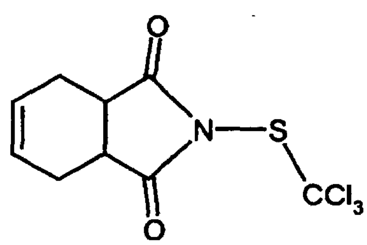

(LV)

(Captan)

und/oder

(55) die Verbindung (Referenz: DE-A-1 100 372) der Formel

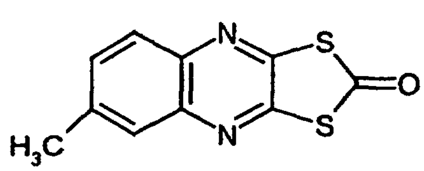

(LVI)

(Chinomethionat)

und/oder

(56) die Verbindung (Referenz: EP-A-0 629 616) der Formel

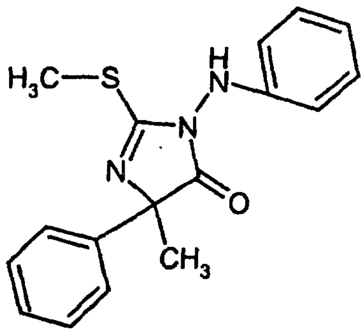

(LVII)

(Fenamidone)

und/oder

(57) die Verbindung (Referenz: EP-A-376 279) der Formel

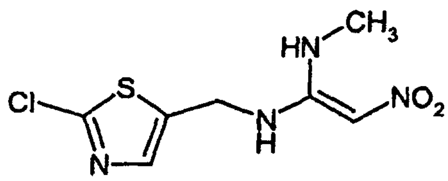

(LVIII)

(Chlothianidin)

und/oder

(58) die Verbindung (Referenz: EP-A-235 725) der Formel

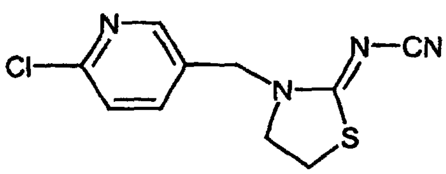

(LIX)

(Thiacloprid)

und/oder

(59) die Verbindung (Referenz: EP-A-580 553) der Formel

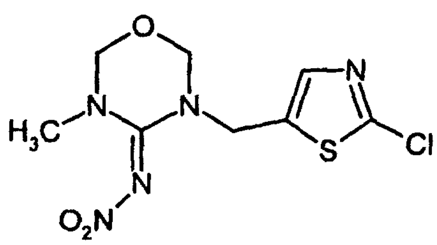

(LXI)

(Thiamethoxam)

und/oder

(60) die Verbindung (Referenz: WO-A-91-4965) der Formel

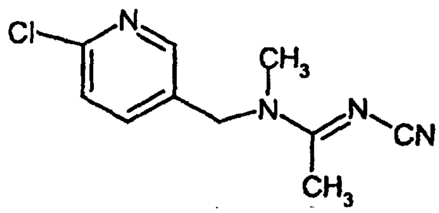

(LXI)

(Acetamiprid)

und/oder

(61) die Verbindung (Referenz: EP-A-326 330) der Formel

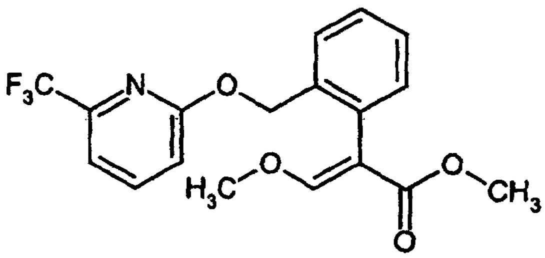

(LXII)

(Picoxystrobin).

und/oder

(62) Schwefel (LXIII)
und/oder

(63) Kupferoxychlorid (LXIV) und/oder

(64) die Verbindung (Referenz: DE-A-2 149 923) der Formel

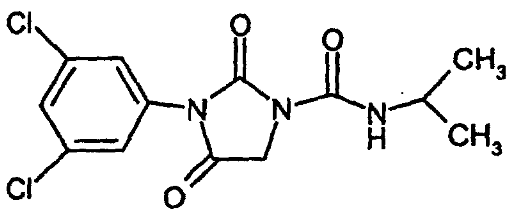

(LXV)

(Iprodione)

und/oder

(65) die Verbindung (Referenz: DE-A-2 207 576) der Formel

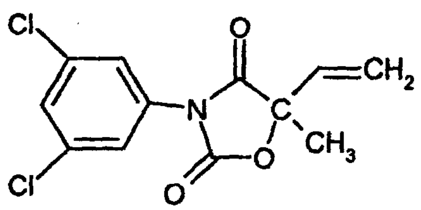

(LXVI)

(Vinclozolin)

und/oder

(66) die Verbindung (Referenz: JP-A-575 584) der Formel

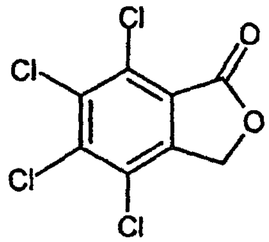

(LXVII)

(Phtalid)

und/oder

(67) die Verbindung (Referenz: DE-A-2 300 299) der Formel

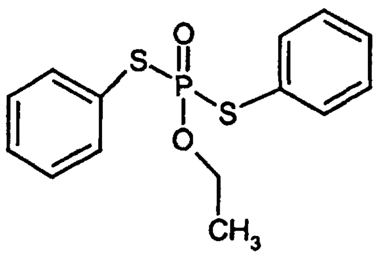

(LXVIII)

(Edifenphos)

und/oder

(68) die Verbindung (Referenz:US-3 917 838) der Formel

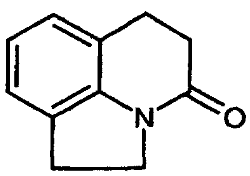

(LXIX)

(Pyroquilon)

und/oder

(69) das Hydroxyethyl-triazol-Derivat (Referenz: WO-A-96-16048) der Formel

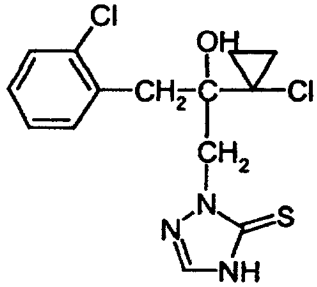

(LXX)

und/oder

(70) das Halogen-benzimidazol (Referenz: WO-A-97-06171) der Formel

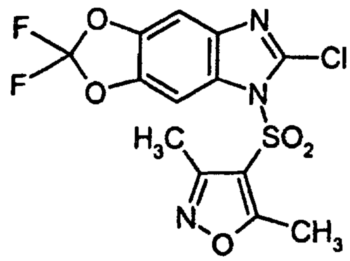

(LXXI)

und/oder

(71) die Verbindung (Referenz: DE-A-196 02 095) der Formel

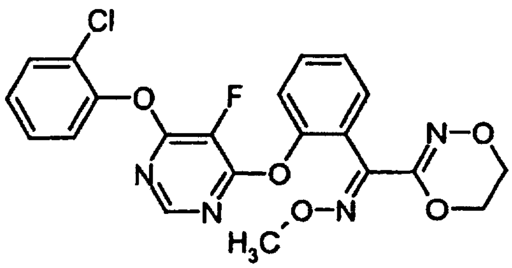

(LXXII)

und/oder

(72) das Benzamid-Derivat (Referenz: EP-A-0 600 629) der Formel

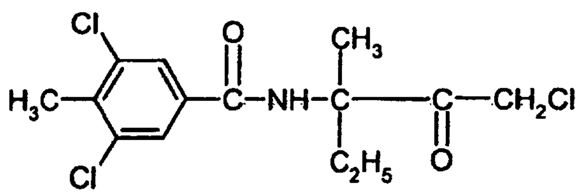

(LXXIII)

(Zoxamide)

und/oder

(73) die Verbindung (Referenz: EP-A-298 196) der Formel

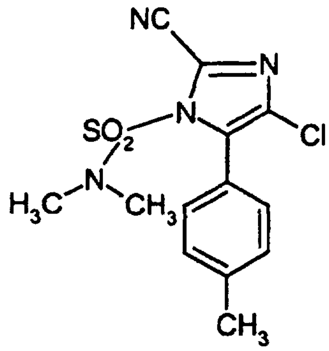

(LXXIV)

(Cyamidazosulfamid)

und/oder

(74) die Verbindung (Referenz: WO-A-96 18631) der Formel

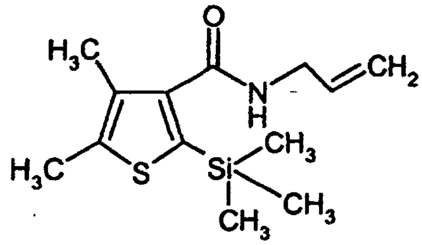

(LXXV)

(Silthiofam)

(75) die Verbindung (Referenz: EP-A-460 575) der Formel

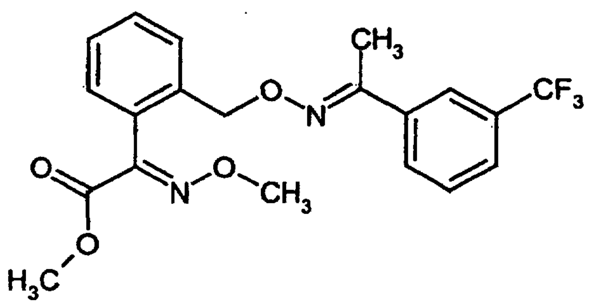

(LXXVI)

(Trifloxystrobin)

und/oder

(76) N-Methyl-2-(methoxyimino)-2-[2-([1-(3-tri-fluoro-methyl-phenyl)-ethoxy]iminomethyl)phenyl]acetamid (Referenz: EP-A-596 254) der Formel

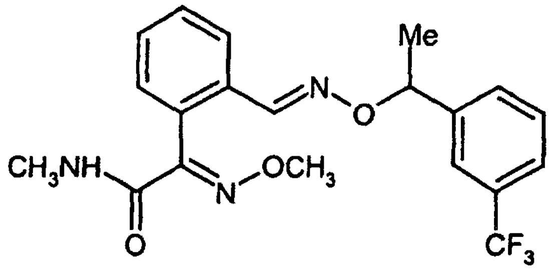

(LXXVII)

und/oder

(77) 2-[2-([2-Phenyl-2-methoxylmino-1-methylethyl]-imino-oxymethyl)-phenyl]-2-methoxyimino-N-methylacetamid (Referenz: WO-A-95-21154) der Formel

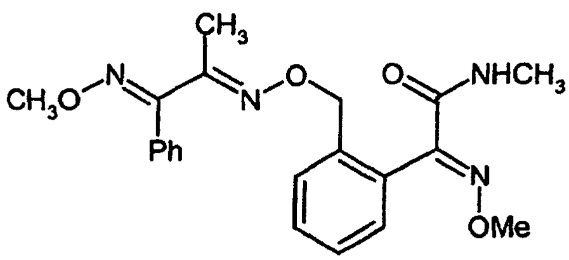

(LXXIII)

und/oder

(78) 2-[2-([2-(4-Fluorophenyl)-2-methoxyimino-1-methylethyl]iminooxymethyl)phenyl]-2-methoxyimino-N-methyl-acetamid (Referenz: WO-A-95-21154) der Formel

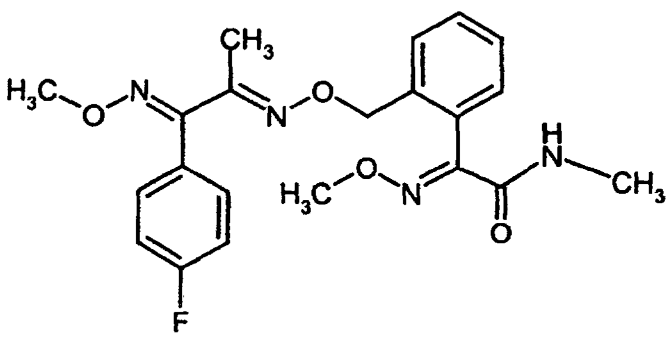

(LXXIX)

und/oder

(79) 2-[4-Methoxy-3-(1-methylethoxy)-1,4-diazabuta-1,3-dienyl-oxymethyl]phenyl-2-methoximino-N-methyl-acetamid (Referenz: DE-A-19 528 651) der Formel

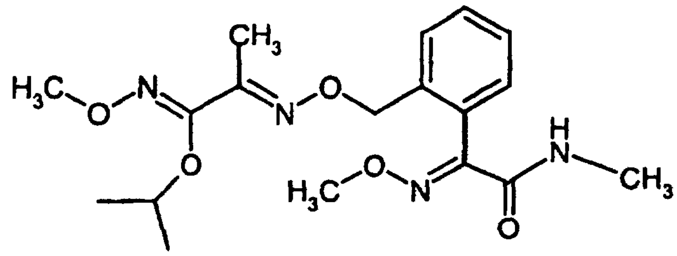

(LXXX)

und/oder

(80) Methyl N-(2-[1-(4-chlorophenyl)pyrazol-3-yloxymethyl]phenyl)-N-methoxycarbamat (Referenz: DE-A-44 23 612) der Formel

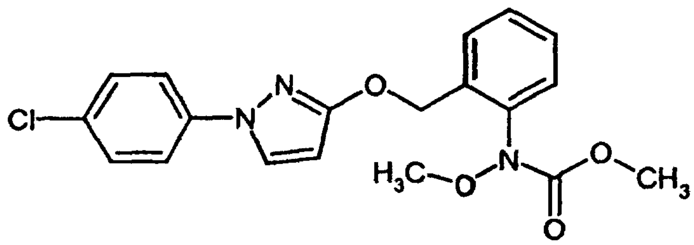

(LXXXI)

und/oder

(81) 2,4-Dihydro-5-methoxy-2-methyl-4-[2-([([1-(3-tri-fluoro-methylphenyl)ethylidene]amino)oxy]methyl)phenyl]-3H-1,2,4-triazol-3-one (Referenz: WO-A-98-23155) der Formel

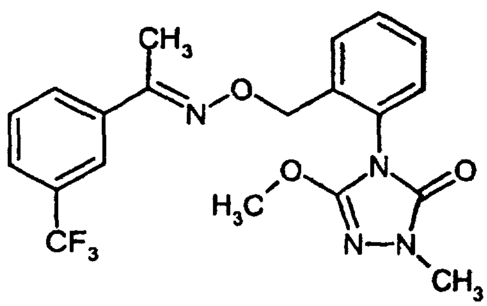

(LXXXII)

und/oder

(82) die Verbindung der Formel

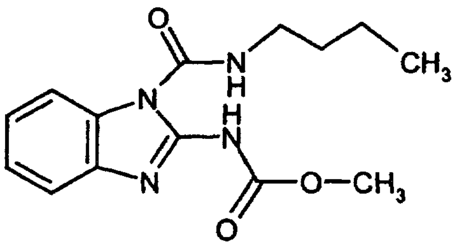

(LXXXIII)

(Benomyl).

2. Wirkstoffkombination gemäß Anspruch 1, enthaltend eine Verbindung der Formel (I) und eine der Verbindungen 1) bis 82) in einem Mischungsverhältnis einer Verbindung der Formel (I) zu jeweils einer Verbindung der Formeln (II) bis (LXXXIII) von 20:1 bis 1:50 Gewichtsteilen.

3. Mittel gemäß mindestens einem der Ansprüche 1 bis 2, **dadurch gekennzeichnet, dass** in den Wirkstoffkombinationen das Gewichtsverhältnis von Wirkstoff der Formel (I) zu

- Wirkstoff der Gruppe (1) zwischen 10:1 und 1:20 liegt,
- Wirkstoff der Gruppe (2) zwischen 10: 1 und 1:20 liegt,
- Wirkstoff der Gruppe (3) zwischen 10:1 und 1:20 liegt,
- Wirkstoff der Gruppe (4) zwischen 10:1 und 1:20 liegt,
- Wirkstoff der Gruppe (5) zwischen 10: 1 und 1:20 liegt,
- Wirkstoff der Gruppe (6) zwischen 10:1 und 1:10 liegt,
- Wirkstoff der Gruppe (7) zwischen 1:1 und 1:50 liegt,
- Wirkstoff der Gruppe (8) zwischen 10:1 und 1:10 liegt,
- Wirkstoff der Gruppe (9) zwischen 10:1 und 1:10 liegt,
- Wirkstoff der Gruppe (10) zwischen 10:1 und 1:10 liegt,
- Wirkstoff der Gruppe (11) zwischen 10:1 und 1:10 liegt,
- Wirkstoff der Gruppe (12) zwischen 10:1 und 1:10 liegt,
- Wirkstoff der Gruppe (13) zwischen 10:1 und 1:10 liegt,
- Wirkstoff der Gruppe (14) zwischen 10:1 und 1:10 liegt,
- Wirkstoff der Gruppe (15) zwischen 10:1 und 1:10 liegt,
- Wirkstoff der Gruppe (16) zwischen 10:1 und 1:10 liegt,
- Wirkstoff der Gruppe (17) zwischen 5:1 und 1:20 liegt,
- Wirkstoff der Gruppe (18) zwischen 10:1 und 1:10 liegt,
- Wirkstoff der Gruppe (19) zwischen 10:1 und 1:10 liegt,
- Wirkstoff der Gruppe (20) zwischen 10:1 und 1:10 liegt,
- Wirkstoff der Gruppe (21) zwischen 10:1 und 1:10 liegt,
- Wirkstoff der Gruppe (22) zwischen 10:1 und 1:10 liegt,
- Wirkstoff der Gruppe (23) zwischen 20:1 und 1:20 liegt,
- Wirkstoff der Gruppe (24) zwischen 1:1 und 1:50 liegt,
- Wirkstoff der Gruppe (25) zwischen 1:0,1 und 1:50 liegt,
- Wirkstoff der Gruppe (26) zwischen 1:0,1 und 1:50 liegt,
- Wirkstoff der Gruppe (27) zwischen 10:1 und 1:10 liegt,
- Wirkstoff der Gruppe (28) zwischen 10:1 und 1:10 liegt,
- Wirkstoff der Gruppe (29) zwischen 10:1 und 1:10 liegt,
- Wirkstoff der Gruppe (30) zwischen 10:1 und 1:10 liegt,
- Wirkstoff der Gruppe (31) zwischen 20:1 und 1:10 liegt,
- Wirkstoff der Gruppe (32) zwischen 20:1 und 1:10 liegt,
- Wirkstoff der Gruppe (33) zwischen 20:1 und 1:10 liegt,
- Wirkstoff der Gruppe (34) zwischen 20:1 und 1:10 liegt,
- Wirkstoff der Gruppe (35) zwischen 10:1 und 1:10 liegt,
- Wirkstoff der Gruppe (36) zwischen 50:1 und 1:50 liegt,
- Wirkstoff der Gruppe (37) zwischen 10:1 und 1:10 liegt,
- Wirkstoff der Gruppe (38) zwischen 10:1 und 1:10 liegt,
- Wirkstoff der Gruppe (39) zwischen 10:1 und 1:10 liegt,

- Wirkstoff der Gruppe (40) zwischen 1:1 und 1:50 liegt,
- Wirkstoff der Gruppe (41) zwischen 10:1 und 1:10 liegt,
- Wirkstoff der Gruppe (42) zwischen 1: 1 und 1:50 liegt,
- Wirkstoff der Gruppe (43) zwischen 1:1 und 1:50 liegt,
- Wirkstoff der Gruppe (44) zwischen 10:1 und 1:10 liegt,
- Wirkstoff der Gruppe (45) zwischen 10:1 und 1:10 liegt,
- Wirkstoff der Gruppe (46) zwischen 10:1 und 1:50 liegt,
- Wirkstoff der Gruppe (47) zwischen 10:1 und 1:10 liegt,
- Wirkstoff der Gruppe (48) zwischen 5:1 und 1:20 liegt,
- Wirkstoff der Gruppe (49) zwischen 5:1 und 1:20 liegt,
- Wirkstoff der Gruppe (50) zwischen 10:1 und 1:10 liegt,
- Wirkstoff der Gruppe (51) zwischen 10:1 und 1:10 liegt,
- Wirkstoff der Gruppe (52) zwischen 10:1 und 1:10 liegt,
- Wirkstoff der Gruppe (53) zwischen 10:1 und 1:10 liegt,
- Wirkstoff der Gruppe (54) zwischen 5:1 und 1:50 liegt,
- Wirkstoff der Gruppe (55) zwischen 5:1 und 1:50 liegt,
- Wirkstoff der Gruppe (56) zwischen 10:1 und 1:10 liegt,
- Wirkstoff der Gruppe (57) zwischen 20:1 und 1:20 liegt,
- Wirkstoff der Gruppe (58) zwischen 20:1 und 1:20 liegt,
- Wirkstoff der Gruppe (59) zwischen 20:1 und 1:20 liegt,
- Wirkstoff der Gruppe (60) zwischen 20:1 und 1:20 liegt,
- Wirkstoff der Gruppe (61) zwischen 10:1 und 1:10 liegt,
- Wirkstoff der Gruppe (62) zwischen 20:1 und 1:20 liegt,
- Wirkstoff der Gruppe (63) zwischen 20:1 und 1:20 liegt,
- Wirkstoff der Gruppe (64) zwischen 10:1 und 1:10 liegt,
- Wirkstoff der Gruppe (65) zwischen 10:1 und 1:10 liegt,
- Wirkstoff der Gruppe (66) zwischen 10:1 und 1:10 liegt,
- Wirkstoff der Gruppe (67) zwischen 10:1 und 1:10 liegt,
- Wirkstoff der Gruppe (68) zwischen 10:1 und 1:10 liegt,
- Wirkstoff der Gruppe (69) zwischen 20:1 und 1:5 liegt,
- Wirkstoff der Gruppe (70) zwischen 50:1 und 1:10 liegt,
- Wirkstoff der Gruppe (71) zwischen 10:1 und 1:10 liegt,
- Wirkstoff der Gruppe (72) zwischen 50:1 und 1:10 liegt,
- Wirkstoff der Gruppe (73) zwischen 20:1 und 1:5 liegt,
- Wirkstoff der Gruppe (74) zwischen 20:1 und 1:10 liegt,
- Wirkstoff der Gruppe (75) zwischen 10:1 und 1:10 liegt,
- Wirkstoff der Gruppe (76) zwischen 10:1 und 1:10 liegt,
- Wirkstoff der Gruppe (77) zwischen 10:1 und 1:10 liegt,
- Wirkstoff der Gruppe (78) zwischen 10:1 und 1:10 liegt,
- Wirkstoff der Gruppe (79) zwischen 10:1 und 1:10 liegt,
- Wirkstoff der Gruppe (80) zwischen 10:1 und 1:10 liegt,
- Wirkstoff der Gruppe (81) zwischen 10:1 und 1:10 liegt,
- Wirkstoff der Gruppe (82) zwischen 10:1 und 1:10 liegt.

**4.** Verfahren zur Bekämpfung von phytopathogenen Pilzen, **dadurch gekennzeichnet, dass** man Wirkstoffkombinationen gemäß einem der Ansprüche 1 bis 3 auf Pilze und/oder deren Lebensraum einwirken lässt.

**5.** Verwendung von Wirkstoffkombinationen gemäß mindestens einem der Ansprüche 1 bis 3 zur Bekämpfung von phytopathogenen Pilzen.

**6.** Verfahren zur Herstellung von fungiziden Mitteln, **dadurch gekennzeichnet, dass** man Wirkstoffkombinationen gemäß mindestens einem der Ansprüche 1 bis 3 mit Streckmitteln und/oder oberflächenaktiven Stoffen vermischt.

## Claims

**1.** Active compound combinations, comprising at least one compound of the formula

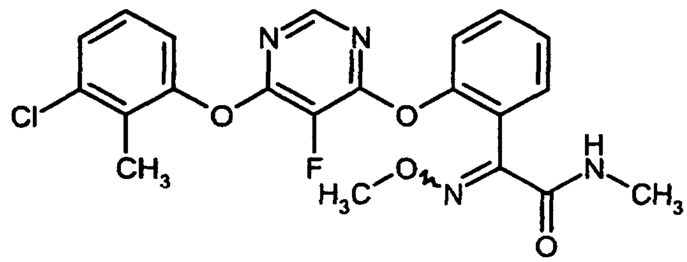

(I)

and

(1) 8-t-butyl-2-(N-ethyl-N-n-propyl-amino)-methyl-1,4-dioxaspiro-[5,4]-decane (reference: EP-A-0 281 842) of the formula

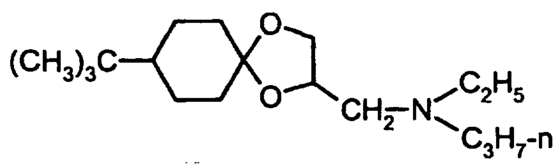

(II)

(spiroxamine)

and/or

(2) 5,7-dichloro-4-(4-fluorophenoxy)-quinoline (reference: EP-A-326 330) of the formula

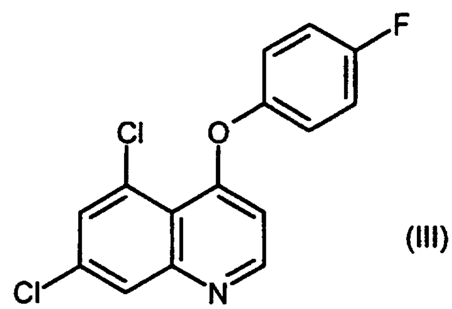

(III)

(quinoxyfen)

and/or

(3) the triazole derivative (reference: EP-A-0 040 345) of the formula

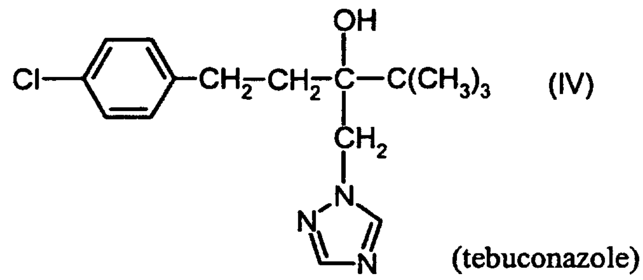

(IV)

(tebuconazole)

and/or

(4) 1-[3-[4-(1,1-dimethylethyl)phenyl]-2-methylpropyl]piperidine (reference: DE-A-2 752 153) of the formula

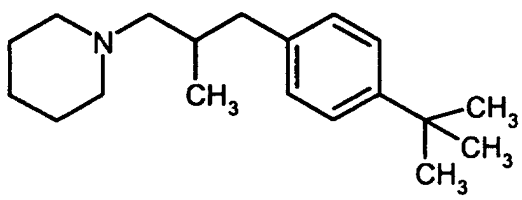

(V)

(fenpropidin)

and/or

(5) (+-)-cis-4-[3-[4-(1,1-dimethylethyl)phenyl]-2-methylpropyl]-2,6-dimethylmorpholine (reference: DE-A-2 656 747) of the formula

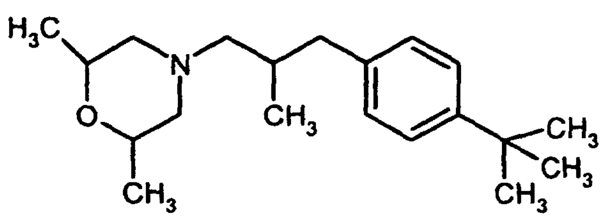

(VI)

(fenpropimorph)

and/or

(6) N-(1-cyano-1,2-dimethylpropyl)-2-(2,4-dichlorophenoxy)-propaneamide (reference: EP-A 262 393) of the formula

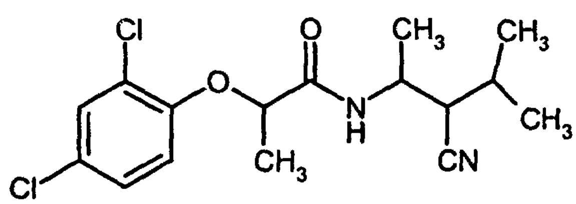

(VII)

(fenoxanil)

and/or

(7) tetrachloro-isophthalo-dinitrile (reference: US 3 290 353) of the formula

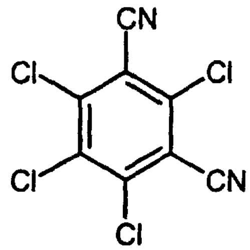

(VIII)

(chlorothalonil)

and/or

(8) 1-(4-chloro-phenoxy)-3,3-dimethyl-1-(1,2,4-triazol-1-yl)-butan-2-one (reference: DE-A-22 01 063) of the formula

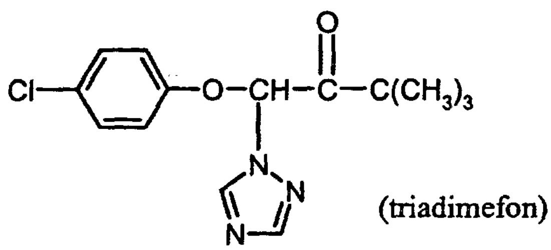

(IX)

(triadimefon)

and/or

(9) 1-(4-chloro-phenoxy)-3,3-dimethyl-1-(1,2,4-triazol-1-yl)-butan-2-ole (reference: DE-A-2 324 010) of the formula

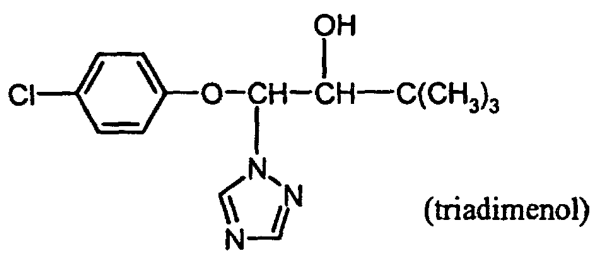

(X)

(triadimenol)

and/or

(10) the triazole (reference: EP-A-196 038) of the formula

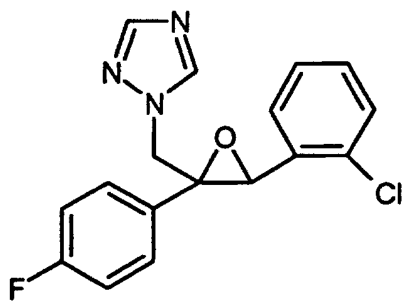

(XI)

(epoxiconazole)

and/or

(11) the triazole (reference: EP-A-329 397) of the formula

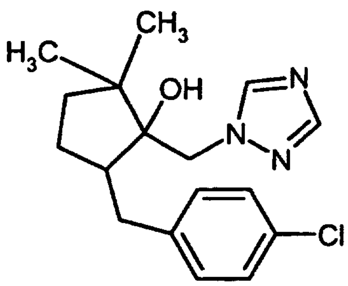

(XII)

(metconazole)

and/or

(12) the triazole (reference: EP-A-183 458) of the formula

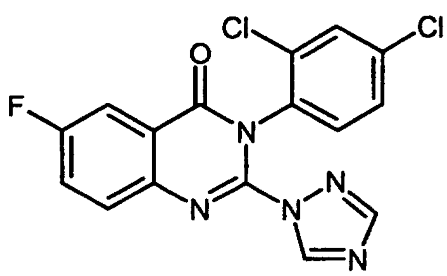

(XIII)

(fluquinconazole)

and/or

(13) the triazole (reference: DE-A-3 406 993) of the formula

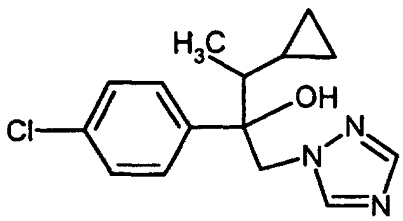

(XIV)

(cyproconazole)

and/or

(14) the triazole (reference: Pesticide Manual, 9th. Ed. (1991), page 654) of the formula

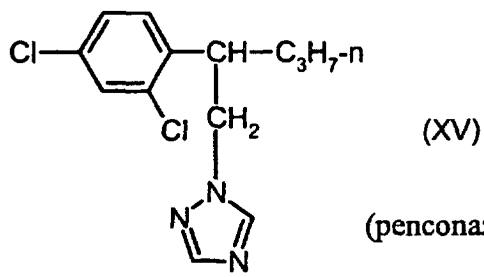

(XV)

(penconazole)

and/or

(15) the compound (reference: EP-A-253 213) of the formula

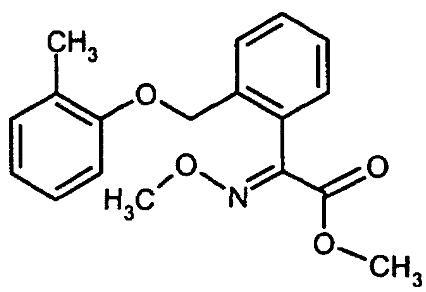

(XVI)

(kresoxim-methyl)

and/or

(16) the compound (reference: EP-A-0 382 375) of the formula

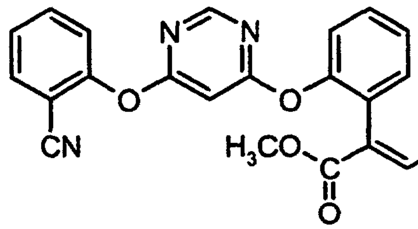

(XVII)

(azoxystrobin)

and/or

(17) the compound (reference: EP-A-0 310 550) of the formula

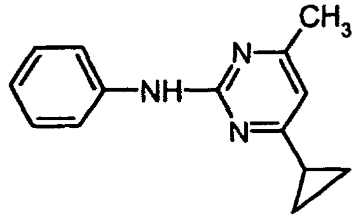

(XVIII)

(cyprodinil)

and/or

(18) N,N'''-(iminodi-8,1-octanediyl)bis-guanidine triacetate (reference: EP-A-155 509) of the formula

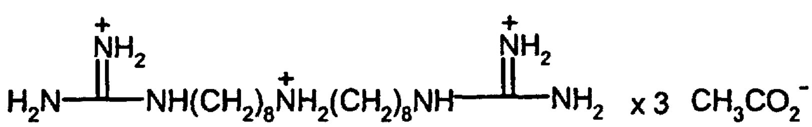

(XIX)

(iminoctadine triacetate)

and/or

(19) the triazole (reference: EP-A-068 813) of the formula

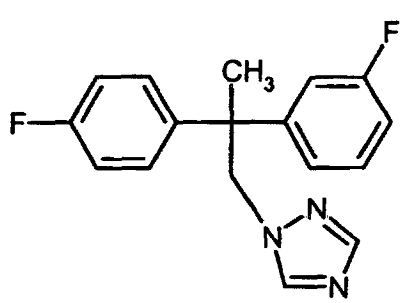

(XX)

(flusilazole)

and/or

(20) the imidazole derivative (reference: DE-A-2 429 523) of the formula

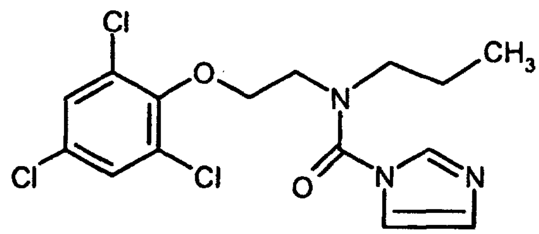

(XXI)

(prochloraz)

and/or

(21) the triazole (reference: DE-A-2 551 560) of the formula

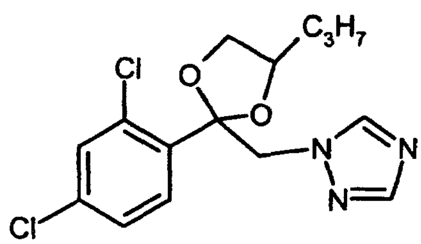

(XXII)

(propiconazole)

and/or

(22) 1-(4-phenyl-phenoxy)-3,3-dimethyl-1-(1,2,4-triazol-1-yl)-butan-2-ol (reference: DE-A-2 324 010) of the formula

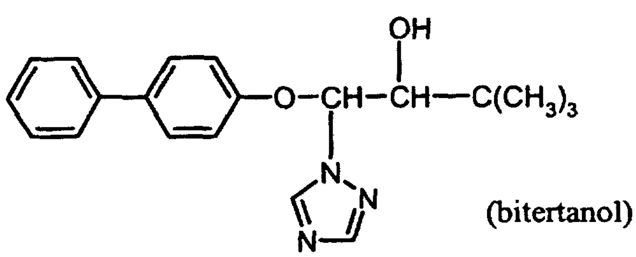

(XXIII)

(bitertanol)

and/or

(23) 1-[(6-chloro-3-pyridinyl)-methyl]-N-nitro-2-imidazolidinimine (reference: Pesticide Manual, 9th. Ed. (1991), page 491) of the formula

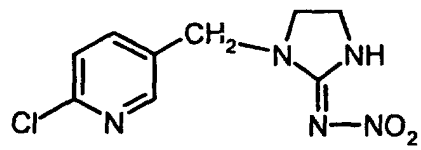

(XXIV)

(imidacloprid)

and/or

(24) the aniline derivative (reference: DE-A-1 193 498) of the formula

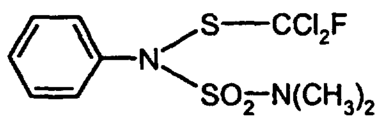

(XXV)

(dichlofluanid)

and/or

(25) the aniline derivative (reference: DE-A-119 34 98) of the formula

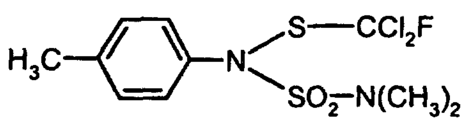

(XXVI)

(tolylfluanid)

and/or

(26) the aniline derivative (reference: Pesticide Manual, 9th. Ed. (1991), page 554) of the formula

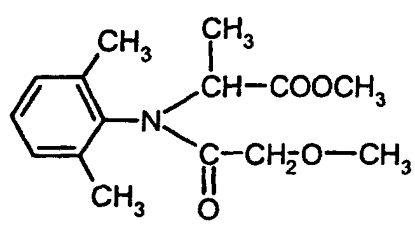

(XXVII)

(metalaxyl)

and/or

(27) 4-(2,3-dichlorophenyl)-1H-pyrrole-3-carbonitrile (reference: EP-A-236 272) of the formula

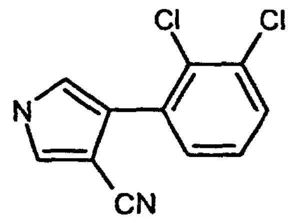

(XXVIII)

(fenpiclonil)

and/or

(28) the triazole derivative (reference: EP-A-112 284) of the formula

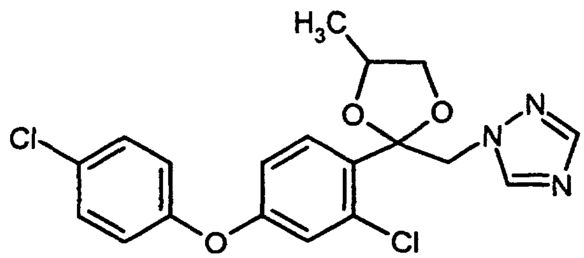

(XXIX)

(difenconazole)

and/or

(29) the pyrrole derivative (reference: EP-A-206 999) of the formula

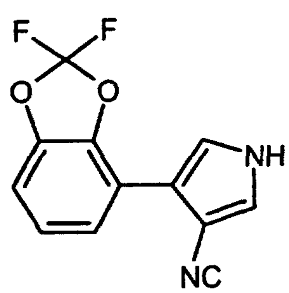

(XXX)

(fludioxonil)

and/or

(30)the benzimidazole derivative (reference: US-3 010 968) of the formula

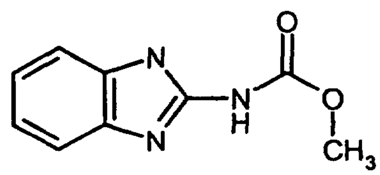 (XXXI)

(carbendazim)

and/or

(31) the compound (reference: CASRN (3878-19-1)) of the formula

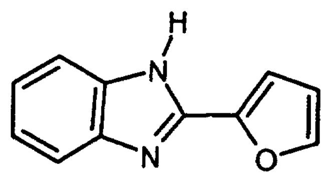 (XXXII)

(fuberidazole)

and/or

(32)the imidazole derivative (reference: DE-A-2 063 857) of the formula

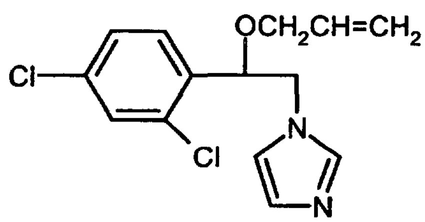 (XXXIII)

(enilconazole)

and/or

(33) the imadizole derivative of the formula

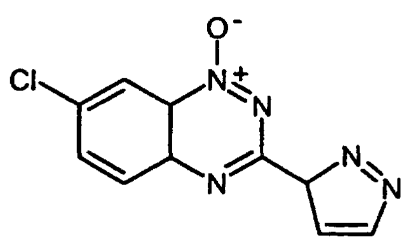 (XXXIV)

(triazoxide)

and/or

(34) the compound (reference: DE-A-2 709 264) of the formula

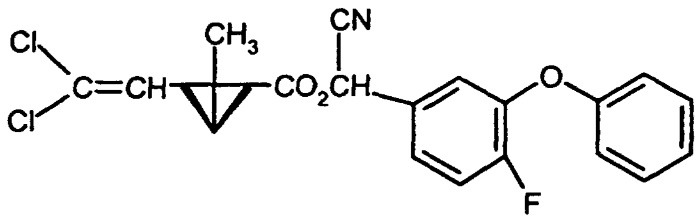

(XXXV)

(cyfluthrin)

and/or

(35) a guanidine derivative (reference: Pesticide Manual, 9th. Ed. (1991), page 461) of the formula

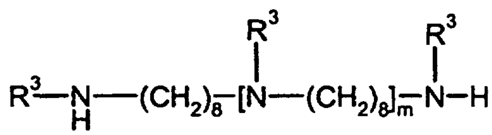

x (2 + m) $CH_3COOH$

(XXXVI)

(guazatine)

in which

m represents integers from 0 to 5 and

$R^3$ represents hydrogen (17 to 23%) or the radical of the formula

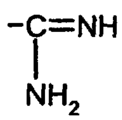

(77 to 83%),

and/or

(36) the benzothiadiazole derivative (reference: EP-A-0 313 512) of the formula

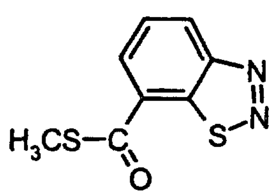

(XXXVII)

(acibenzolar S-methyl)

and/or

(37)the urea derivative (reference: DE-A-2 732 257) of the formula

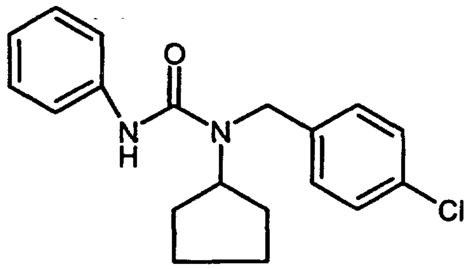

(XXXVIII)

(pencycuron)

and/or

(38)the benzamide derivative (reference: DE-A-2 731 522) of the formula

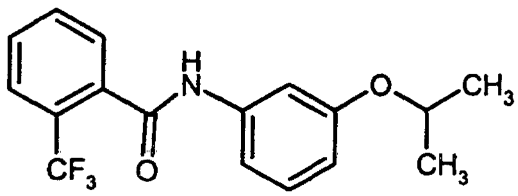

(XXXIX)

(flutolanil)

and/or

(39)the benzothiazole derivative (reference: DE-A-2 250 077) of the formula

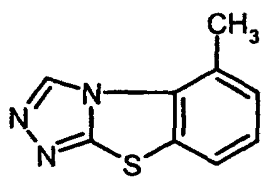

(XL)

(tricyclazole)

and/or

(40) the zinc propylene-1,2-bis-(dithiocarbamidate) (reference: Pesticide Manual, 9th. Ed. (1991), page 726) of the formula

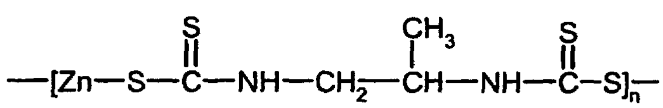

(XLI)

n > = 1

(propineb)

and/or

(41) the compound (reference: DE-A-2 012 656) of the formula

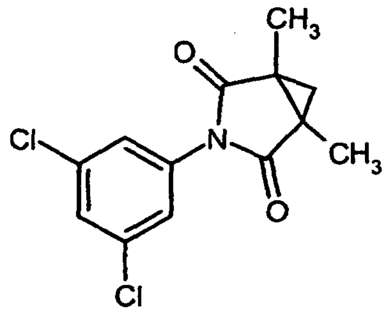

(XLII)

(procymidone)

and/or

(42) a thiocarbamate (reference: Pesticide Manual, 9th. Ed. (1991)) of the formula

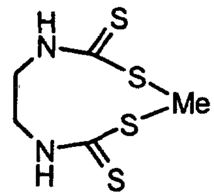

(XLIII)

(mancozeb)

Me = mixture of Zn and Mn

and/or

(43) the phthalimide derivative (reference: Pesticide Manual, 9th. Ed. (1991), page 431) of the formula

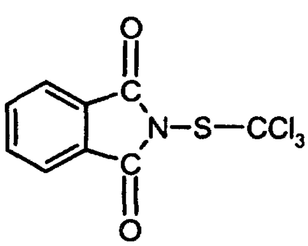

(XLIV)

(folpet)

and/or

(44) the morpholine derivative (reference: EP-A-0 219 756) of the formula

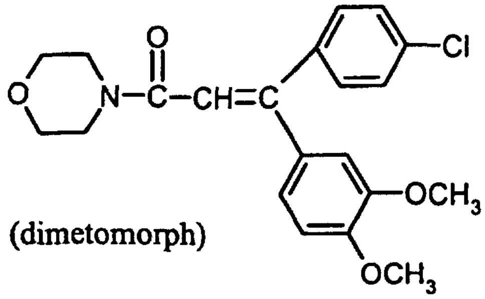

(XLV)

(dimetomorph)

and/or

(45) the cyanoxime derivative (reference: Pesticide Manual, 9th. Ed. (1991), page 206) of the formula

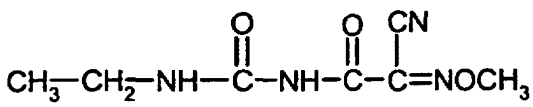

(XLVI)

(cymoxanil)

and/or

(46) the phosphorus compound (reference: Pesticide Manual, 9th. Ed. (1991), page 443) of the formula

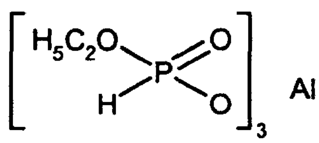

(XLVII)

(fosetyl-Al)

and/or

(47) the oxazolidindione (reference: EP-A-0 393 911) of the formula

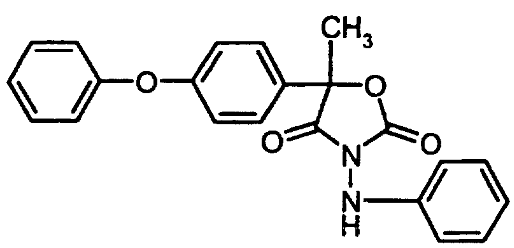

(XLVIII)

(famoxadone)

and/or

(48) the pyrimidine derivative (reference: EP-A-0 270 111) of the formula

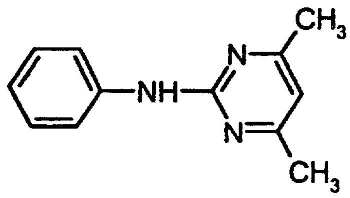

(XLIX)

(pyrimethanil)

and/or

(49)the pyrimidine derivative (reference: EP-A-0 270 111) of the formula

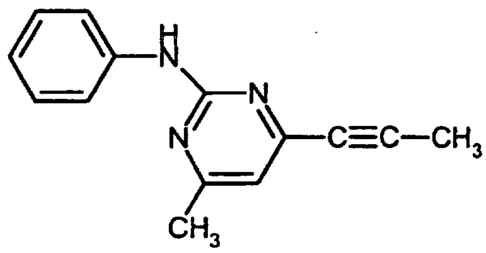

(L)

(mepanipyrim)

and/or

(50) the compound (reference: EP-A-0 472 996) of the formula

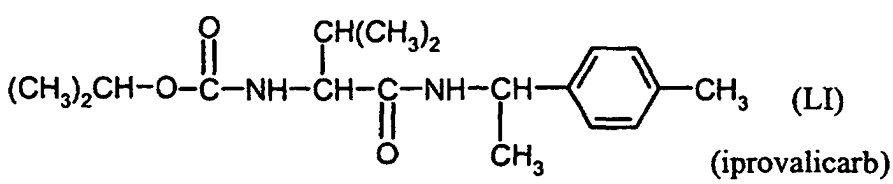

(LI)

(iprovalicarb)

and/or

(51) the aniline derivative (reference: EP-A-0 339 418 ) of the formula

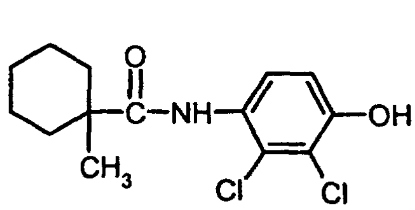

(LII)

(fenhexamid)

and/or

(52) N-[1-(4-chloro-phenyl)-ethyl]-2,2-dichloro-1-ethyl-3-methyl-cyclopropane-carboxamide (reference: EP-A-0 341 475) of the formula

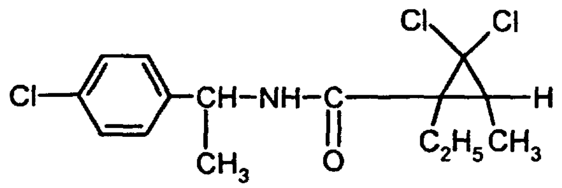

(LIII)

(carpropamid)

and/or

(53) the pyridinamine (reference: EP-A-0 031 257) of the formula

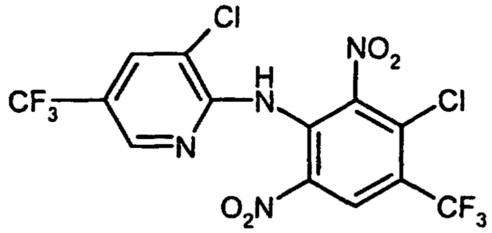

(LIV)

(fluazinam)

and/or

(54) the dicarboxime derivative (reference: US-2 553 770) of the formula

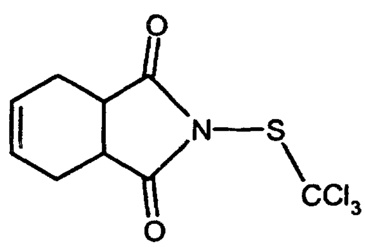

(LV)

(captan)

and/or

(55) the compound (reference: DE-A-1 100 372) of the formula

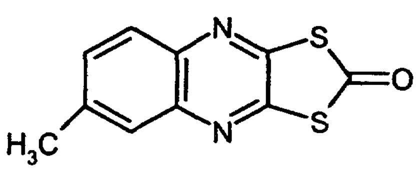

(LVI)

(chinomethionat)

and/or

(56) the compound (reference: EP-A-0 629 616) of the formula

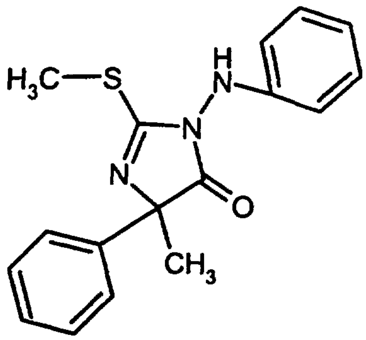

(LVII)

(fenamidone)

and/or

(57) the compound (reference: EP-A-376 279) of the formula

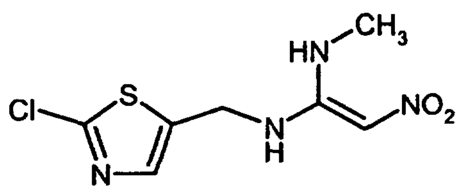

(LVIII)

(chlothianidin)

and/or

(58) the compound (reference: EP-A-235 725) of the formula

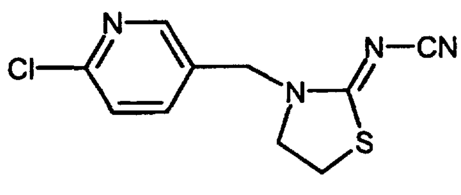

(LIX)

(thiacloprid)

and/or

(59) the compound (reference: EP-A-580 553) of the formula

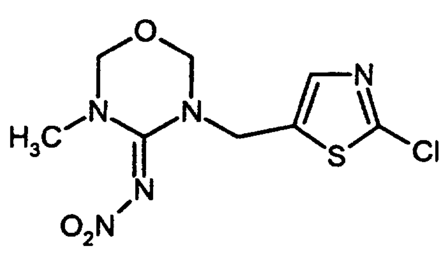

(LXI)

(thiamethoxam)

and/or

(60) the compound (reference: WO-A-91-4965) of the formula

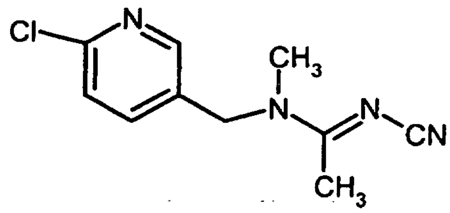

(LXI)

(acetamiprid)

and/or

(61) the compound (reference: EP-A-326 330) of the formula

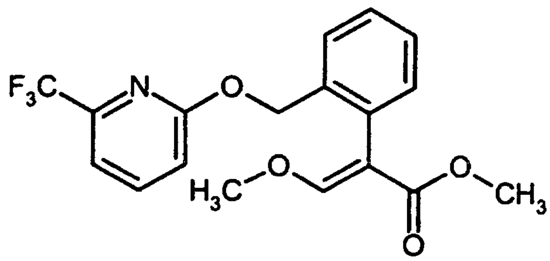

(LXII)

(picoxystrobin)

and/or

(62)

sulphur (LXIII)

and/or

(63)

copper oxychloride (LXIV)

and/or

(64) the compound (reference: DE-A-2 149 923) of the formula

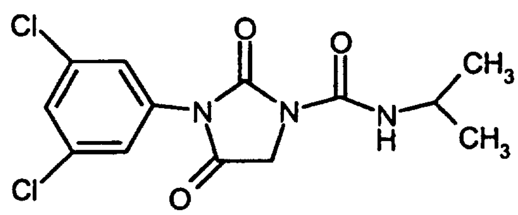

(LXV)

(iprodione)

and/or

(65) the compound (reference: DE-A-2 207 576) of the formula

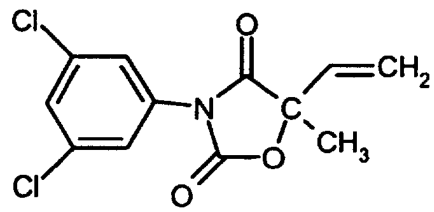

(LXVI)

(vinclozolin)

and/or

(66) the compound (reference: JP-A-575 584) of the formula

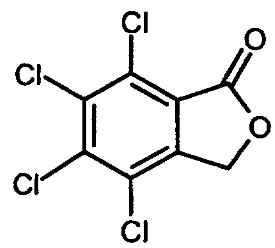

(LXVII)

(phtalid)

and/or

(67) the compound (reference: DE-A-2 300 299) of the formula

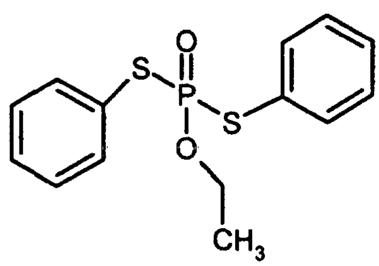

(LXVIII)

(edifenphos)

and/or

(68) the compound (reference:US-3 917 838) of the formula

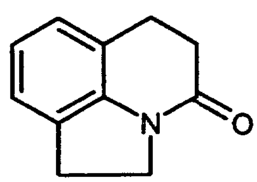

(LXIX)

(pyroquilon)

and/or

(69) the hydroxyethyl-triazole derivative (reference: WO-A-96-16048) of the formula

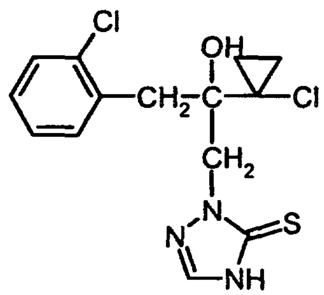

(LXX)

and/or

(70) the halogeno-benzimidazole (reference: WO-A-97-06171) of the formula

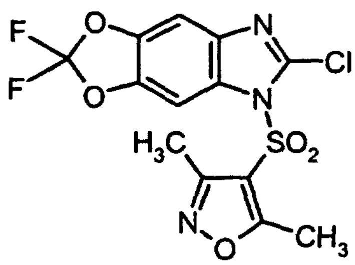

(LXXI)

and/or

(71) the compound (reference: DE-A-196 02 095) of the formula

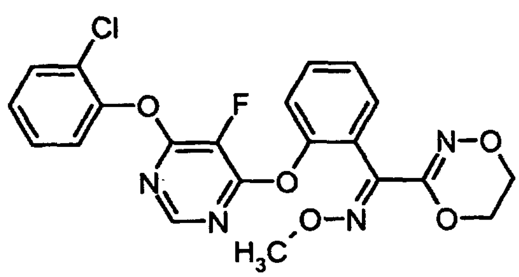

(LXXII)

and/or

(72) the benzamide derivative (reference: EP-A-0 600 629) of the formula

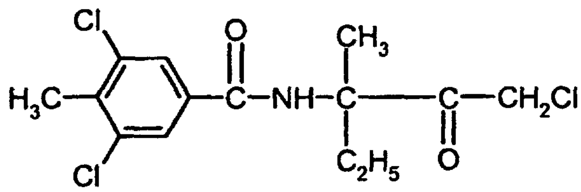

(LXXIII)

(zoxamide)

and/or

(73) the compound (reference: EP-A-298 196) of the formula

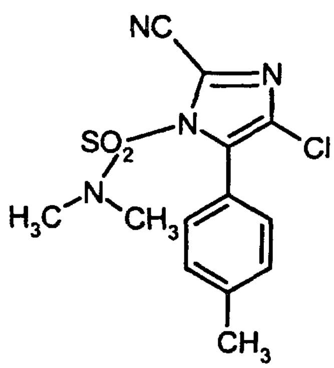

(LXXIV)

(cyamidazosulfamid)

and/or

(74) the compound (reference: WO-A-96 18631) of the formula

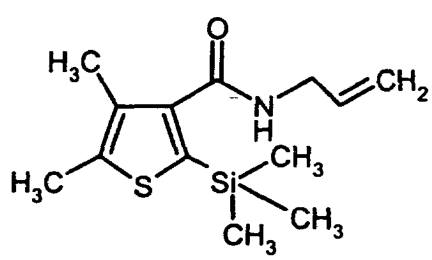

(LXXV)

(silthiofam)

and/or

(75) the compound (reference: EP-A-460 575) of the formula

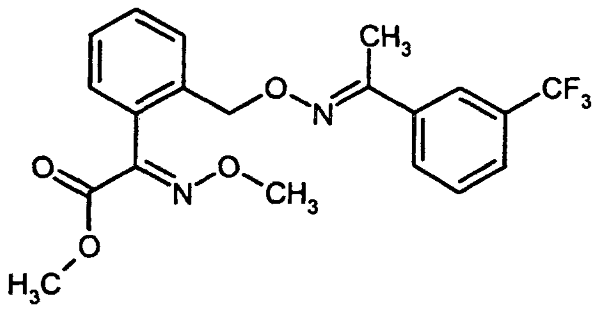

(LXXVI)

(trifloxystrobin)

and/or

(76) N-methyl-2-(methoxyimino)-2-[2-([1-(3-tri-fluoro-methyl-phenyl)-ethoxy]iminomethyl)phenyl]acetamide (reference: EP-A-596 254) of the formula

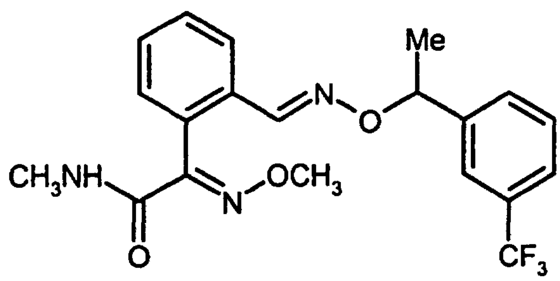

(LXXVII)

and/or

(77) 2-[2-([2-phenyl-2-methoxyimino-1-methylethyl]-imino-oxymethyl)-phenyl]-2-methoxyimino-N-methylacetamide (reference: WO-A-95-21154) of the formula

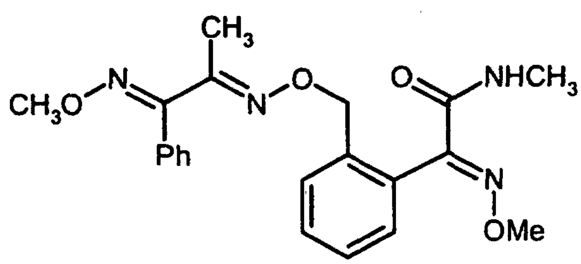

(LXXIII)

and/or

(78) 2-[2-([2-(4-fluorophenyl)-2-methoxyimino-1-methylethyl]iminooxymethyl)phenyl]-2-methoxyimino-N-methylacetamide (reference: WO-A-95-21154) of the formula

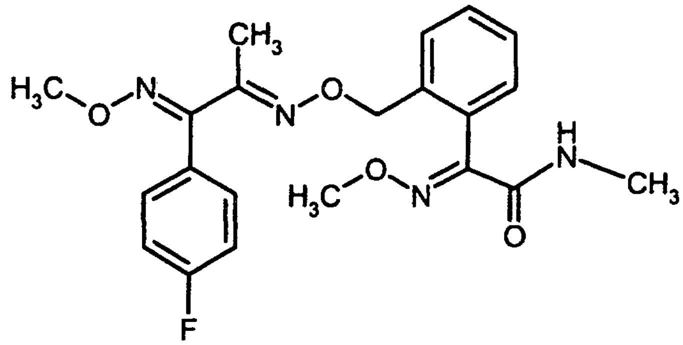

(LXXIX)

and/or

(79) 2-[4-methoxy-3-(1-methylethoxy)-1,4-diazabuta-1,3-dienyl-oxymethyl]phenyl-2-methoximino-N-methyl-acetamide (reference: DE-A-19 528 651) of the formula

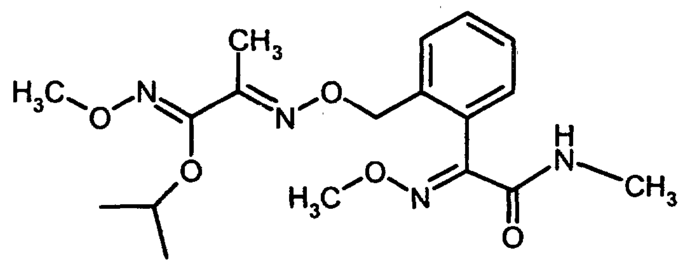

(LXXX)

and/or

(80) methyl N-(2-[1-(4-chlorophenyl)pyrazol-3-yloxymethyl]phenyl)-N-methoxycarbamate (reference: DE-A-44 23 612) of the formula

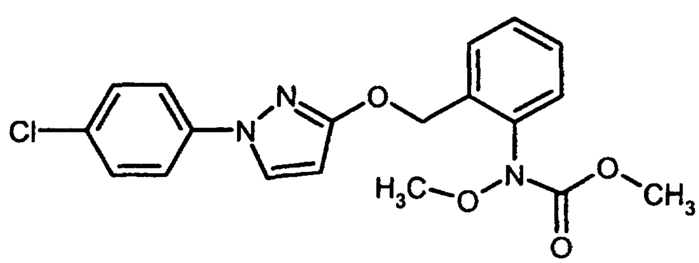

(LXXXI)

and/or

(81) 2,4-dihydro-5-methoxy-2-methyl-4-[2-([([1-(3-tri-fluoro-methylphenyl)ethylidene]amino)oxy]methyl)phenyl]-3H-1,2,4-triazol-3-one (reference: WO-A-98-23155) of the formula

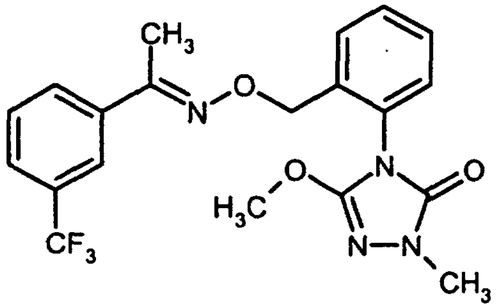

(LXXXII)

and/or

(82) the compound of the formula

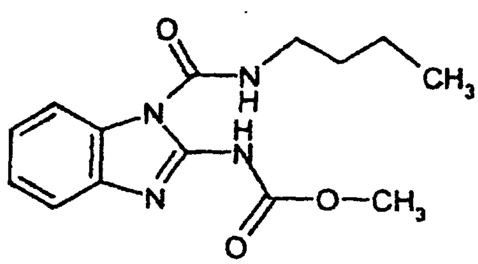

(LXXXIII)

(benomyl).

2. Active compound combination according to Claim 1, comprising a compound of the formula (I) and one of the compounds 1) to 82) in a mixing ratio of compound of the formula (I) to in each case one compound of the formulae (II) to (LXXXIII) of 20:1 to 1:50 parts by weight.

3. Composition according to at least one of claims 1 and 2, **characterized in that** in the active compound combinations the weight ratio of active compound of the formula (I) to

- active compound of group (1) is from 10:1 to 1:20,
- active compound of group (2) is from 10:1 to 1:20,
- active compound of group (3) is from 10:1 to 1:20,
- active compound of group (4) is from 10:1 to 1:20,
- active compound of group (5) is from 10:1 to 1:20,
- active compound of group (6) is from 10: 1 to 1:10,
- active compound of group (7) is from 1:1 to 1:50,
- active compound of group (8) is from 10:1 to 1:10,
- active compound of group (9) is from 10:1 to 1:10,
- active compound of group (10) is from 10:1 to 1:10,
- active compound of group (11) is from 10:1 to 1:10,
- active compound of group (12) is from 10:1 to 1:10,
- active compound of group (13) is from 10:1 to 1:10,
- active compound of group (14) is from 10:1 to 1:10,
- active compound of group (15) is from 10:1 to 1:10,
- active compound of group (16) is from 10:1 to 1:10,
- active compound of group (17) is from 5:1 to 1:20,
- active compound of group (18) is from 10:1 to 1:10,
- active compound of group (19) is from 10:1 to 1:10,
- active compound of group (20) is from 10:1 to 1:10,

- active compound of group (21) is from 10:1 to 1:10,
- active compound of group (22) is from 10:1 to 1:10,
- active compound of group (23) is from 20:1 to 1:20,
- active compound of group (24) is from 1:1 to 1:50,
- active compound of group (25) is from 1:0,1 to 1:50,
- active compound of group (26) is from 1:0,1 to 1:50,
- active compound of group (27) is from 10:1 to 1:10,
- active compound of group (28) is from 10:1 to 1:10,
- active compound of group (29) is from 10:1 to 1:10,
- active compound of group (30) is from 10:1 to 1:10,
- active compound of group (31) is from 20:1 to 1:10,
- active compound of group (32) is from 20:1 to 1:10,
- active compound of group (33) is from 20:1 to 1:10,
- active compound of group (34) is from 20:1 to 1:10,
- active compound of group (35) is from 10:1 to 1:10,
- active compound of group (36) is from 50:1 to 1:50,
- active compound of group (37) is from 10:1 to 1:10,
- active compound of group (38) is from 10:1 to 1:10,
- active compound of group (39) is from 10:1 to 1:10,
- active compound of group (40) is from 1:1 to 1:50,
- active compound of group (41) is from 10:1 to 1:10,
- active compound of group (42) is from 1:1 to 1:50,
- active compound of group (43) is from 1:1 to 1:50,
- active compound of group (44) is from 10: 1 to 1:10,
- active compound of group (45) is from 10:1 to 1:10,
- active compound of group (46) is from 10:1 to 1:50,
- active compound of group (47) is from 10:1 to 1:10,
- active compound of group (48) is from 5:1 to 1:20,
- active compound of group (49) is from 5:1 to 1:20,
- active compound of group (50) is from 10:1 to 1:10,
- active compound of group (51) is from 10:1 to 1:10,
- active compound of group (52) is from 10:1 to 1:10,
- active compound of group (53) is from 10:1 to 1:10,
- active compound of group (54) is from 5:1 to 1:50,
- active compound of group (55) is from 5:1 to 1:50,
- active compound of group (56) is from 10:1 to 1:10,
- active compound of group (57) is from 20:1 to 1:20,
- active compound of group (58) is from 20:1 to 1:20,
- active compound of group (59) is from 20:1 to 1:20,
- active compound of group (60) is from 20:1 to 1:20,
- active compound of group (61) is from 10:1 to 1:10,
- active compound of group (62) is from 20:1 to 1:20,
- active compound of group (63) is from 20:1 to 1:20,
- active compound of group (64) is from 10:1 to 1:10,
- active compound of group (65) is from 10:1 to 1:10,
- active compound of group (66) is from 10:1 to 1:10,
- active compound of group (67) is from 10:1 to 1:10,
- active compound of group (68) is from 10:1 to 1:10,
- active compound of group (69) is from 20:1 to 1:5,
- active compound of group (70) is from 50:1 to 1:10,
- active compound of group (71) is from 10:1 to 1:10,
- active compound of group (72) is from 50:1 to 1:10,
- active compound of group (73) is from 20:1 to 1:5,
- active compound of group (74) is from 20:1 to 1:10,
- active compound of group (75) is from 10:1 to 1:10,
- active compound of group (76) is from 10:1 to 1:10,
- active compound of group (77) is from 10:1 to 1:10,
- active compound of group (78) is from 10:1 to 1:10,

- active compound of group (79) is from 10:1 to 1:10,
- active compound of group (80) is from 10:1 to 1:10,
- active compound of group (81) is from 10:1 to 1:10,
- active compound of group (82) is from 10:1 to 1:10.

**4.** Method for controlling phytopathogenic fungi, **characterized in that** active compound combinations according to any of Claims 1 to 3 are allowed to act on fungi and/or their habitat.

**5.** Use of active compound combinations according to at least one of Claims 1 to 3 for controlling phytopathogenic fungi.

**6.** Process for preparing fungicidal compositions, **characterized in that** active compound combinations according to at least one of Claims 1 to 3 are mixed with extenders and/or surfactants.

**Revendications**

**1.** Combinaisons de substances actives, contenant au moins un composé de formule

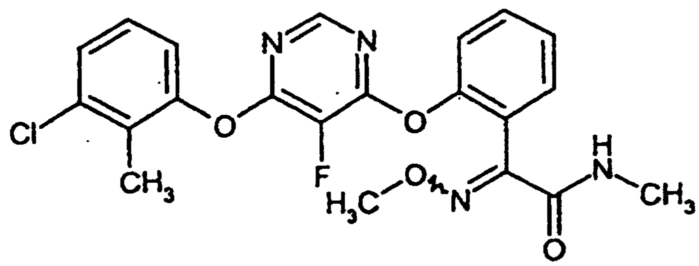

(I)

et

(1) le 8-tertiobutyl-2-(N-éthyl-N-n-propyl-amino)-méthyl-1,4-dioxaspiro-[5,4]-décane (référence : EP-A-0 281 842) de formule

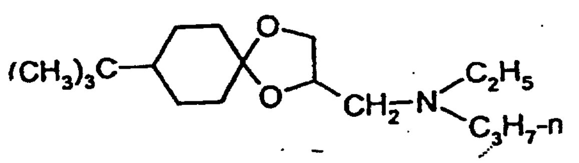

(II)

(spiroxamine)

et/ou
(2) la 5,7-dichloro-4-(4-fluorophénoxy)-quinoléine (référence : EP-A-326 330) de formule

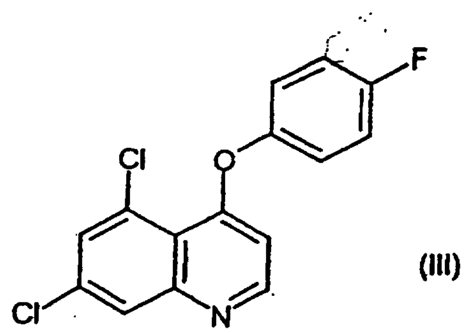

(III)

(quinoxyfène)

et/ou

(3) le dérivé de triazole (référence : EP-A-0 040 345) de formule

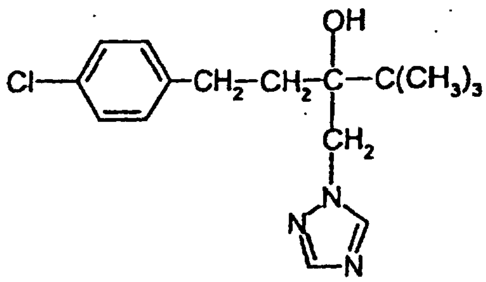

(IV)

(tébuconazole)

et/ou

(4) la 1-[3-[4-(1,1-diméthyléthyl)phényl]-2-méthylpropyl]-pipéridine (référence : DE-A-2 752 153) de formule

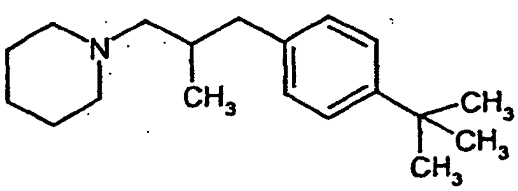

(V)

(fenpropidine)

et/ou

(5) la (+ -)-cis-4[3-[4(1,1-diméthyléthyl)phényl]-2-méthylpropyl]-2,6-diméthyl-morpholine (référence DE-A-2 656 747) de formule

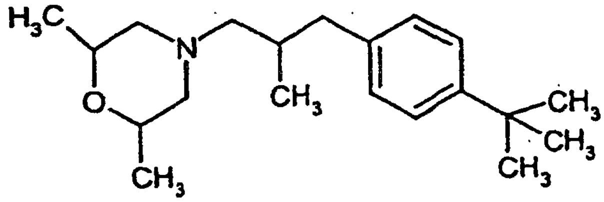

(VI)

(fenpropimorphe)

et/ou

(6) le N-(1-cyano-1,2-diméthylpropyl)-2-(2,4-dichlorophénoxy)-propanamide (référence : EP-A 262 393) de formule

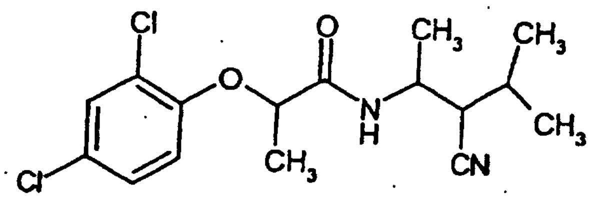

(VII)

(fénoxanil)

et/ou

(7) le tétrachlorisophtalo-dinitrile (référence : US-3 290 353) de formule

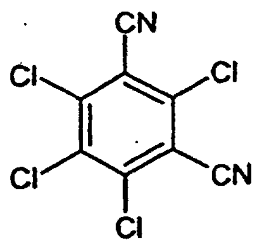

(VIII)

(chlorothalonil)

et/ou

(8) la 1-(4-chloro-phénoxy)-3,3-diméthyl-1-(1,2,4-triazole-1-yl)-butane-2-one (référence : DE-A-22 01 063) de formule

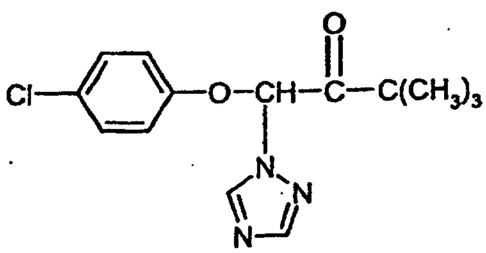

(IX)

(triadiméfon)

et/ou

(9) le 1-(4-chloro-phénoxy)-3,3-diméthyl-1-(1,2,4-triazole-1-yl)-butane-2-ol (référence : DE-A-22 2 324 010) de formule

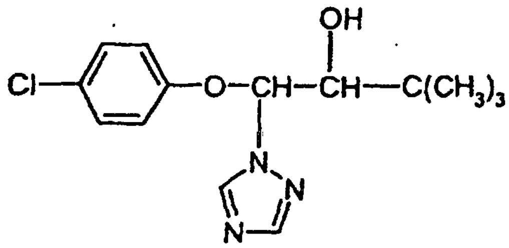

(X)

(triadiménol)

et/ou

(10) le triazole (référence : EP-A-196 038) de formule

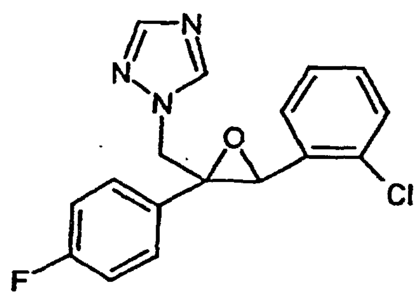

(XI)

(époxiconazole)

et/ou

(11) le triazole (référence : EP-A-329 397) de formule

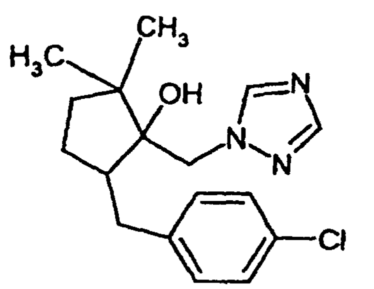

(XII)

(métconazole)

et/ou

(12) le triazole (référence : EP-A-183 458) de formule

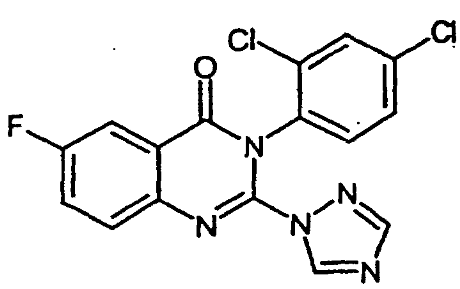

(XIII)

(fluquinconazole)

et/ou

(13) le triazole (référence : DE-A-3 406 993) de formule

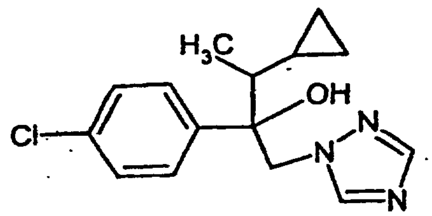

(XIV)

(cyproconazole)

et/ou

(14) le triazole (référence : Pesticide Manual, 9e éd. (1191), page 654) de formule

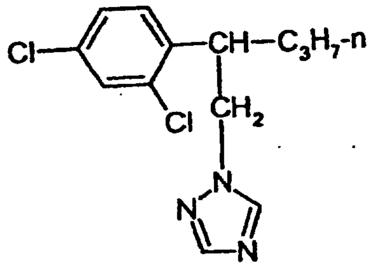

(XV)

(penconazole)

et/ou

(15) le composé (référence : EP-A-253 213) de formule

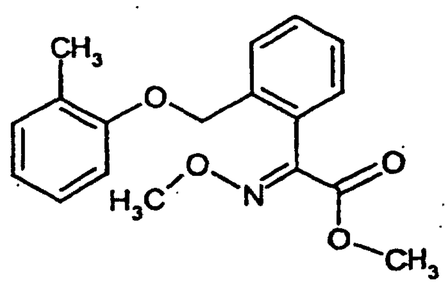

(XVI)

(krésoxime-méthyl)

et/ou

(16) le composé (référence : EP-A-0 382 375) de formule

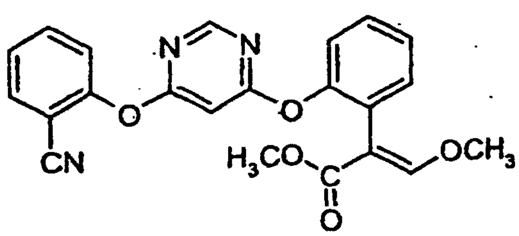

(XVII)

(azoxystrobine)

et/ou

(17) le composé (référence : EP-A-0 310 550) de formule

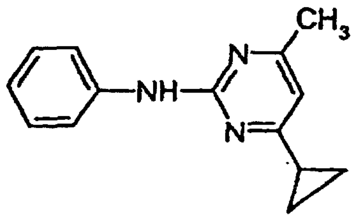

(XVIII)

(cyprodinil)

et/ou

(18) le triacétate de N,N'''-(imino-di-8,1-octanediyl)bis-guanidine (référence : EP-A-155 509) de formule

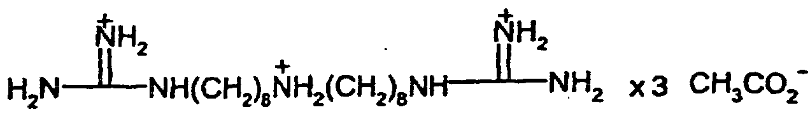

(XIX)

(iminoctadine triacétate)

et/ou

(19) le triazole (référence : EP-A-068 813) de formule

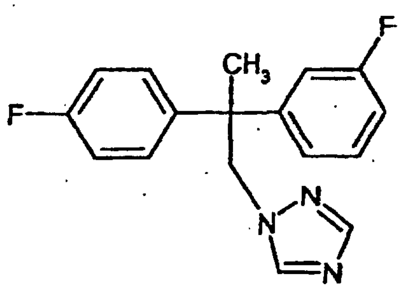

(XX)

(flusilazole)

et/ou

(20) le dérivé d'imidazole (référence : DE-A-2 429 523) de formule

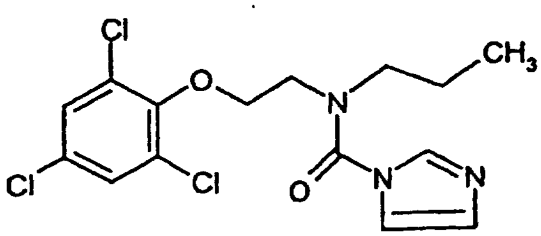

(XXI)

(prochloraz)

et/ou

(21) le triazole (référence : DE-A-2 551 560) de formule

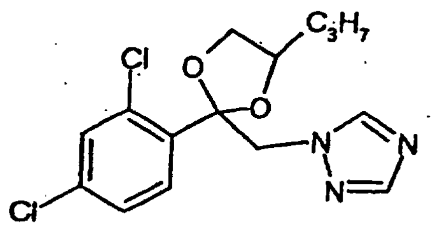

(XXii)

(propiconazole)

et/ou

(22) le 1-(4-phényl-phénoxy)-3,3-diméthyl-1-(1,2,4-triazole-1-yl)-butane-2-ol (référence : DE-A-2 324 010) de formule

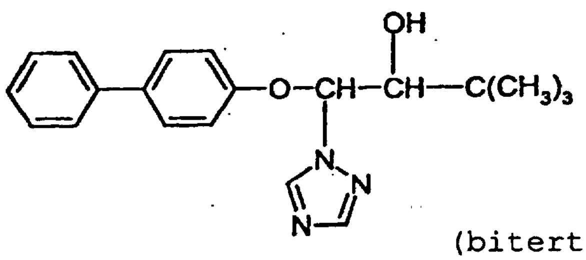

(XXIII)

(bitertanol)

et/ou

(23) la 1-[(6-chloro-3-pyridinyl)-méthyl]-N-nitro-2-imidazolidine-imine (référence : Pesticide Manual, 9[e] éd. (1991), page 491) de formule

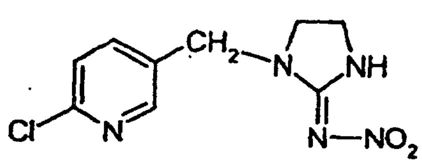

(XXIV)

(imidaclopride)

et/ou

(24) le dérivé d'aniline (référence : DE-A-1 193 498) de formule

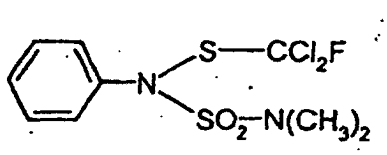

(XXV)

(dichlofluanide)

et/ou

(25) le dérivé d'aniline (référence : DE-A-119 34 98) de formule

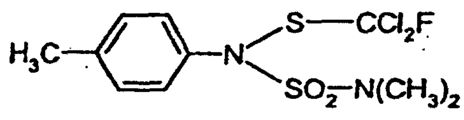

(XXVI)

(tolylfluanide)

et/ou

(26) le dérivé d'aniline (référence : Pesticide Manual, 9e éd. (1991), page 554) de formule

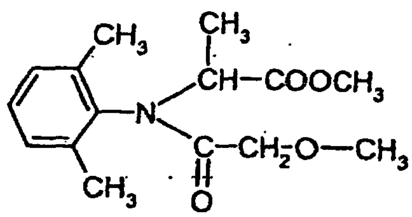

(XXVII) (métalaxyl)

et/ou

(27) le 4-(2,3-dichlorophényl)-1H-pyrrole-3-carbonitrile (référence : EP-A-236 272) de formule

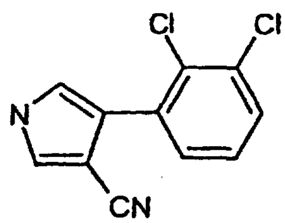

(XXVIII) (fenpiclonil)

et/ou

(28) le dérivé de triazole (référence : EP-A-112 284) de formule

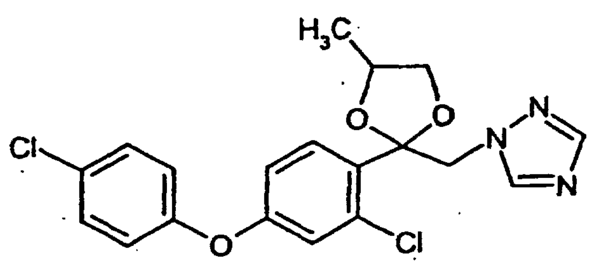

(XXIX)

(difenconazole)

et/ou

(29) le dérivé de pyrrole (référence : EP-A-206 999) de formule

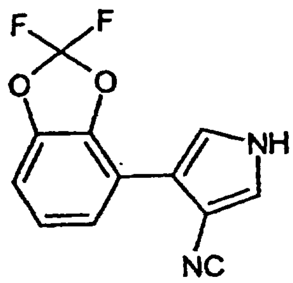

(XXX)

(fludioxonil)

et/ou

(30) le dérivé de benzimidazole (référence : US-3 010 968) de formule

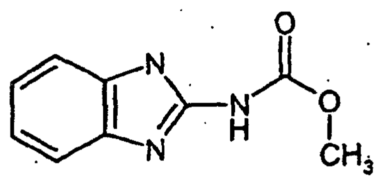

(XXXI)

(carbendazime)

et/ou

(31) le composé (référence : CASRN (3878-19-1)) de formule

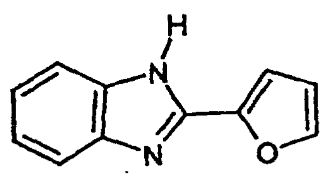

(XXXII)

(fubéridazole)

et/ou

(32) le dérivé d'imidazole (référence : DE-A-2 063 857) de formule

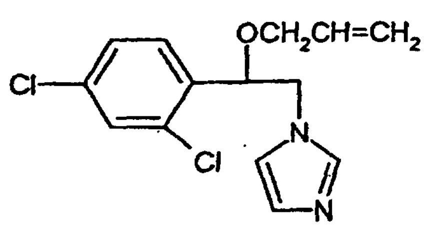

(XXXIII)

(énilconazole)

et/ou

(33) le dérivé d'imidazole de formule

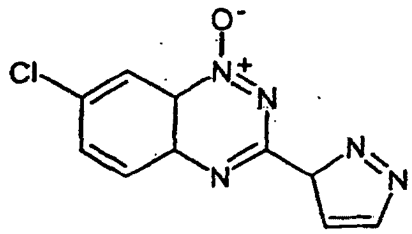

(XXXIV)

(triazoxide)

et/ou

(34) le composé (référence : DE-A-2 709 264) de formule

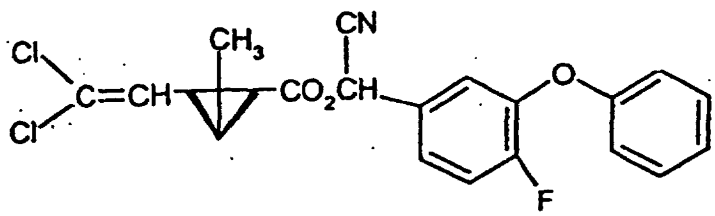

(XXXV)

(cyfluthrine)

et/ou

(35) un dérivé de guanidine (référence : Pesticide Manual, 9e éd. (1991), page 461) de formule

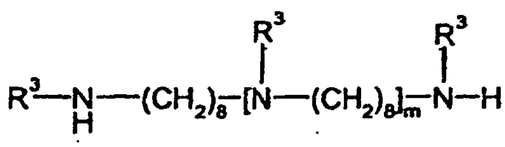

x (2 + m) $CH_3COOH$

(XXXVI)

(guazatine)

dans laquelle

m représente des nombres entiers de 0 à 5 et

$R^3$ représente l'hydrogène (17 à 23%) ou le reste de formule

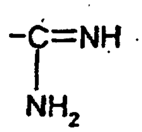

(77 à 83%)

et/ou

(36) le dérivé de benzothiadiazole (référence : EP-A-0 313 512) de formule

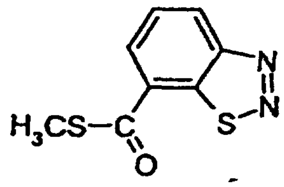

(XXXVII)

(acibenzolar-S-méthyl)

et/ou

(37) le dérivé d'urée (référence : DE-A-2 732 257) de formule

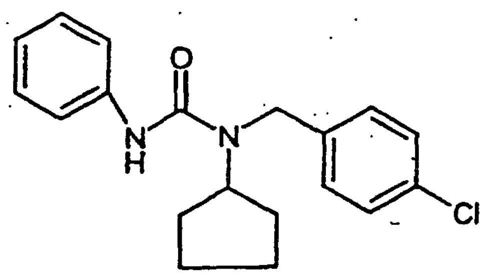

(XXXVIII)

(pencycuron)

et/ou

(38) le dérivé de benzamide (référence : DE-A-2 731 522) de formule

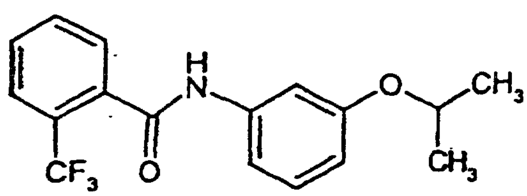

(XXXIX)

(flutolanil)

et/ou

(39) le dérivé de benzothiazole (référence : DE-A-2 250 077) de formule

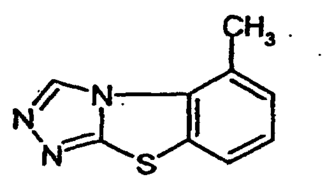

(XL)

(tricyclazole)

et/ou

(40) le propylène-1,2-bis-(dithiocarbamidate) de zinc (référence : Pesticide Manual, 9[e] éd. (1991) page 726) de formule

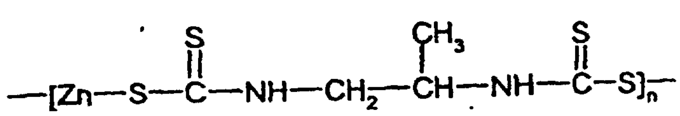

(XLI)

$n >= 1$

(propinèbe)

et/ou
(41) le composé (référence : DE-A-2 012 656) de formule

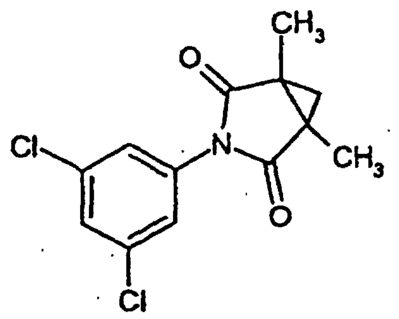

(XLII)

(procymidone)

et/ou
(42) un thiocarbamate (référence : Pesticide Manual, 9e éd. (1991)) de formule

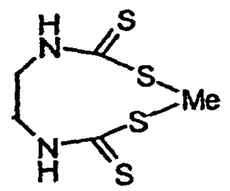

(XLIII) (mancozèbe)

Me = mélange de Zn et Mn

et/ou
(43) le dérivé de phtalimide (référence : Pesticide Manual, 9e éd. (1991), page 431) de formule

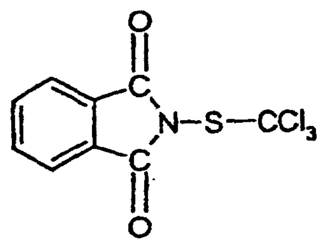

(XLIV)

(folpet)

et/ou
(44) le dérivé de morpholine (référence : EP-A-0 219 756) de formule

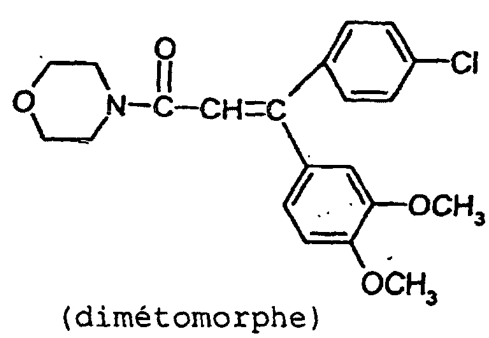

(XLV)

(dimétomorphe)

et/ou

(45) le dérivé de cyanoxime (référence : Pesticide Manual, 9e éd. (1991), page 206) de formule

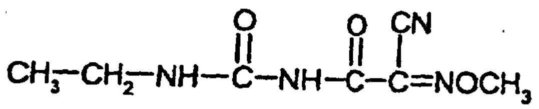

(XLVI)

(cymoxanil)

et/ou

(46) le composé de phosphore (référence : Pesticide Manual, 9e éd. (1991), page 443) de formule

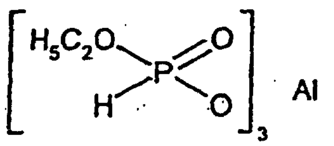

(XLVII)

(fosétyl-Al)

et/ou

(47) l'oxozolidinedione (référence : EP-A-0 393 911) de formule

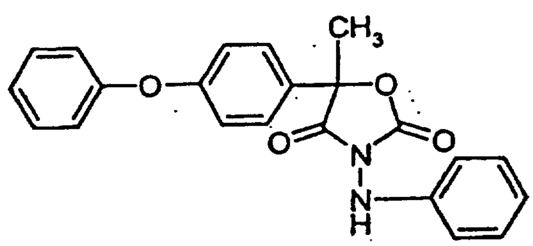

(XLVIII)

(famoxadone)

et/ou

(48) le dérivé de pyrimidine (référence : EP-A-0 270 111) de formule

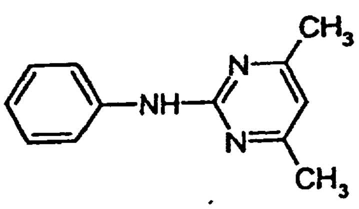

(XLIX)

(pyriméthanil)

et/ou

(49) le dérivé de pyrimidine (référence : EP-A-0 270 111) de formule

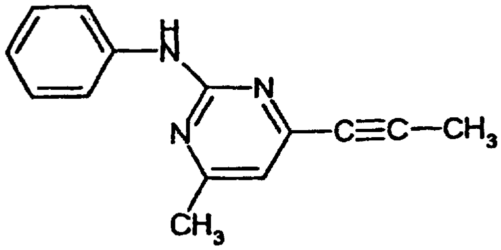

(L)

(mépanipyrim)

et/ou

(50) le composé (référence : EP-A-0 472 996) de formule

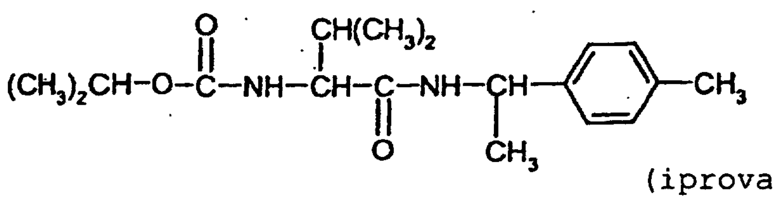

(LI)

(iprovalicarbe)

et/ou

(51) le dérivé d'aniline (référence : EP-A-0 339 418) de formule

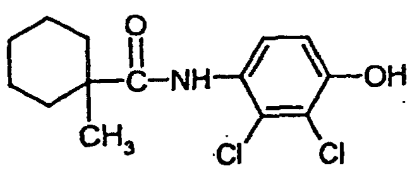

, (LII)

(fenhexamide)

et/ou

(52) le N-[1-(4-chlorophényl)-éthyl]-2,2-dichloro-1-éthyl-3-méthyl-cyclopropane-carboxamide (référence : EP-A-0 341 475) de formule

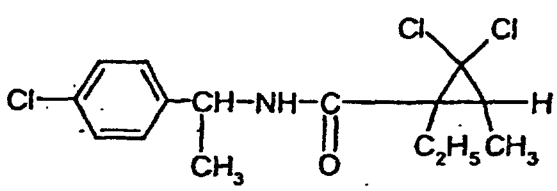

(LIII)

(carpropamide)

et/ou

(53) la pyridinamine (référence : EP-A-0 031 257) de formule

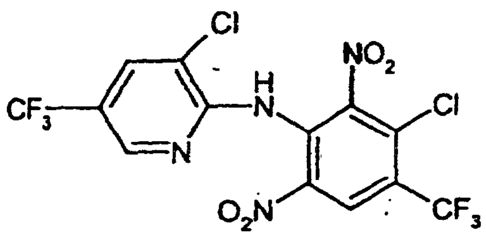

(LIV)

(fluazinam)

et/ou

(54) le dérivé de dicarboxime (référence : US-2 553 770) de formule

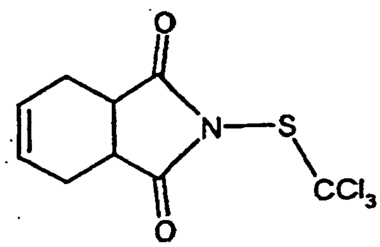

(LV)

(captane)

et/ou

(55) le composé (référence : DE-A-1 100 372) de formule

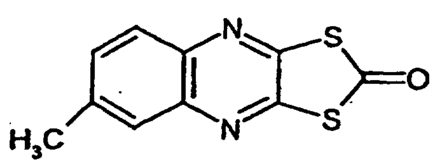

(LVI)

(chinométhionate)

et/ou

(56) le composé (référence : EP-A-0 629 616) de formule

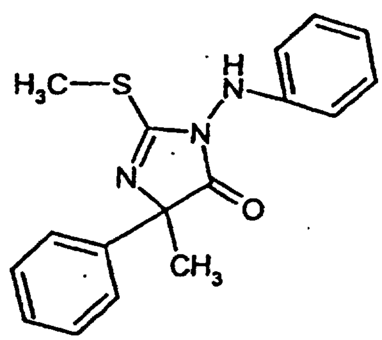

(LVII)

(fénamidone)

et/ou

(57) le composé (référence : EP-A-376 279) de formule

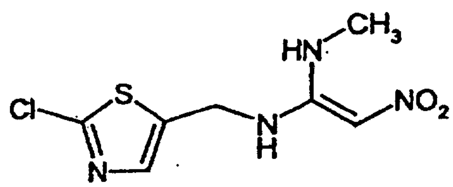

(LVIII)

(chlothianidine)

et/ou

(58) le composé (référence : EP-A-235 725) de formule

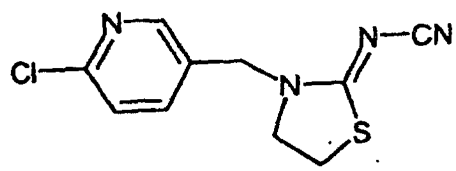

(LIX)

(thiaclopride)

et/ou

(59) le composé (référence : EP-A-580 553) de formule

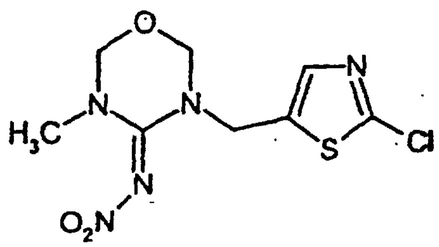

(LXI)

(thiaméthoxam)

et/ou

(60) le composé (référence : WO-A-91-4965) de formule

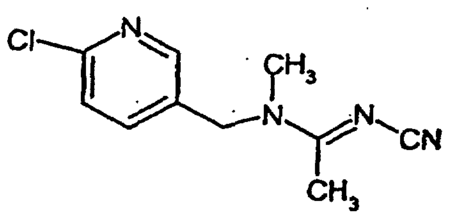

(LXI)

(acétamipride)

et/ou

(61) le composé (référence : EP-A-326 330) de formule

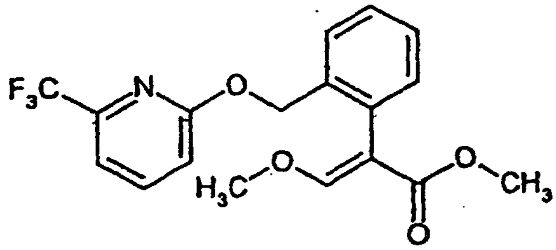

(LXII)

(picoxystrobine)

et/ou
(62)

le soufre (LXIII)

et/ou
(63)

l'oxychlorure de cuivre (LXIV)

et/ou
(64) le composé (référence : DE-A-2 149 923) de formule

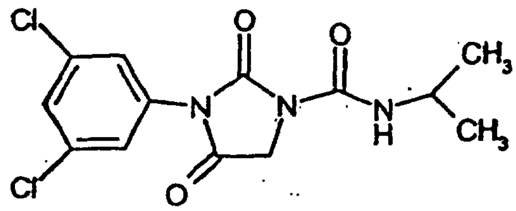

(LXV)

(iprodione)

et/ou
(65) le composé (référence : DE-A-2 207 576) de formule

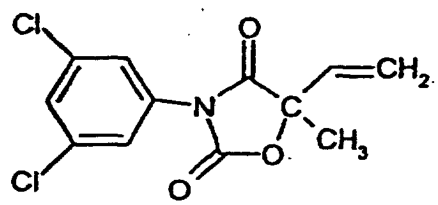

(LXVI)

(vinclozoline)

et/ou
(66) le composé (référence : JP-A-575 584) de formule

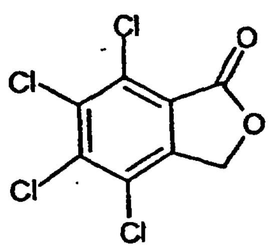

(LXVII)

(phtalide)

et/ou
(67) le composé (référence : DE-A-2 300 299) de formule

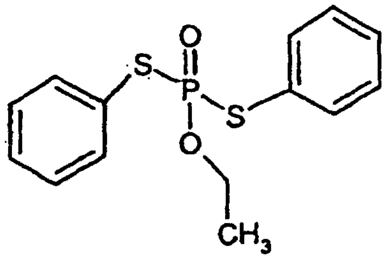

(LXVIII)

(édifenphos)

et/ou

(68) le composé (référence : US-3 917 838) de formule

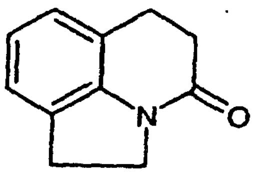

(LXIX)

(pyroquilone)

et/ou

(69) le dérivé d'hydroxyéthyl-triazole (référence : WO-A-96-16048) de formule

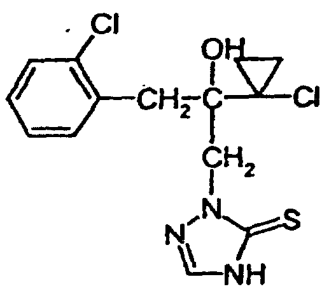

(LXX)

et/ou

(70) l'halogéno-benzimidazole (référence : WO-A-97-06171) de formule

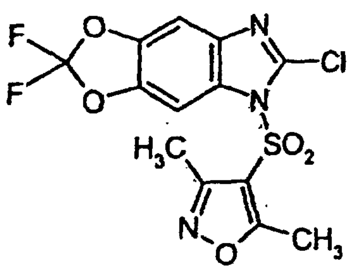

(LXXI)

et/ou

(71) le composé (référence : DE-A-196 02 095) de formule

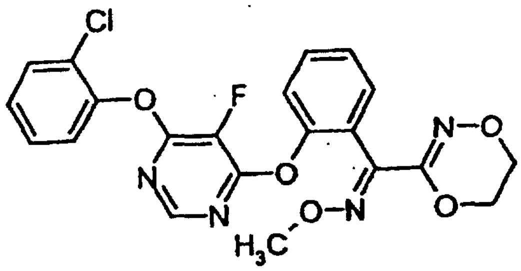

(LXXII)

et/ou

(72) le dérivé de benzamide (référence : EP-A-0 600 629) de formule

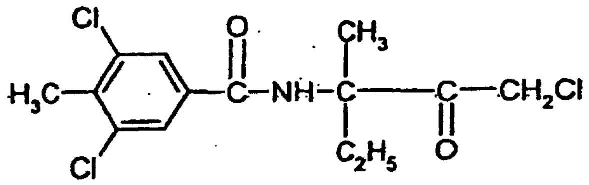

(LXXIII)

(zoxamide)

et/ou

(73) le composé (référence : EP-A-298 196) de formule

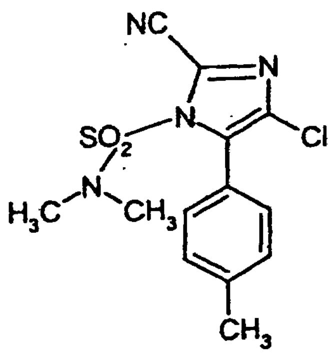

(LXXIV)

(cyamidazosulfamide)

et/ou

(74) le composé (référence : WO-A-96 18631) de formule

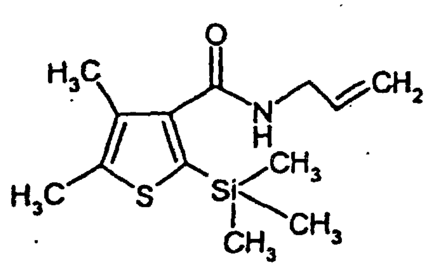

(LXXV)

(silthiofam)

et/ou

(75) le composé (référence : EP-A-460 575) de formule

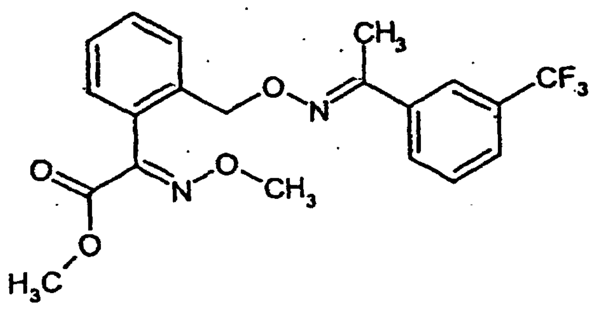

(LXXVI)

(trifloxystrobine)

et/ou

(76) le N-méthyl-2-(méthoxyimino)-2-[2-([1-(3-trifluoro-méthyl-phényl)-éthoxy]-iminométhyl)phényl]-acétamide (référence : EP-A-596 254) de formule

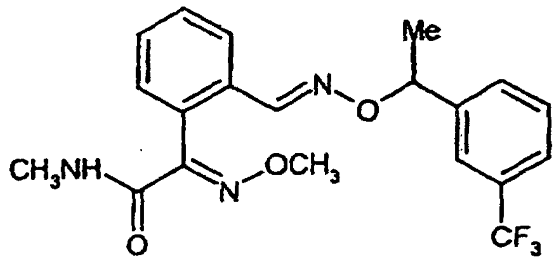

(LXXVII)·

et/ou

(77) le 2-[2-([2-phényl-2-méthoxyimino-1-méthyléthyl]-imino-oxyméthyl)-phényl]-2-méthoxyimino-N-méthyl-acétamide (référence : WO-A-95-21154) de formule

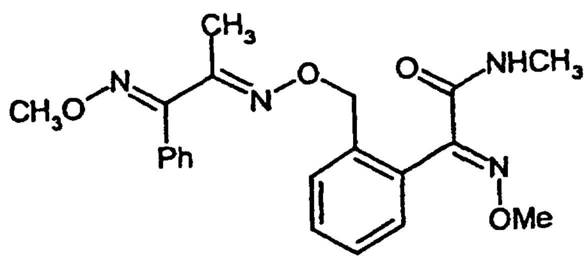

(LXXIII)

et/ou

(78) le 2-[2-([2-(4-fluorophényl)-2-méthoxyimino-1-méthyléthyl]iminooxy-méthyl)phényl]-2-méthoxyimino-N-méthyl-acétamide (référence : WO-A-95-21154) de formule

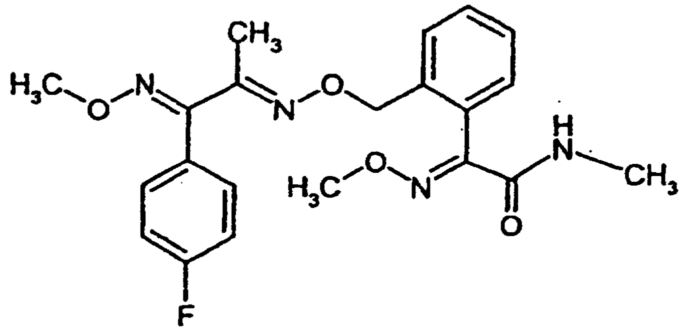

(LXXIX)

et/ou

(79) le 2-[4-méthoxy-3-(méthyléthoxy)-1,4-diazabuta-1,3-diényl-oxy-méthyl]phényl-2-méthoximino-N-méthyl-acétamide (référence : DE-A-19 528 651) de formule

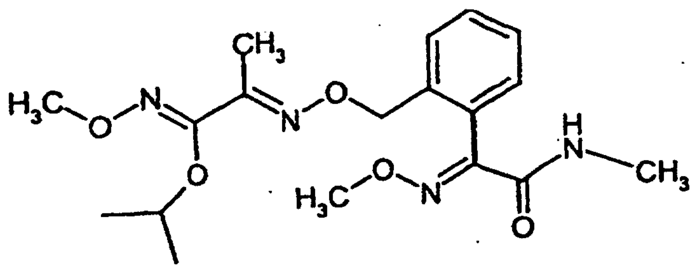

(LXXX)

et/ou

(80) le N-(2-[1-(4-chlorophényl)pyrazole-3-yloxyméthyl]phényl)-N-méthoxycarbamate de méthyle (référence : DE-A-44 23 612) de formule

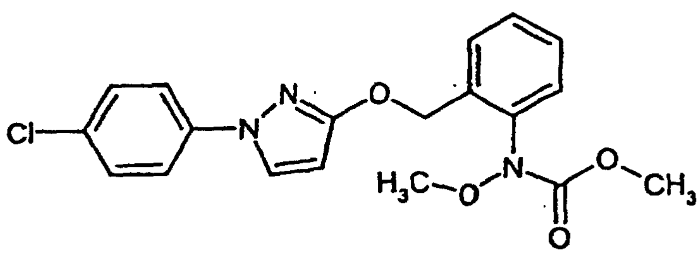

(LXXXI)

et/ou

(81) la 2,4-dihydro-5-méthoxy-2-méthyl-4-[2-([([1-(3-tri-fluoro-méthyl-phényl)éthylidène)amino)oxy]-méthyl) phényl]-3H-1,2,4-triazole-3-one (référence : WO-A-98-23155) de formule

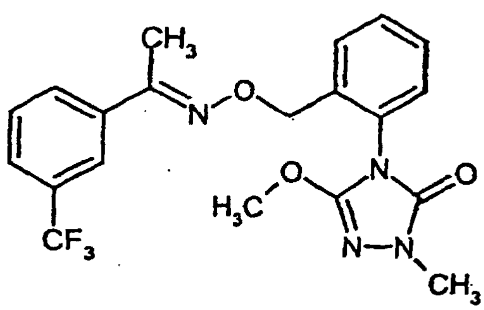

(LXXXII)

et/ou
(82) le composé de formule

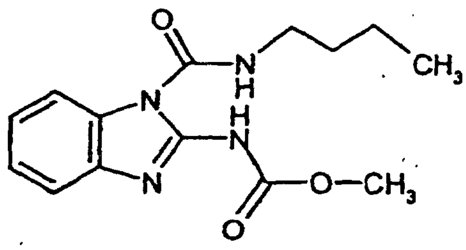

(LXXXIII)
(bénomyl)

2. Combinaison de substances actives suivant la revendication 1, contenant un composé de formule (I) et l'un des composés 1) à 82) dans un rapport de mélange d'un composé de formule (I) à chaque fois un composé de formules (II) à (LXXXIII) de 20:1 à 1:50, en parties en poids.

3. Composition suivant au moins l'une des revendications 1 et 2, **caractérisée en ce que**, dans les combinaisons de substances actives, le rapport en poids de la substance active de formule (I) se situe

- pour la substance active du groupe (1), entre 10:1 et 1:20,
- pour la substance active du groupe (2), entre 10:1 et 1:20,
- pour la substance active du groupe (3), entre 10:1 et 1:20,
- pour la substance active du groupe (4), entre 10:1 et 1:20,
- pour la substance active du groupe (5), entre 10:1 et 1:20,
- pour la substance active du groupe (6), entre 10:1 et 1:10,
- pour la substance active du groupe (7), entre 1:1 et 1:50,
- pour la substance active du groupe (8), entre 10:1 et 1:10,
- pour la substance active du groupe (9), entre 10:1 et 1:10,
- pour la substance active du groupe (10), entre 10:1 et 1:10,
- pour la substance active du groupe (11), entre 10:1 et 1:10,
- pour la substance active du groupe (12), entre 10:1 et 1:10,
- pour la substance active du groupe (13), entre 10:1 et 1:10,
- pour la substance active du groupe (14), entre 10:1 et 1:10,
- pour la substance active du groupe (15), entre 10:1 et 1:10,
- pour la substance active du groupe (16), entre 10:1 et 1:10,
- pour la substance active du groupe (17), entre 5:1 et 1:20,
- pour la substance active du groupe (18), entre 10:1 et 1:10,
- pour la substance active du groupe (19), entre 10:1 et 1:10,
- pour la substance active du groupe (20), entre 10:1 et 1:10,
- pour la substance active du groupe (21), entre 10:1 et 1:10,
- pour la substance active du groupe (22), entre 10:1 et 1:10,
- pour la substance active du groupe (23), entre 20:1 et 1:20,
- pour la substance active du groupe (24), entre 1:1 et 1:50,
- pour la substance active du groupe (25), entre 1:0,1 et 1:50,
- pour la substance active du groupe (26), entre 1:0,1 et 1:50,
- pour la substance active du groupe (27), entre 10:1 et 1:10,
- pour la substance active du groupe (28), entre 10:1 et 1:10,
- pour la substance active du groupe (29), entre 10:1 et 1:10,
- pour la substance active du groupe (30), entre 10:1 et 1:10,
- pour la substance active du groupe (31), entre 20:1 et 1:10,
- pour la substance active du groupe (32), entre 20:1 et 1:10,
- pour la substance active du groupe (33), entre 20:1 et 1:10,
- pour la substance active du groupe (34), entre 20:1 et 1:10,
- pour la substance active du groupe (35), entre 10:1 et 1:10,

- pour la substance active du groupe (36), entre 50:1 et 1:50,
- pour la substance active du groupe (37), entre 10:1 et 1:10,
- pour la substance active du groupe (38), entre 10:1 et 1:10,
- pour la substance active du groupe (39), entre 10:1 et 1:10,
- pour la substance active du groupe (40), entre 1:1 et 1:50,
- pour la substance active du groupe (41), entre 10:1 et 1:10,
- pour la substance active du groupe (42), entre 1:1 et 1:50,
- pour la substance active du groupe (43), entre 1:1 et 1:50,
- pour la substance active du groupe (44), entre 10:1 et 1:10,
- pour la substance active du groupe (45), entre 10:1 et 1:10,
- pour la substance active du groupe (46), entre 10:1 et 1:50,
- pour la substance active du groupe (47), entre 10:1 et 1:10,
- pour la substance active du groupe (48), entre 5:1 et 1:20,
- pour la substance active du groupe (49), entre 5:1 et 1:20,
- pour la substance active du groupe (50), entre 10:1 et 1:10,
- pour la substance active du groupe (51), entre 10:1 et 1:10,
- pour la substance active du groupe (52), entre 10:1 et 1:10,
- pour la substance active du groupe (53), entre 10:1 et 1:10,
- pour la substance active du groupe (54), entre 5:1 et 1:50,
- pour la substance active du groupe (55), entre 5:1 et 1:50,
- pour la substance active du groupe (56), entre 10:1 et 1:10,
- pour la substance active du groupe (57), entre 20:1 et 1:20,
- pour la substance active du groupe (58), entre 20:1 et 1:20,
- pour la substance active du groupe (59), entre 20:1 et 1:20,
- pour la substance active du groupe (60), entre 20:1 et 1:20,
- pour la substance active du groupe (61), entre 10:1 et 1:10,
- pour la substance active du groupe (62), entre 20:1 et 1:20,
- pour la substance active du groupe (63), entre 20:1 et 1:20,
- pour la substance active du groupe (64), entre 10:1 et 1:10,
- pour la substance active du groupe (65), entre 10:1 et 1:10,
- pour la substance active du groupe (66), entre 10:1 et 1:10,
- pour la substance active du groupe (67), entre 10:1 et 1:10,
- pour la substance active du groupe (68), entre 10:1 et 1:10,
- pour la substance active du groupe (69), entre 20:1 et 1:5,
- pour la substance active du groupe (70), entre 50:1 et 1:10,
- pour la substance active du groupe (71), entre 10:1 et 1:10,
- pour la substance active du groupe (72), entre 50:1 et 1:10,
- pour la substance active du groupe (73), entre 20:1 et 1:5,
- pour la substance active du groupe (74), entre 20:1 et 1:10,
- pour la substance active du groupe (75), entre 10:1 et 1:10,
- pour la substance active du groupe (76), entre 10:1 et 1:10,
- pour la substance active du groupe (77), entre 10:1 et 1:10,
- pour la substance active du groupe (78), entre 10:1 et 1:10,
- pour la substance active du groupe (79), entre 10:1 et 1:10,
- pour la substance active du groupe (80), entre 10:1 et 1:10,
- pour la substance active du groupe (81), entre 10:1 et 1:10,
- pour la substance active du groupe (82), entre 10:1 et 1:10,

**4.** Procédé de lutte contre des champignons phytopathogènes, **caractérisé en ce qu'**on fait agir des combinaisons de substances actives suivant l'une des revendications 1 à 3 sur des champignons et/ou sur leur milieu.

**5.** Utilisation de combinaisons de substances actives suivant au moins l'une des revendications 1 à 3 pour combattre des champignons phytopathogènes.

**6.** Procédé de préparation de compositions fongicides, **caractérisé en ce qu'**on mélange des combinaisons de substances actives suivant au moins l'une des revendications 1 à 3 avec des diluants et/ou des agents tensioactifs.